# EUROPEAN PATENT SPECIFICATION

(11) **EP 2 579 680 B1**
(45) Date of publication and mention of the grant of the patent: **23.05.2018**
(21) Application number: 11786272.2
(22) Date of filing: 25.04.2011
(51) Int. Cl.: H05B 6/12, H05B 6/06

(54) **INDUCTION HEATING COOKER**
INDUKTIONSHERD
RÉCHAUD À CHAUFFAGE PAR INDUCTION

(30) Priority: 28.05.2010 JP 2010122206
(43) Date of publication of application: 10.04.2013
(73) Proprietor: Mitsubishi Electric Corporation, Tokyo 100-8310 (JP); Mitsubishi Electric Home Appliance Co., Ltd., Fukaya-shi, Saitama 369-1295 (JP)
(72) Inventor: GOTO, Haruyo, Fukaya-shi Saitama 369-1295 (JP); BUNYA, Jun, Fukaya-shi Saitama 369-1295 (JP); SATO, Suguru, Fukaya-shi Saitama 369-1295 (JP); KINOSHITA, Hirokazu, Fukaya-shi Saitama 369-1295 (JP); KAWADA, Yukio, Fukaya-shi Saitama 369-1295 (JP)
(74) Representative: Pfenning, Meinig & Partner mbB
(86) International application number: PCT/JP2011/002426
(87) International publication number: WO 2011/148568

(56) References cited:
- EP-A2- 0 861 015
- EP-A2- 2 112 864
- WO-A1-2007/048700
- WO-A1-2008/013220
- WO-A1-2009/049989
- WO-A1-2009/053279
- JP-A- 2007 134 155
- JP-A- 2009 218 041
- JP-A- 2009 218 042
- JP-A- 2009 259 619
- JP-A- 2010 073 384
- JP-A- 2010 108 609
- US-B1- 6 498 325

## Description

### Technical Field

The present invention relates to an induction cooking system that displays a position to place a heated object on a top plate.

### Background Art

Cooking systems that perform induction heating of a heated object, such as a metal pan, with a heating coil has been recognized by consumers for their safety, cleanliness, and high efficiency and has gradually become popular in recent years.

Such induction cooking systems are broadly categorized, by their installation form, into a table-top type that is used by placing the system on a top side of a sink cabinet or the like and into a built-in (embedded) type that is set in an installation space of a piece of kitchen furniture such as a sink cabinet. In either type, widely known induction cooking systems are ones with a top side covered with a top plate (also referred to as "top") formed by a heat-resisting glass plate or the like on substantially all of the top side and provided with, below the top plate, a linear illuminant having a light source and a light guide that guides light of the light source. As such, since a vivid circular graphic can be displayed on the top plate, it will be possible to clearly display the position (heating portion) to place the heated object and to display whether heating is performed or not (see Patent Literature 1, for example).

Further, as another induction cooking system, one that can heat an elliptical pan having a large bottom diameter, for example, by placing the pan on two neighboring heating coils has been proposed. Such a cooking system includes a first heating coil that heats a heated object, a second heating coil that similarly heats a heated object, light emitting units that indicate placement positions of the first heating coil and the second heating coil, a light emission control unit that controls emission and lighting, and a placement-of-heated-object determination unit that determines whether the same single heated object is placed above the first heating coil and the second heating coil, in which the cooking system is configured such that when the placement-of-heated-object determination unit determines that the same single heated object is placed above the first heating coil and the second heating coil, the heating controller causes the first heating coil and the second heating coil to operate in association with each other, and the light emission control unit causes the light emitting units corresponding to each of the placement position of the first heating coil and the placement position of the second heating coil to be collectively (simultaneously) emitted or lighted, so that a user can recognize the operation (see Patent Literature 2, for example).

Further, in order to provide an induction cooking system that is capable of heating a large pan, which has a bottom size that is larger than the outer diameter of a single heating coil, without any unevenness in the heating distribution and without degrading the cooking performance, an induction cooking system has been proposed that includes a first heating coil; a group of plurality of heating coils that is disposed in the vicinity of the first heating coil each having a different center of circle with that of the first coil, the minimum outer diameter of each of the group of heating coils being smaller than the minimum outer diameter of the first heating coil; and a controller that controls the output of a first inverter that drives the first heating coil and the outputs of the second inverter that drives the group of heating coils (see Patent Literature 3, for example)

### Citation List

### Patent Literature

Patent Literature 1: Japanese Patent No. 3941812 (page 1, page 2, page 9, Fig. 14)
Patent Literature 2: Japanese Unexamined Patent Application Publication No. 2009-218041 (page 1, page 2, page 7, Fig. 1, Fig. 4, Fig. 5)
Patent Literature 3: Japanese Unexamined Patent Application Publication No. 2010-73384 (page 2, page 7, Fig. 3) Document EP2112864 A2 and WO 2009/049989 disclose induction cooking systems according to the prior art.

### Summary of Invention

### Technical Problem

However, hitherto, an appropriate display method of the placing position of the heated object has not been proposed for a case in which, centering around a single heating coil (hereinafter, referred to as "main heating coil"), a different auxiliary heating coil (although also called an auxiliary heating coil; however, hereinafter, will be uniformly referred to as "sub heating coil") on both sides or around the vicinity of the main heating coil is provided to heat-cook the same single heated object such as a pan or the like by driving the main heating coil and the sub heating coil at the same time. In particular, when plural sub heating coils are arranged around the main heating coil, there are cases in which the user will be confused, at first, on where to place the pan. Naturally, annular marks that each correspond to the corresponding heating areas of the main heating coil and the sub heating coils may be printed; however, the operating sub heating coil is switched during cooking and a mere graphic display will not be capable of display corresponding to the switching of the sub heating coil in real time. Disadvantageously, information such as the preferable placing position of the pan and, even, which sub heating coil is used at the moment cannot be conveyed to the user. Although heating power is an important control target that has a large influence on the cooking result, safety, and the like, it has been a challenge to understand how to distribute and display the heating power in accordance with the switching of the sub heating coils when the operating sub heating coils are switched during cooking.

The invention has been made in view of the above problems and an object thereof is to obtain an induction cooking system that is capable of allowing the user to place a heated object that has a larger bottom area than conventional heating coils to its predetermined position with ease; when heat cooking, upon setting of a certain heating power suitable for the heated object, displaying on the displaying means that, on the basis of the set heating power information, the main heating coil and at least one sub heating coil around the main heating coil are performing a heating operation in cooperation; and, further, automatically determining the heating power distribution of the main heating coil and the sub heating coil so that the heating power set by the user is maintained.

Accordingly, the user can continue cooking feeling at ease.

Note that the placing position of the heated article in the invention is an approximate position where the pan and the like is heated by the heating coil. In other words, it is not a strict position where even a subtle deviation of the placing position of the pan will totally hinder the induction heating action. This is because, strictly speaking, the optimum placing position of the pan will slightly vary depending on the external shape of the pan and the material property of the bottom of the pan.

### Solution to Problem

An induction cooking system according to the invention includes: a top plate in which light penetrates therethrough; a main heating coil induction heating from under the top plate a heated object placed on the top plate; at least one sub heating coil being disposed on a peripheral side of the main heating coil; a main inverter circuit supplying a high-frequency current to the main heating coil; a sub inverter circuit supplying the high-frequency current to the at least one sub heating coil; an energization control circuit controlling energization of the main inverter circuit and the sub inverter circuit; an input unit inputting an energizing condition to the energization control circuit during induction heating; a display means displaying at least heating power information among an input result of the input unit; and a placement-of-heated-object determination unit determining whether a same single heated object is placed above the main heating coil and the at least one sub heating coil, in which when the placement-of-heated-object determination unit determines that the same single heated object is placed above the main heating coil and the at least one sub heating coil, the energization control circuit makes a cooperative heating operation with the main heating coil and the at least one sub heating coil be performed with a driving current from the main inverter circuit and sub inverter circuit related to the at least one sub heating coil and makes the display means display information indicating that the cooperative heating operation is being performed.

Further, the induction cooking system according to the invention includes: a main heating coil heating a heated object placed on a top plate; a group of sub heating coils including a plurality of sub heating coils each disposed adjacent to an outside of the main heating coil; a main inverter circuit supplying a high-frequency current to the main heating coil; a group of sub inverter circuits independently supplying the high-frequency current to each of the plurality of sub heating coils of the group of sub heating coils; a placement-of-heated-object determination unit determining whether a same heated object is placed above the main heating coil and at least one of the plurality of sub heating coils; input units operated by a user setting a heating power during induction heating; display means in which the setting information of the input unit is displayed; an energization control circuit controlling, on the basis of the setting information of the input unit, output of each of the main inverter circuit and the group of sub inverter circuits and controlling the display means; and a placement-of-heated-object determination unit determining whether a same single heated object is placed above the main heating coil and the sub heating coil, in which when a predetermined heating power is set by the user from the input unit, on the basis of information from the placement-of-heated-object determination unit and when it is determined that the same heating object is placed on the main heating coil and at least one of the sub heating coils, the energization control circuit controls the output of the main inverter circuit and the output of the group of sub inverter circuits to become a predetermined distribution such that a cooperative heating operation with a heating power value set by a user is obtained, when in a state in which one or some of the sub heating coils that is performing the cooperative heating operation is increased or reduced in number, or is switched to a different one of the sub heating coils, the energization control circuit maintains the distribution of the output before the change and makes the display means display the predetermined heating information regardless of the increase or reduction in the number of sub heating coils that is performing the cooperative heating operation or the switching to the different sub heating coil.

### Advantageous Effects of Invention

According to the invention, since the main heating coil and at least one of the sub heating coils that are provided on the peripheral side of the main heating coil performs heating in cooperation, it is advantageous that induction heating can be performed in a wider area compared to heating with the main heating coil alone, as well as being able to confirm that the cooperative heating operation is being performed with display means that displays heating power information, which is an important element in performing cooking; hence, it is advantageous in that the mental load of the user is reduced.

Further, according to the invention, as well being able to cook with a normal circular pan, induction heating of a non-circular pan such as a large-sized elliptical pan that exceeds the diameter of the main heating coil in size can be performed within the range of the heating area allowing cooperative heating with the main heating coil and the sub heating coils. Further, even if this kind of non-circular pan is laterally shifted and the heating sub heating coil is changed, output of each of the main inverter circuit and the group of sub inverter circuits are distributed within a predetermined range, and the display of the heating power based on the output distribution is performed in the display means in both operation states, that is, heating with the main heating coil alone or cooperative heating. Accordingly, in addition to the advantage of being able to perform induction heating in a wide heating area that centers around the main heating coil and that includes the sub heating coil, mental load of the user can be reduced since the heating power of the heat cooking can be confirmed.

As such, it will be possible to visually confirm the newest heating power, let alone during heating with the main heating coil alone but also during cooperative heating with the main heating coil and the sub heating coil, and thus, it will be possible to provide an induction cooking system with high usability.

### Brief Description of Drawings

[Fig. 1] Fig. 1 is a perspective view illustrating an entirety of a built-in induction cooking system according to Embodiment 1 of the invention with a partially exploded portion.
[Fig. 2] Fig. 2 is a perspective view illustrating an entirety of a main body of the built-in induction cooking system according to Embodiment 1 of the invention in a state in which a top plate has been removed.
[Fig. 3] Fig. 3 is a plan view illustrating an entirety of the main body of the built-in induction cooking system according to Embodiment 1 of the invention.
[Fig. 4] Fig. 4 is a perspective view illustrating a state in which main components such as vertical partition plates of the built-in induction cooking system according to Embodiment 1 of the invention have been removed.
[Fig. 5] Fig. 5 is a longitudinal sectional view taken along the line V-V of Fig. 1.
[Fig. 6] Fig. 6 is a longitudinal sectional view taken along the line VI-VI of Fig. 1.
[Fig. 7] Fig. 7 is a perspective view of the main sections illustrating a partially cut away component case and cooking duct of a built-in induction cooking system according to Embodiment 1 of the invention.
[Fig. 8] Fig. 8 is a plan view illustrating an overall arrangement of heating coils of the built-in induction cooking system according to Embodiment 1 of the invention.
[Fig. 9] Fig. 9 is a plan view illustrating an induction heating source on the left side of the built-in induction cooking system according to Embodiment 1 of the invention.
[Fig. 10] Fig. 10 is a wiring description of a main heating coil of the induction heating source on the left side of the built-in induction cooking system according to Embodiment 1 of the invention.
[Fig. 11] Fig. 11 is an enlarged plan view of the main heating coil of the induction heating source on the left side and its peripheral area of the built-in induction cooking system according to Embodiment 1 of the invention.
[Fig. 12] Fig. 12 is a plan view of a coil support of the main heating coil of the induction heating source on the left side of the built-in induction cooking system according to Embodiment 1 of the invention.
[Fig. 13] Fig. 13 is a general drawing of a control circuit of the built-in induction cooking system according to Embodiment 1 of the invention.
[Fig. 14] Fig. 14 is a block diagram illustrating a case in which a heating operation is performed with a pan placed above the induction heating source on the left side of the built-in induction cooking system according to Embodiment 1 of the invention.
[Fig. 15] Fig. 15 is a longitudinal sectional view illustrating a case in which a heating operation is performed with a pan placed above the induction heating source on the left side of the built-in induction cooking system according to Embodiment 1 of the invention.
[Fig. 16] Fig. 16 is a plan view illustrating a center front portion of a main body of the built-in induction cooking system according to Embodiment 1 of the invention.
[Fig. 17] Fig. 17 is a plan view illustrating integral display means of the built-in induction cooking system according to Embodiment 1 of the invention.
[Fig. 18] Fig. 18 is a plan view illustrating an exemplary display screen of the integral display means of the built-in induction cooking system according to Embodiment 1 of the invention when the left IH heat source alone is used.
[Fig. 19] Fig. 19 is a flowchart 1 of the control operation of the built-in induction cooking system according to Embodiment 1 of the invention.
[Fig. 20] Fig. 20 is a flowchart 2 of the control operation of the built-in induction cooking system according to Embodiment 2 of the invention.
[Fig. 21] Fig. 21 is a flowchart 3 illustrating a control operation of the built-in induction cooking system according to Embodiment 1 of the invention when the heating power is changed.
[Fig. 22] Fig. 22 is an enlarged, longitudinal sectional view of the main heating coil of the induction heating source on the left side and its peripheral area of the built-in induction cooking system according to Embodiment 2 of the invention.
[Fig. 23] Fig. 23 is a plan view illustrating integral display means of the built-in induction cooking system according to Embodiment 2 of the invention.
[Fig. 24] Fig. 24 is a plan view illustrating an induction heating source on the left side of an induction cooking system according to Embodiment 3 of the invention.
[Fig. 25] Fig. 25 is a plan view illustrating a heating power display portion of the heat source on the left side of the induction cooking system according to Embodiment 3 of the invention.
[Fig. 26] Fig. 26 is a plan view illustrating an induction heating source on the left side of an induction cooking system according to Embodiment 4 of the invention.
[Fig. 27] Fig. 27 is a plan view illustrating a heating power display portion of the heat source on the left side of the induction cooking system according to Embodiment 4 of the invention.
[Fig. 28] Fig. 28 is a plan view illustrating an entirety of the main body of an induction cooking system according to Embodiment 5 of the invention.
[Fig. 29] Fig. 29 is an enlarged longitudinal sectional view of a main heating coil of an induction heating source on the left side and its peripheral area of an induction cooking system according to Embodiment 5 of the invention.
[Fig. 30] Fig. 30 is a plan view illustrating the main portions of the top plate, from the center to the left side, of the induction cooking system according to Embodiment 5 of the invention.
[Fig. 31] Fig. 31 is a plan view illustrating the main portions of the top plate, on the left side, of the induction cooking system according to Embodiment 5 of the invention.

### Description of Embodiments

### Embodiment 1

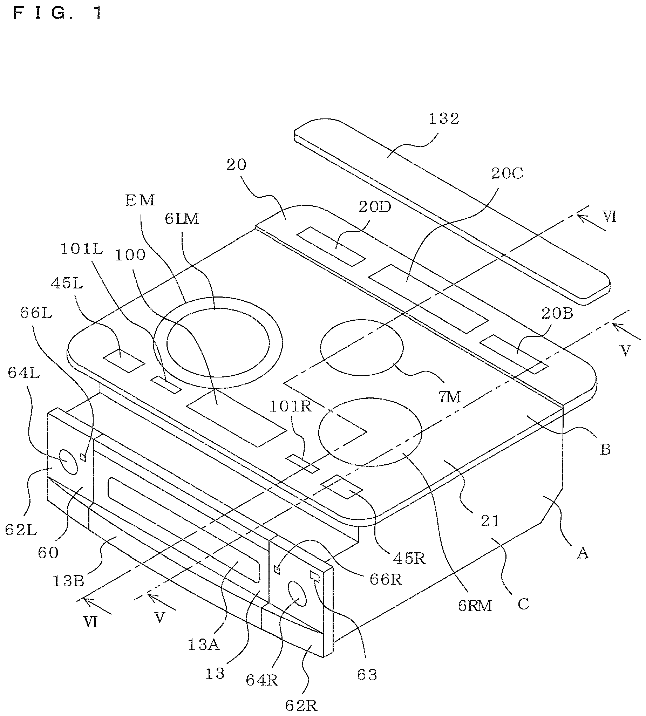

Figs. 1 to 21 illustrate an exemplary built-in (embedded) induction cooking system that is an induction cooking system according to Embodiment 1 of the invention.

Fig. 1 is a perspective view illustrating an entirety of a built-in induction cooking system with a partially exploded portion.

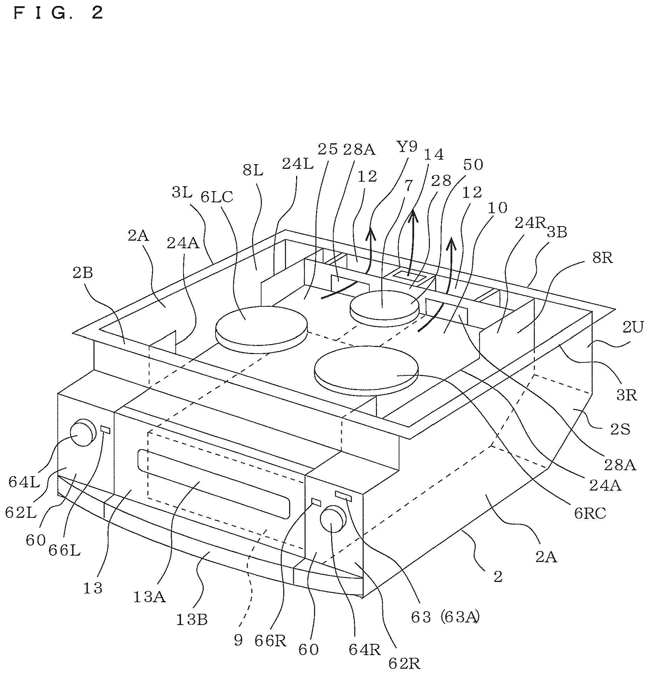

Fig. 2 is a perspective view illustrating an entirety of a main body of the induction cooking system in a state in which a top plate has been removed.

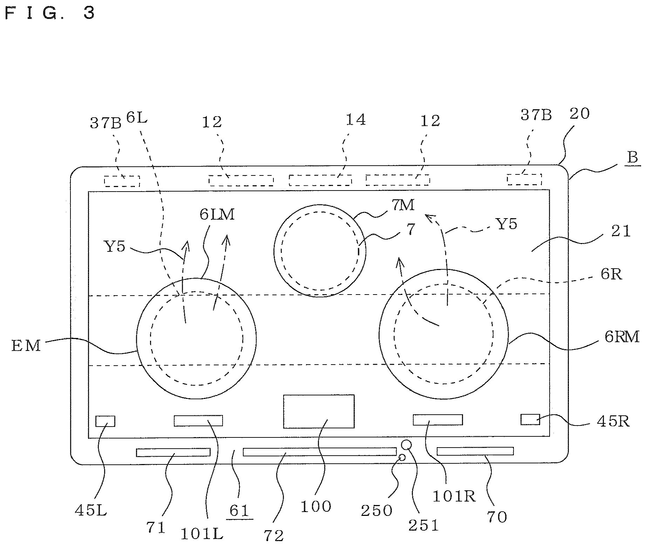

Fig. 3 is a plan view illustrating an entirety of the main body.

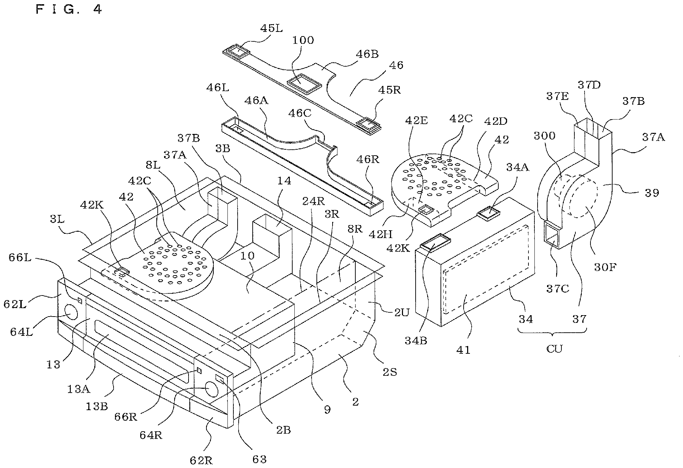

Fig. 4 is a perspective view illustrating a state in which main components such as vertical partition plates have been removed.

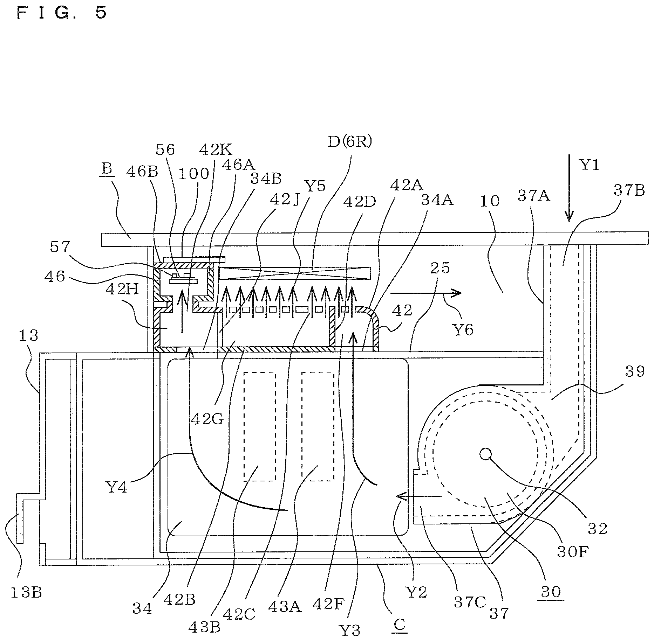

Fig. 5 is a longitudinal sectional view taken along the line V-V of Fig. 1.

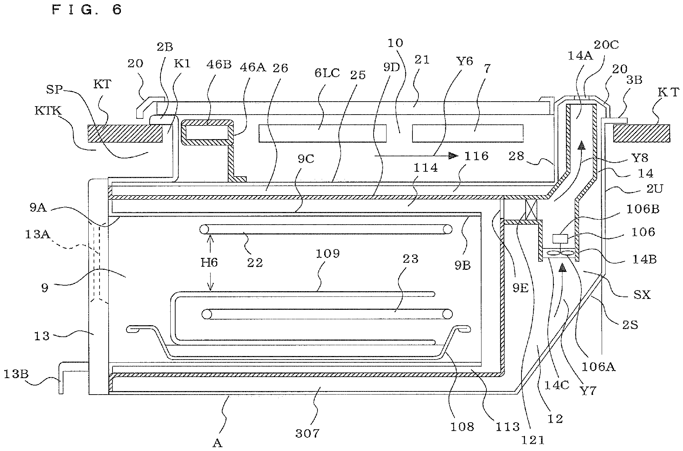

Fig. 6 is a longitudinal sectional view taken along the line VI-VI of Fig. 1.

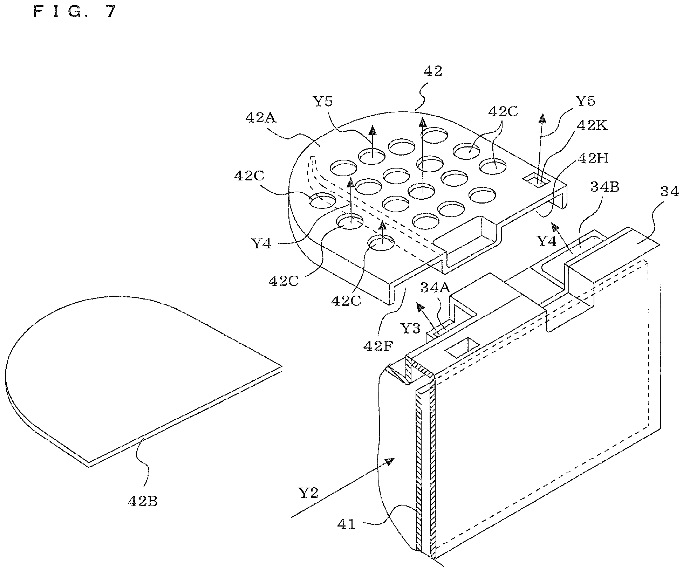

Fig. 7 is a perspective view of the main sections illustrating a partially cut away component case and cooling duct.

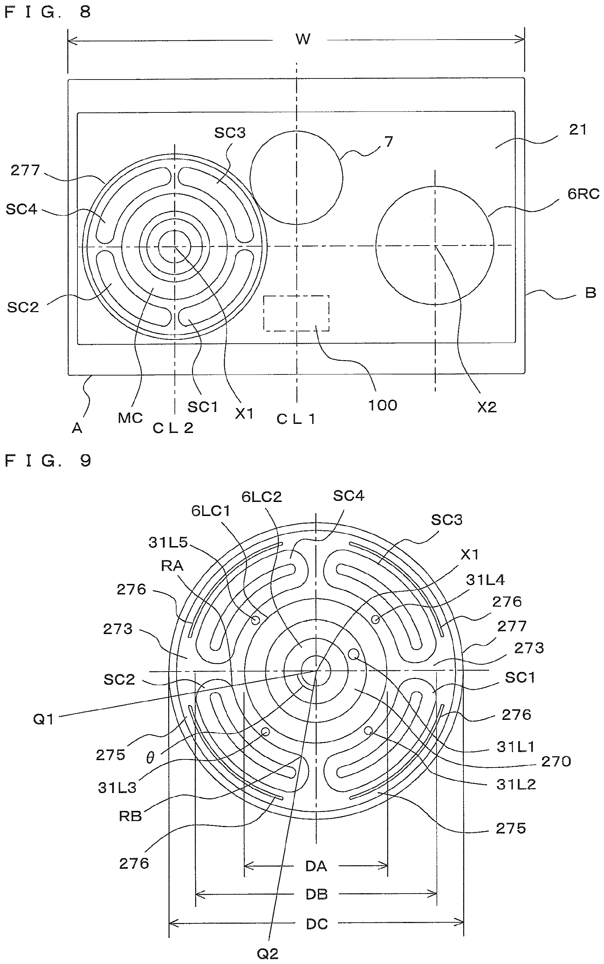

Fig. 8 is a plan view illustrating an overall arrangement of heating coils.

Fig. 9 is a plan view illustrating an induction heating source on the left side.

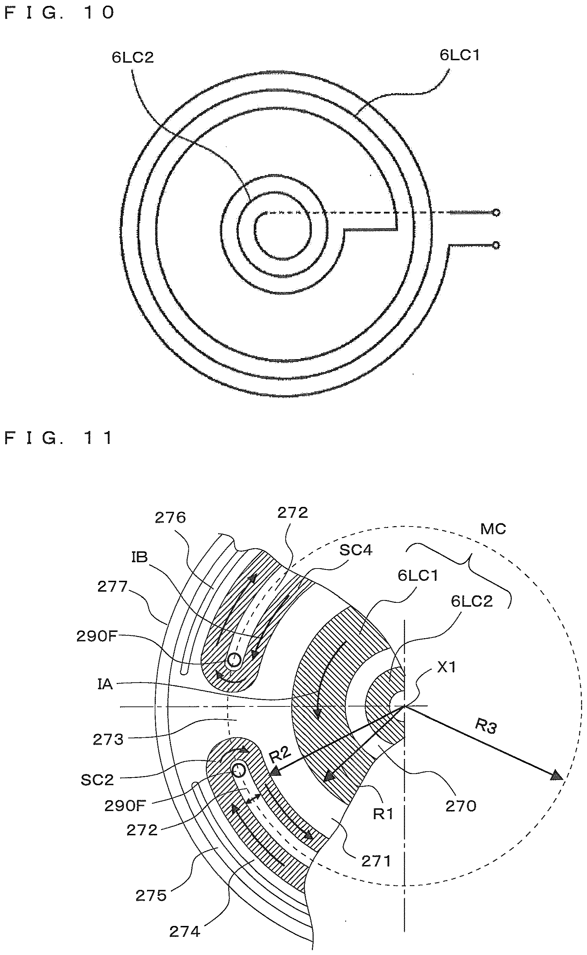

Fig. 10 is a wiring description of a main heating coil of the induction heating source on the left side.

Fig. 11 is an enlarged plan view of the main heating coil of the induction heating source on the left side and its peripheral area.

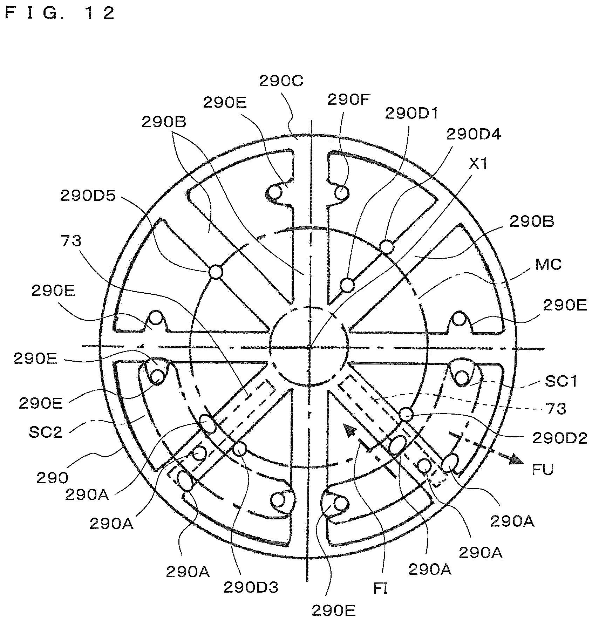

Fig. 12 is a plan view of a coil support of the main heating coil of the induction heating source on the left side.

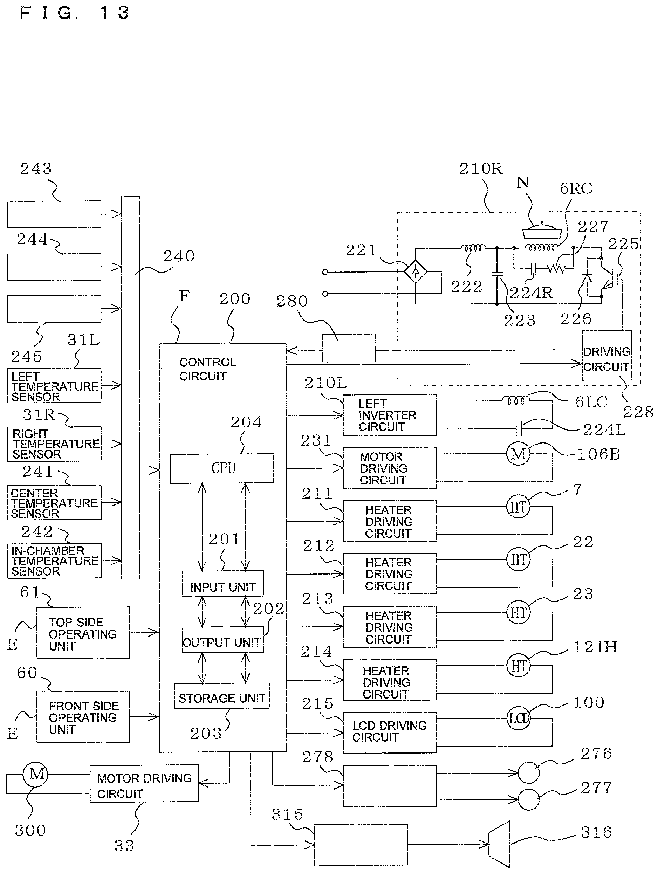

Fig. 13 is a general drawing of a control circuit.

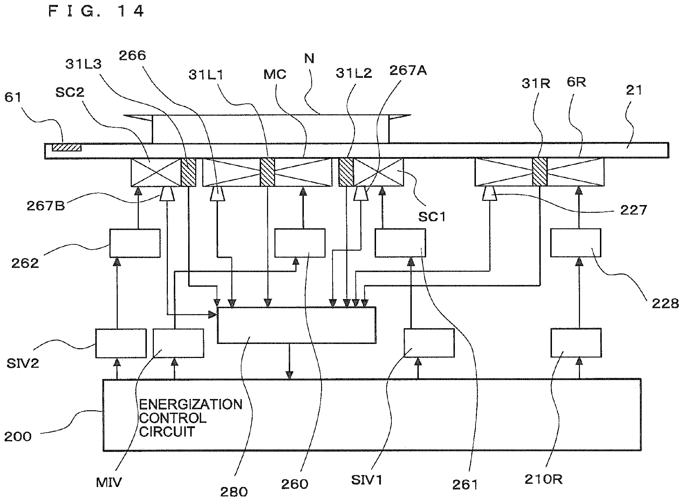

Fig. 14 is a block diagram illustrating a case in which a heating operation is performed with a pan placed above the induction heating source on the left side.

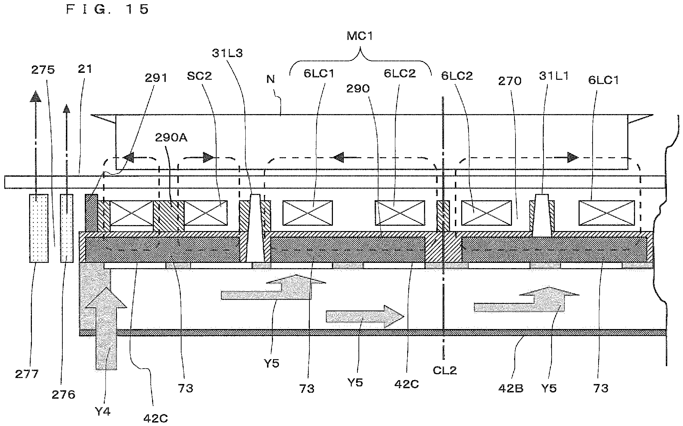

Fig. 15 is a longitudinal sectional view illustrating a case in which a heating operation is performed with a pan placed above the induction heating source on the left side.

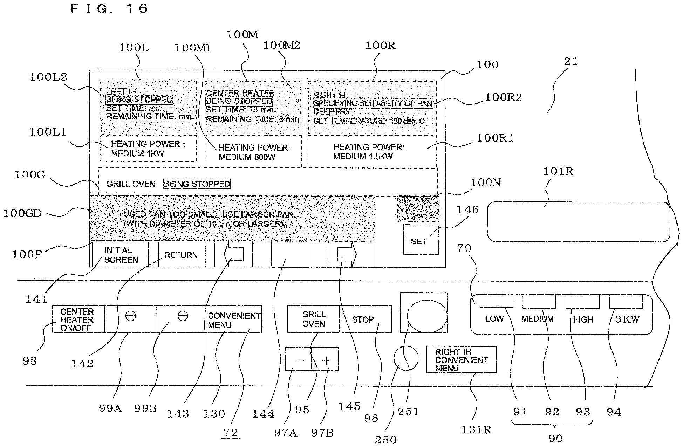

Fig. 16 is a plan view illustrating a center front portion of a main body.

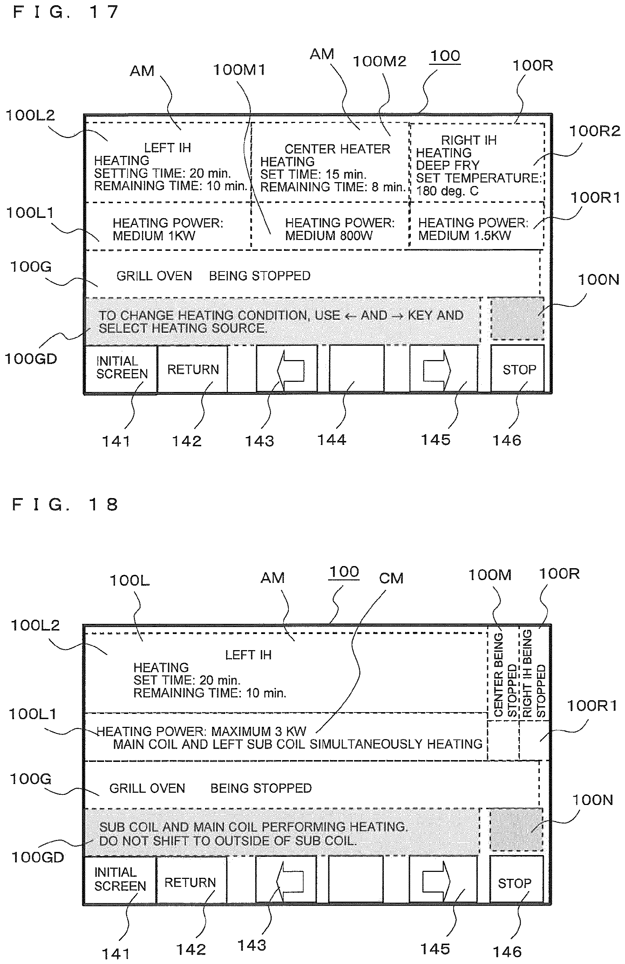

Fig. 17 is a plan view illustrating integral display means.

Fig. 18 is a plan view illustrating an exemplary display screen of the integral display means when the left IH heat source alone is used.

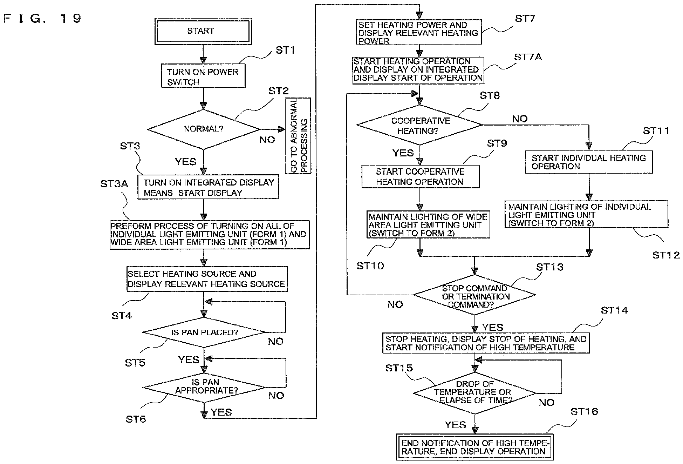

Fig. 19 is a flowchart 1 of the control operation.

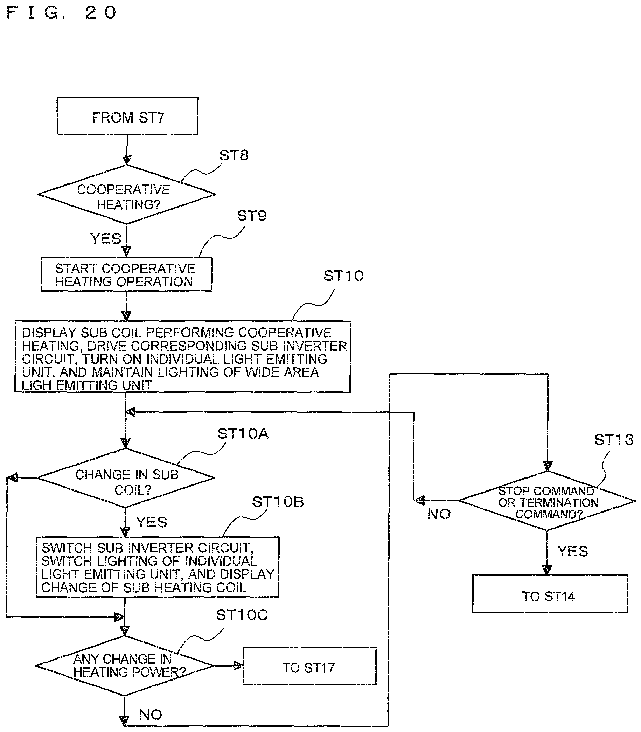

Fig. 20 is a flowchart 2 of the control operation.

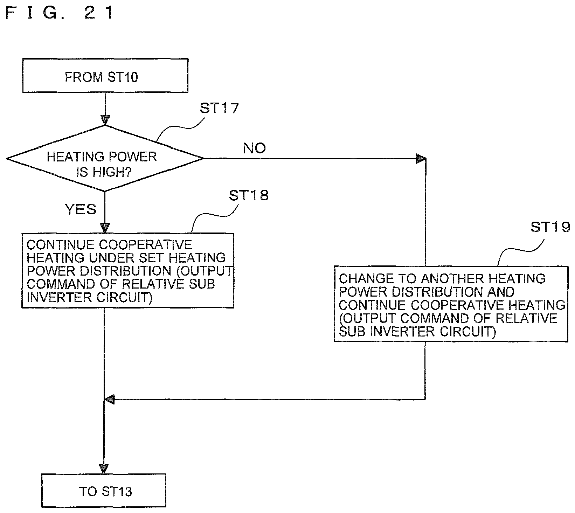

Fig. 21 is a flowchart 3 illustrating a control operation when the heating power is changed.

Note that in each figure, like parts or equivalent parts are designated with like reference numerals.

### (Main Body of Cooking System)

The cooking system of the invention includes a single rectangular main body A. This main body A generally includes a top plate B that constitutes a top side of the main body A, a housing C constituting a periphery (outer wall) of the main body A other than the top side, heating means D that heats a pan, foodstuff, and the like with electric energy and the like, operation means E that is operated by a user, control means F that controls the heating means by the signal from the operation means, and display means G that displays the operating condition of the heating means. Further, there are cooking systems that includes, as a part of the heating means D, electric heating means referred to as a grill chamber (grill heating chamber) or a roaster, as described in subsequent Embodiments.

Next, terms that will be used in Embodiments of the invention will be each defined.

The "operating condition of the heating means D" is an electric and physical condition for heating and is a collective term for energization time, energization amount (heating power), heating temperature, energization pattern (continuous energization or intermittent energization), and the like. That is, it is an energization condition of the heating means D.

"Displaying" is an operation that visually informs a user of the operating condition and related information that serves as a reference while cooking (including information with the aim to alarm abnormal use and occurrence of an abnormal operating state, hereinafter, merely referred to as "cooking related information") by means of characters and symbols, by illustration, by whether there is color or emittance of light, or by change such as luminance of emitted light. Note that when "displaying" by emitting or lighting a "wide area light emitting unit" or an "individual light emitting unit" described later, and when "display" is used such as in "first display" or "second display", the emitting or lighting is mere illumination of light of a predetermined color. When the state of lighting and visual effect, such as color of light, brightness, and continuous lighting or blinking, are changed, it may be described as "changing" or "switching" the display. Further, while "emitting" and "lighting" have the same meaning, in many cases, emitting is used when a light-emitting element such as a light emitting diode itself emits light and lighting is used when a lamp emits light. In the following description, both may be written side by side. Note that even if the emitting unit is emitted or lighted electrically and physically, there are cases in which a weak light not enough to be visually recognized by the user may reach the user. Unless explicitly stated, such cases does not correspond to the terms "emitting" and "lighting" since the user cannot recognize the outcome of the "emitting" or "lighting". For example, the top plate described later is typically not colorless or transparent but has a light color in the material itself before it is coated on the surface. As such, since the transmittance rate of the visible light is not 100%, there are cases in which the light cannot be visually recognized from above the top plate when the light of the light emitting diode is weak, for example.

If not specified in particular, the "display means" includes a liquid crystal display (LCD), various light-emitting elements (a semiconductor light-emitting element has, for example, two types, that is, light emitting diode (LED) and laser diode (LD)), organic electro luminescence (Electro Luminescence: EL) element, or the like. Accordingly, the display means includes a liquid crystal screen, an EL screen, or the like. However, the display means such as the "wide area light emitting unit" and the "individual light emitting unit" described below may be mere light emitting means such as a lamp or an LED. Also, "IH", such as in a right IH heating unit, stands for induction heating.

"Notifying" is an operation notifying the user with the object to make the user recognize the operating condition of the control means and the cooking related information by display or electrical speech (phonetic sound electrically created or synthesized).

If not specified in particular, "notifying means" includes notifying means with audible sound such as a buzzer, a speaker, and the like and notifying means using characters and symbols, illustration, or visible light.

"Cooperative heating" is an operation that heats the same single heated object by induction by supplying electric power to each of the two or more induction heating sources. In the invention, cooperative heating is carried out by a main heating coil and a single or a plurality of sub heating coils, which will be described later. Note that when a plurality of heating coils are arranged close to each other, it is preferable to apply current in the same direction so that alternating-current magnetic fields formed by each of the heating coils do not interfere with each other. However, the present invention is not limited thereto.

### (Main body A)

As shown in Fig. 1, a main body A is a portion in which the top side is entirely covered with a top plate B that will be described later. The external shape of this main body A is formed with a size that will cover the installation opening K1 formed in the kitchen furniture KT (see Fig. 6) such as a sink cabinet and with a predetermined size that matches the space, and is formed into an approximate square or a rectangle.

A main body case 2 shown in Fig. 2 forms the outer walls of the housing C and includes a body 2A that is formed by folding a sheet of flat-shaped metal sheet a plurality of times with a press machine and a front flange plate 2B made of a metal sheet that is connected to the edge portion of this body by welding or by fixing means such as a rivet, screw or the like. In a state in which the front flange plate 2B is connected to the body 2A by the fixing means, the main-body case 2 is boxed shaped with an opened top side. The bottom portion on the rear side of this boxed shaped body 2A is an inclined portion 2S and above this is a vertical rear side wall 2U.

Three portions, that is, a rear edge, a right edge, and a left edge of the top side opening of the main body case 2 shown in Fig. 2 are each integrally bent outwards into an L-shape so as to form a flange. A flange 3B at the rear edge, a flange 3L on the left side, a flange 3R on the right side, and a front flange plate 2B are placed on the top side of the installation portion of the kitchen furniture KT (see Fig. 6) and support the load of the cooking system.

Further, as shown in Fig. 6, when the cooking system is in a state completely housed in the installation opening K1 of the kitchen furniture KT, the front side of the cooking system is exposed from the opening KTK that is formed in the front of the kitchen furniture KT, enabling the front side (left and right) operation units 60 (see Fig. 2) of the cooking system to be operable from the front side of the kitchen furniture.

An inclined portion 2S connects the rear side and the bottom side of the body 2A (see Fig. 6), and is cut so that it will not clash into and interfere with the rear edge portion of the installation opening K1 of the kitchen furniture KT when the cooking system is fitted and installed into the kitchen furniture KT. That is, when fitting and installing this type of cooking system into the kitchen furniture KT, the front side of the main body A of the cooking system is inclined downwards and, in this state, the front side is first lowered into the installation opening K1 of the kitchen furniture KT. Then, afterwards, the rear side is lowered into the installation opening K1 in an arc (such an installation method is disclosed in detail in Japanese Unexamined Patent Application Publication No. 11-121155, for example). Due to such an installation method, the front flange plate 2B is sized so that a sufficient space SP is secured between an installation-opening front edge (see Fig. 6) of the installation opening K1 of the kitchen furniture KT when the cooking system is installed in the kitchen furniture KT.

The main body case 2 includes therein heat sources 6L and 6R for induction heating an heated object N such as a pan (hereinafter may be referred to as merely a "pan") that is made of metal, for example, that has a magnetic property, in which the pan is placed on a top plate 21 described later; a central electric radiant heat source 7, such as one referred to as a radiant heater, which is an electric heater heating with radiant heat; the control means F described later that controls a cooking condition of the heating means; the operation means E described later that inputs the cooking condition to the control means; and the display means G that displays the operation condition of the heating means that has been input by the operation means. Each will be described in detail below.

As shown in Fig. 2, the housing C is partitionally formed therein with, in a broadly divided manner, a right side cooling chamber 8R that longitudinally extends in the front-rear direction, a left side cooling chamber 8L that longitudinally extends in the front-rear direction in the same manner, a box-shaped grill (or a roaster) heating chamber 9, an upper portion component chamber 10, and a rear portion exhaust hood 12. Note that each chamber is not completely isolated from each other. For example, the right cooling chamber 8R and the left side cooling chamber 8L are each in communication with the rear exhaust hoods 12 through the upper portion component chamber 10.

The grill heating chamber 9 is a substantially independent enclosed space when its front opening 9A is closed with the door 13 described later. The grill heating chamber is in communication with the external space of the housing C, that is, indoor space such as a kitchen, through the exhaust duct 14 (see Fig. 6).

### (Top Plate B)

As described below, the top plate B includes two large parts, namely, an upper frame (also known as frame body) 20 and the top plate (also known as upper plate, top glass, top) 21. The entire upper frame 20 is formed into a picture frame shape with a metal sheet such as a nonmagnetic stainless steel sheet or aluminum plate and has a size that covers the top side opening of the main body case 2.

The top plate 21 has a breadth W (see Fig. 8) that completely covers a large opening provided in the center of the picture frame shaped upper frame 20 without any gap and is superimposed and installed above the main body case 2. This entire top plate 21 is formed of a transparent or a semitransparent material, such as a heat-resistant tempered glass, glass ceramics, and the like, in which visible ray of infrared light and LED penetrates therethrough and is formed in a rectangular or square shape so as to match the shape of the opening portion of the upper frame 20. Note that when transparent, the user can see all of the internal components from above the top plate 21 and this may degrade the look. Accordingly, there are cases in which paint for shielding is applied or printing of small dots or a grid that does not penetrate visible rays is performed on the surface or the back of the top plate 21.

Further, the front, rear, left, and right rims of the top plate 21 are fixed to the opening portion of the upper frame 20 in a water tight state with a rubber packing or a seal material (not shown) therebetween. Accordingly, water droplets penetrating from the top side of the top plate 21 through the gap formed between the facing upper frame 20 and top plate 21 into the interior of the main body A is prevented.

Referring to Fig. 1, a right vent hole 20B is formed by stamping, at the same time as the forming of the upper frame 20 with the press machine, and is an intake passage of a fan 30 described below. A center vent hole 20C is similarly formed by stamping when forming of the upper frame 20 is performed and a left vent hole 20D is similarly formed by stamping when forming of the upper frame 20 is performed. Note that in Fig. 1, although only the rear portion of the upper frame 20 is illustrated, as seen from above as in Fig. 3, the upper frame covers the entire top side of the main body case 2 in a picture frame manner.

During the actual cooking stage, there are cases in which the top plate 21 becomes 300 degrees C or higher by receiving heat from the heated object N such as a pan that has been heated to a high temperature by induction heating with the right side induction heating source (hereinafter, referred to as "right IH heat source") 6R and/or the left side induction heating source (hereinafter, referred to as "left IH heat source") which will be described in detail later. Further, if a central electric radiant heat source 7 that is a radiant type electric heater described later is provided on the rear side of the top plate 21, there are cases in which the top plate 21 is directly heated to a high temperature by the heat from the central electric radiant heat source 7 to a temperature of 350 degrees C or higher.

On the top side of the top plate 21, as shown in Figs. 1 and 3, circular guide marks 6RM, 6LM, and 7M each indicating rough positions of the corresponding later described right IH heat source 6R, left IH heat source 6L, and the central electric radiant heat source 7 are displayed by means of printing and the like.

### (Heating Means D)

The heating means D of Embodiment 1 of the invention includes the right IH heat source 6R that is arranged in the front portion on the right side position of the main body A; the left IH heat source 6L that is on the other side, that is, on the left side; the central electric radiant heat source 7 that is arranged on the rear portion side along a line that is a center of the left and right of the main body A; and a pair of upper and lower electric radiant heat sources 22 and 23 for the roster in the grill heating chamber 9. These heat sources are configured such that each energization is controlled independently by the control means F. Details will be described subsequently with reference to the drawings.

### (Right IH Heat Source)

The right IH heat source 6R is disposed in the upper portion component chamber 10 that is partitionally formed in the main body case 2. Additionally, a right IH heating coil 6RC is disposed on the bottom side of the top plate 21 on the right side. The top edge portion of this coil 6RC adjoins the bottom side of the top plate 21 with a minute gap therebetween, thus serving as an IH (induction) heat source. In Embodiment 1, one with a capacity in which the maximum electric power consumption (maximum heating power) is 3 kW is used, for example. The right IH heating coil 6RC is ultimately formed into a disc shape by bundling about 30 fine wires with a size of approximately 0.1 mm to 0.3 mm, twisting one or a plurality of this bundle (hereinafter, referred to as "assembled wire"), and spirally winding this so that a circular outer shape is formed with a center point X2, shown in Fig. 8, as its cardinal point. The diameter (the maximum outer diameter) of the right IH heating coil 6RC is approximately 180 mm.

The position of a guide mark 6RM that is a circle (a solid line in Fig. 1 and 3) displayed on the top plate 21 does not completely match the position of the outermost circumference of the right IH heating coil 6RC of the right IH heat source 6R. This guide mark 6RM merely indicates a proper induction heating region. The broken line on the right side in Fig. 3 shows an approximate position of the outermost circumference of the right IH heating coil 6RC.

### (Left IH Heat Source)

The left IH heat source 6L is disposed at a position that is line symmetric to the right IH heat source 6R (relative to a left-right center line CL1 (see Fig. 8)) of the main body A and has a similar configuration as that of the right IH heat source 6R. In Embodiment 1, one with a capacity in which the maximum electric power consumption (maximum heating power) is 3 kW is used, for example. Further, as shown in Fig. 11, the left IH heating coil 6LC has a circular outer shape, formed of two concentric portions, with a radius R1 with respect to a center point X1 as its cardinal point and its diameter (maximum outer diameter) is approximately 180 mm. However, this dimension is one that does not include sub heating coils SC described later and is a maximum outer diameter of an outer coil 6LC1 among the outer coil 6LC1 and inner 6LC2 described later that constitutes the left IH heating coil. This corresponds to DA in Fig. 9. In order to distinguish between the sub coils SC described later, the outer coil 6LC1 and the inner coil 6LC2 that constitute the left IH heating coil 6LC may both be referred to as "main heating coil MC" (see Fig. 11).

The position of the guide mark 6LM that is a circle (a solid line in Fig. 1 and 3) displayed on the top plate 21 does not completely match the position of the outermost circumference of the left IH heating coil 6LC. The guide mark indicates a proper induction heating region. The broken line on the left side in Fig. 3 shows an approximate position of the outermost circumference of the left IH heating coil 6LC.

A circular guide mark EM displayed on the top plate 21 indicates a large circular area (hereinafter, referred to as a "cooperative heating area mark") that covers the below-described main heating coil MC and all of the sub heating coils SC (four in total) arranged with substantially equal gaps in the front, rear, left, and right positions of the main heating coil MC. Further the position of this cooperative heating area mark EM almost conforms to the "wide area light emitting unit" described later that radiates light from below the top plate 21 to indicate the outer limit of the preferable placing position of the heated object when cooperatively heating with the main heating coil MC and the sub heating coils SC.

In a similar manner to the right IH heating coil 6RC, an infrared temperature detecting element (hereinafter, referred to as infrared sensor) 31L is disposed in a space in the left IH heating coil 6LC (see Figs. 14 and 15). Details will be described later.

The IH heating coil 6LC of the left IH heat source 6 includes two coils divided in the radius direction (hereinafter, the outside coil is referred to as "outer coil" 6LC1 and the inside coil as "inner coil" 6LC2). These two coils are, as shown in Fig. 10, a sequential unit connected in series. Note that the whole unit may be a single coil rather than two coils.

On the bottom sides (back side) of the left and right IH heating coils 6LC and 6RC, as shown in Fig. 12, bars are disposed having a rectangular cross section formed of a high magnetic induction material, such as ferrite, as a magnetic flux leakage prevention material 73 of each heating coil. For example, the left IH heating coil 6LC is radially disposed from the center point X1 with 4, 6, or 8 of the above materials (the number does not have to be an even number).

That is, the magnetic flux leakage prevention material 73 does not have to cover the entire bottom side of each of the left and right IH heating coils 6LC and 6RC. The magnetic flux leakage prevention materials 73 each formed in a rod shape having a square or a rectangular cross section may be disposed with a predetermined interval so as to cross the coil wire of the right IH heating coil 6RC. Accordingly, in Embodiment 1, the material is radially provided in plural numbers from the center portion X1 of the left IH heating coil. With the magnetic flux leakage prevention material 73 as above, it will be possible to concentrate the magnetic line of force generated from the IH heating coil to the heated object N on the top plate 21.

The right IH heating coil 6RC and the left IH heating coil 6LC may each be divided into multiple parts that can be separately energized. For example, an IH heating coil may be spirally wound in the inside and a separate IH heating coil that is concentric and flush with the coil and that is spirally wound having a large diameter may be disposed on the outside, and the heated object N may be heated by three energization patterns, that is, energizing the inside IH heating coil, energizing the outside IH heating coil, and energizing both the inside and outside IH heating coils.

As described above, the heated object N (pan) from small ones to large ones (large diameter) may be efficiently heated by using at least one of or a combination of the output level, duty ratio, and output interval of the high-frequency power that is made to flow to the two IH heating coils (as representative technical literature in which a plurality of heating coils are allowed to be energized separately, Japanese Patent No. 2978069 is known).

An infrared temperature detecting element 31R is an infrared temperature detecting element that is disposed in a space provided in the center portion of the right IH heating coil 6RC and has, on its top end portion, an infrared light receiving unit facing the bottom side of the top plate 5 (see Fig. 14).

In a similar manner, the left IH heating coil 6LC is disposed with an infrared temperature detecting element 31L in a space provided in its center portion (see Figs. 9 and 15). Details will be described later.

The infrared temperature detecting elements 31R and 31L (hereinafter, each referred to as "infrared sensor") each includes a photodiode or the like that can measure a temperature by detecting the dose of infrared radiation from the heated object such as a pan. Note that the temperature detecting element 31R (since the temperature detecting element 31L is the same, hereinafter, description will be representatively given with the temperature detecting element 31R only, when common to both element) may be a detector element of a heat transfer type such as a thermister temperature senor.

As above, prompt detection of infrared radiated in accordance with the temperature of the heated object by means of an infrared sensor from below the top plate 5 is known from Japanese Unexamined Patent Application Publication No. 2004-953144 (Japanese Patent No. 3975865), Japanese Unexamined Patent Application Publication No. 2006-310115, and Japanese Unexamined Patent Application Publication No. 2007-18787, for example.

When the temperature detecting element 31R is an infrared sensor, infrared radiated from the heated object N can be integrated and can be received at real time (with almost no time lag) allowing the temperature be detected from the dose of infrared. Accordingly, the infrared sensor is superior (more than the thermister type). Even when the temperature of the top plate 21, such as one made of a heat-resisting glass or ceramics, that is positioned in front of the heated object N is not the same as the temperature of the heated object N, and irrespective of the temperature of the top plate 21, this temperature sensor is capable of detecting the temperature of the heated object N. This is because the top plate 21 is devised so that infrared radiated from the heated object is not absorbed or blocked by the top plate.

For example, the top plate 21 has been selected with a material in which infrared in the wavelength region of 4.0 µm or under or of 2.5 µm or under penetrates therethrough. The temperature sensor 31R is selected from one that detects infrared in the wavelength region of 4.0 µm or under 9 or of 2.5 µm or under.

On the other hand, when the temperature detecting element 31R is a heat transfer type such as a thermister, compared to the above-described infrared temperature sensor, although it is inferior in detecting a sudden temperature change in real time, it can surely detect the temperature of the bottom portion of the heated object N or the temperature of the top plate 21 under the heated object N by receiving radiant heat from the top plate 21 or the heated object N. Further, even if there is no heated object, it can detect the temperature of the top plate 21.

Note that when the temperature detecting element is a heat transfer type such as a thermister, the temperature sensing unit may be in contact with the bottom side of the top plate 21 or may have a thermally conductive resin therebetween such that the temperature of the top plate 21 itself is accurately understood. This is because if there is space between the temperature sensing unit and the bottom side of the top plate 21, there will be a delay in temperature propagation.

In the subsequent description, there are cases in which the "left, right" in the names and the "L, R" in the reference signs are omitted in parts that are disposed commonly to the left and right and that share the same details.

### [Radiant Type Central Electric Heat Source]

A central electric radiant heat source 7 (see Figs. 2 and 3) is arranged in a position that is inside the main body A in Fig. 1, on the left-right center line CL1 of the top plate 21 (see Fig. 8), and on the rear portion side of the top plate 21. The central electric radiant heat source 7 employs an electric heater (for example, a nichrome wire heater, a halogen heater, or a radiant heater) that heats by radiation and heats the heated object N such as a pan through the top plate 21 from under. Further, one with a capacity in which the maximum electric power consumption (maximum heating power) is 1.2 kW is used, for example.

The central electric radiant heat source 7 has a round vessel shape with the entire top side opened and a vessel-shaped cover 50 made of a heat insulating material constituting the outermost circumference thereof that has a maximum outer diameter of approximately 180 mm and a height (thickness) of 15 mm.

The position of the guide mark 7M that is a circle (a solid line in Fig. 1 and 3) displayed on the top plate 21 does not completely match the position of the outermost circumference of the central electric radiant heat source 7. The guide mark 7M merely indicates a proper heating region. The broken line circle in Fig. 3 indicates an approximate outermost circumference of the vessel-shaped cover 50 of the central electric radiant heat source 7.

### [Radiant Type Electric Heat Source]

A vertical partition plate 24R on the right side is vertically disposed (see Figs. 2 and 4) and serves as a partition wall isolating the right side cooling chamber 8R and the grill heating chamber 9 that are in the housing C. A vertical partition plate 24L on the left side is, similarly, vertically disposed (see Fig. 2) and serves as a partition wall isolating the left side cooling chamber 8L and the grill heating chamber 9 that are in the housing C (see Figs. 2 and 4). Note that the vertical partition plates 24R and 24L are disposed such that spaces of a few millimeters are kept with the outside walls of the grill heating chamber 9.

A horizontal partition plate 25 (see Figs. 2 and 5) has a size that divides the whole space between the left and right vertical partition plates 24L and 24R into two spaces, namely, the upper and lower spaces. The upper portion of this horizontal partition plate 25 is the upper portion component chamber 10 (see Fig. 2). Further, this horizontal partition plate 25 is disposed with a preset space 116 (see Fig. 6) of a few millimeters to 10 millimeters with the ceiling wall of the grill heating chamber 9.

A notch 24A is formed in each of the left and right vertical partition plates 24L and 24R and is provided so that the vertical partition plates 24L and 24R do not clash into a cooling duct 42, described later, that is being horizontally installed.

The grill heating chamber 9, which is formed in a rectangular box shape, is formed with a metal sheet such as a stainless steel sheet or steel sheet on the left and right sides, the top and bottom sides, and the rear side and is disposed with radiant type electric heaters on the upper ceiling and the bottom, such as a sheath heater which is a set of upper and lower electric radiant heat sources 22 and 23 (see Fig. 6) that extend substantially horizontally. Here, "extended" refers to a state in which the sheath heater is bent midway plural times in a horizontal plane so as to planarly meander an area as wide as possible. A typical example is one with a planer and W-shape.

These two upper and lower electric radiant heat sources 22 and 23 are energized at the same time or individually so that roasting (roast fish, for example), grilling (pizza and gratin, for example), and oven cooking (cake and roasted vegetables, for example), in which cooking is performed by setting the ambient temperature in the grill heating chamber 9, can be performed. As the electric radiant heat source 22 that is disposed on the upper ceiling, one with a maximum electric power consumption (maximum heating power) of 1200 W is used and as the electric radiant heat source 23 that is disposed on the bottom, one with a maximum electric power consumption (maximum heating power) of 800 W is used.

Space 26 (see Fig. 6) is a gap formed between the horizontal partition plate 25 and the grill heating chamber 9 (same as the above-mentioned space 116) and is ultimately in communication with the rear exhaust hoods 12. Air in the space 26 is discharged by being induced outside the main body A through the rear exhaust hoods 12.

Referring to Fig. 2, a rear partition plate 28 partitions the upper portion component chamber 10 and the rear exhaust hoods 12 and has a height such that the lower end of the rear partition plate 28 reaches the horizontal partition plate 25 and the upper end thereof reaches the upper frame 20. An outlet 28A is formed at two places in the rear partition plate 28 and is for discharging the cooling air that has entered the upper portion component chamber 10 (see Fig. 2).

### (Cooling Fan)

The fan 30 in Embodiment 1 employs a multi-blade centrifugal fan (sirocco fan is typically known) (see Figs. 4 and 5) in which blades 30F are fixed to the end of a rotation shaft 32 of a drive motor 300. Further, the fan 30 is disposed in each of the right side cooling chamber 8R and the left side cooling chamber 8L and cools the circuit board for the left and right left IH heating coils 6LC and 6RC and the heating coils themselves. Details will be described later.

As shown in Figs. 4 and 5, a cooling unit CU is inserted from above into each of the cooling chambers 8R and 8L and is fixed therein, and includes a component case 34 that accommodates the circuit board 41 constituting an inverter circuit and a fan case 37 that is connected to the component case 34 and that forms a fan chamber 39 of the fan 30 therein. The fan 30 is a so-called horizontal shaft type, in which the rotation shaft 32 of the drive motor 300 is oriented horizontally, and is accommodated inside the fan case 37 disposed in the right side cooling chamber 8R. In the fan case 37, a round-shaped fan space is formed surrounding the multiple blades 30F of the fan 30, thus forming the fan chamber 39. A suction 37B is provided in the uppermost portion of the suction tube 37A of the fan case 37. An outlet (exit) 37C is formed on one end of the fan case 37.

The fan case 37 is formed as an integral structure by combining two plastic cases 37D and 37E and coupling them with a fixture such as a screw. In this coupled state, the case is inserted into the cooling spaces 8R and 8L from above and is fixed so as not to move with appropriate fixing means.

The component case 34 is connected to the fan case 37 in an adhered manner so that cooling air discharged from the outlet 37C for discharging air of the fan case 37 is introduced into the component case 34. The component case 34 has a horizontally long rectangle shape and the entire case is sealed except for the three portions, namely, an introduction port (not shown) in communication with the outlet 37C, and a first outlet 34A and a second outlet 34B that are described later.

A printed circuit board (hereinafter, referred to as a "circuit board") 41 is mounted with the inverter circuit, in which the circuit board each provides a predetermined high-frequency power to each of the right IH heat source 6R and left IH heat source 6L. The circuit board 41 has external dimensions that substantially matches the shape of the internal space of the component case 34 and is disposed in the component case 34 on the far side relative to the grill heating chamber 9, in other words on the side that becomes close as a few millimeters to the main body case 2 constituting the outer wall of the main body A. Note that in this circuit board 41, a power source and a control circuit for driving the drive motor 300 of the fan 30 are also mounted separate to the inverter circuit.

Each of the inverter circuits 210R and 210L of this circuit board 41 is, as shown in Fig. 13, a circuit equipped with, excluding a rectifier bridge circuit 221 whose input side is connected to a bus-line of an commercial power supply (although may be included), a direct current circuit that includes a coil 222 connected to a DC side output terminal and a smoothing capacitor 223, a resonant capacitor 224, an IGBT 225 that is an electric power controlling semiconductor serving as switching means, a driving circuit 228, and a flywheel diode. The inverter circuits do not include the IH heating coils 6RC and 6LC that are mechanical structures.

On the top side of the component case 34, the first outlet 34A and the second outlet 34B is formed with a distance between each other along the direction of the cooling air flow from the fan 30. The second outlet 34B is arranged in a position on the most downstream side of the cooling air flow in the component case 34 and has an opening area few times larger than that of the first outlet 34A. Note that in Fig. 5, Y1 to Y5 indicates the flow of air sucked into and discharged from the fan 30 and the cooling air flows in the order of Y1, Y2..., and Y5.

A cooling duct 42 is molded with plastic in which three ventilation spaces 42F, 42G, and 42H that are described later are formed inside a space between a screwably fixed upper case 42A, which is an integrally formed plastic part, and a tabular cover 42B, which is also an integrally formed plastic part, (hereinafter, referred to as "lower case") (see Fig. 5).

Blow out holes 42C are formed in plural numbers penetrating through the whole area of the wall of the upper side of the upper case 42A. The holes 42C are formed to blow out cooling air from the fan 30 and each bore of the blow out holes 42C is made the same.

A partition wall 42D has a straight or curved rib (convex shaped) shape integrally formed in the upper case 42A, and with this, a ventilation space 42F is partitionally formed in which one end is in communication with the first outlet 34A of the component case 34 (see Fig. 5).

In a similar manner, a partition wall 42E has a U-shape, when in planar view, and convex shape integrally formed in the upper case 42A, and with this, a ventilation space 42H is partitionally formed in which one end is in communication with the second outlet 34B of the component case 34 (see Fig. 5). This ventilation space 42H is in communication with the largest ventilation space 42G through a communication hole (aperture) 42J formed on one side of the partition wall 42E (the side that is close to the component case 34 in Figs. 4 and 7).

Further, the cooling duct 42 is disposed so that one side of the ventilation space 42H (the side that is close to the component case 34 in Figs. 4 and 7) is directly above the second outlet 34B of the component case 34. With the above, the cooling air that is discharged from the component case 34 enters the ventilation space 42H of the cooling duct 42, is fanned out into the ventilation space 42G therefrom, and is blown out from each of the blow out holes 42C. A square shaped vent hole 42K is formed so as to correspond to the ventilation space 42H of the upper case 42A, and this vent hole blows out air that cools the liquid crystal display screens 45R and 45L described later.

Referring to Fig. 5, aluminum radiation fins 43A and 43B is installed with an electric power controlling semiconductor switching element such as IGBT 225 and other heat generating parts in the circuit board 41 that is mounted with inverter circuits (that will be described in detail will Fig. 13) 210R and 210L for the right IH heat source 6R and left IH heat source 6L. The aluminum radiation fins 43A and 43B are arrangements of orderly formed thin fins in plural numbers that is formed throughout the entirely thereof. As shown in Fig. 5, this radiation fins 43A and 43B are disposed on the side that is close to the ceiling portion than the bottom portion of the component case 34 and are secured below with sufficient space so that cooling air Y4 flows in the space.

That is, since the characteristics of the fan 30 is such that the discharge capacity (blow out capacity) of the discharge port (outlet 37C) is not uniform throughout its area and that the portion with maximum discharge capacity is on the lower side relative to the vertically center point of the outlet 37C, the positions of the radiation fins 43A and 43B are set on the upper side so that they are not positioned on the extended line of the vertically center point of the outlet 37C. Further, the cooling air is not blown towards various small electronic components and the printed wiring pattern mounted on the surface of the circuit board 41.

The inverter circuit 210L for the left IH heat source 6L includes an exclusive inverter circuit MIV for driving the main heating coil MC and exclusive inverter circuits SIV1 to SIV 4 for driving the plurality of sub heating coils SC individually (see Fig. 14).

The grill heating chamber 9 is equipped under the left and right IH heat source 6L and 6R of the main body A and forms a predetermined space SX (see Fig. 6) with the inside rear wall of the main body A. That is, for installing the exhaust duct 14 described later and in order to form the exhaust hood 12, the space SX with more than 10 cm with the rear side wall 2U of the body of the main body case 2 is formed.

In a state in which the two independent cooling units CU are inserted into the cooling chamber 8R and 8L from above and are fixed therein, each portion of the fan case 37 shown in Fig. 5 with a large width partially projects out into the space SX (see Fig. 6) and a predetermined space is formed between the left and right side walls of the grill heating chamber 9 and the corresponding component case 34 that houses the circuit board 41. Note that, here, the description space refers to a space between the left and right outer wall of the grill heating chamber 9 and the component case 34 and does not refer to the space between each of the vertical partition plates 24L and 24R and the outer surface of the corresponding component case 34 described in Embodiment 1.

Even if there is a grill heating chamber 9, the fan case 37 portion of the cooling unit CU is disposed in the space SX as above. When projected and viewed from the front, a portion of the fan case 37 of the cooling unit CU is in a partially overlapped state with the grill heating chamber 9, and, thus, preventing the increase in the width of the main body A.

### (Operation Means E)

The operation means E of the cooking system according to Embodiment 1 includes front side operating units 60 and a top side operating unit 61 (see Figs. 2 and 3).

### (Front Side Operating Units)

Plastic front side operating frames 62R and 62L are mounted on both front left and front right sides of the main body case 2, and the front sides of the operating frames are front side operating units 60. The front side operating unit 60 is provided with an operation button 63A (see Fig. 2) of the main power switch 63 that simultaneously provides or shuts off the power to all of the left IH heat source 6L, the right IH heat source 6R, the central electric radiant heat source 7 and the electric radiant heat sources 22 and 23 of the grill heating chamber 9. Each of a right operation dial 64R that opens and closes an electric contact of a right power switch (not shown) that controls the energization of the right IH heat source 6R and amount of energization (heating power) thereof and, similarly, a left operation dial 64L of a left control switch (not shown) that controls the energization of the left IH heat source 6L and amount of energization (heating power) thereof is provided to the corresponding front side operating unit 60. Power is supplied to all of the electric circuit components shown in Fig. 13 via the main power switch 63.

In the corresponding front side operating unit 60, a left indicating lamp 66L that turns on only when under a state in which energization is performed to the left IH heat source 6L by a left operation dial 64L is provided and a right indicating lamp 66R that turns on only when under a state in which energization is performed to the right IH heat source 6R by a right operation dial 64R is provided.

Note that the left operation dial 64L and the right operation dial 64R are, as shown in Figs. 1 and 4, pushed inside so as not to protrude from the front surface of the front side operating unit 60 when not in use. When using the dial, the user pushes the dial once with a finger and releases the finger therefrom. With this, the dial protrudes out (see Fig. 2) by force of a spring (not shown) embedded in the front side operating frame 62, turning the dial into a rotatable state by pinching the circumference of the dial. Further, at this stage, when turned to the left or right a notch, energization (at a minimum set heating power of 120W) is started in each of the left IH heat source 6L and the right IH heat source 6R. Note that the minimum heating power of the left IH heat source 6L is obtained with the main heating coil MC alone and the sub heating coils SC are not heated and driven when heating power is minimum.

Additionally, when either of the protruded left operation dial 64L and right operation dial 64R is further turned to the same direction, a predetermined electric pulse is generated by an embedded rotary encoder (not shown) in accordance with the amount of rotation. The electric pulse is read by the control means F and, thus, the amount of energization of the corresponding heat source is determined enabling the heating power to be set. Note that when either of the left operation dial 64L and the right operation dial 64R is, with the finger of the user, pushed (pushed back) once into a predetermined position where the dial does not protrude out from the front surface of the front side operating unit 10, irrespective of whether in the initial state or in a state in which the dial has been turned to the right or left, the dial is kept at this position and the energization of the left IH heat source 6L or the right IH heat source 6R is instantaneously stopped (for example, even during cooking, when the right operation dial 64R is pushed in, energization of the right IH heat source 6R will be instantaneously stopped.)

Note that when opening (OFF) operation is performed with the operation button 63A (see Fig. 2) of the main power switch 63 (see Fig. 1), the operation of the right operation dial 64R and the left operation dial 64L will be made invalid all at once thereafter. Similarly, all energization of the central electric radiant heat source 7 and the electric radiant heat sources 22 and 23 disposed in the grill heating chamber 9 will be also shut off.

Further, although not shown, there are three independent timer dials provided at the bottom portion on the front side of the front side operating frame 62. These timer dials are for controlling timer switches (also known as a timer counter, not shown) that energizes either one of the corresponding left IH heat source 6L, right IH heat source 6R, and radiant type central electric heat source 7 for a desired time (set timer time) from the start of energization and automatically shuts off power after the set time has elapsed.

### (Top Side Operating Unit)

As shown in Fig. 3, the top side operating unit 61 includes a right heating power setting operating unit 70, a left heating power setting operating unit 71, and a center operating unit 72. That is, on the top side of the top plate 21 in the front portion, relative to a left-right center line of the main body A, the right heating power setting operating unit 70 of the right IH heat source 6R is disposed on the right side, the center operating unit 72 of the central electric radiant heat source 7 and the electric radiant heat sources 22 and 23 are disposed in the center portion, and the left heating power setting operating unit 71 of the left IH heat source 6L is disposed on the left side.

On this top side operating unit, various keys are provided that allows induction heating when a stainless steel or metal cookware (not shown) is used. Among the keys, there is a key 250 exclusive for bread. Note that rather than a dedicated key for cooking specific food (for example, bread), a general key for a cookware may be exclusively provided, in which the pressing of the key will enable display of operable keys (input keys 141 to 145 described later) displaying the name of the desired cooked food (for example, bread) on an integrated display device 100 described later, and in which the user can input a desired cooking start command by touching with the finger the area of the corresponding key. Note that the cookware can be used on the grill 109 by inserting the cookware into the grill heating chamber 9 from the front opening 9A.

A compound cooking key 251 is further provided on the top side operating unit 61 that is used when cooking is performed with the cookware using both the IH heat source and the electric radiant heat sources 22 and 23 (hereinafter, referred to as "compound heat cooking" or "compound cooking"). Embodiment 1 allows compound cooking with the right IH heat source 6R and the electric radiant heat sources 22 and 23 of the grill heating chamber 9. The compound cooking key 251 is provided on the right heating power setting operating unit 70 side described later (see Fig. 3).

Note that rather than a fixed key, button, a knob, or the like, the compound cooking key 251 may be integrated display means 100 (such as a liquid crystal screen) displaying the desired key allowing the user to touch an area of the key to input the compound cooking. That is, a method may be adopted in which an inputtable key shape is displayed at a suitable time on the integrated display means 100 by software in which an input operation is carried out by touching of the key.

### (Right Heating Power Setting Operating Unit)

Referring to Fig. 16, on the right heating power setting operating unit 70, one-touch setting keys 90 each for a heating power are provided that enables the user to easily set the heating power of the right IH heat source 6R with a single push. Specifically, three one-touch keys, that is, a low heating power key 91, a middle heating power key 92, and a high heating power key 93 are provided, in which the low heating power key 91 sets the heating power of the right IH heat source 6R to 300 W, the middle heating power key 92 to 750 W, and the high heating power key 93 to 2.5 kW. Further, a high heating power key 94 is provided on the right side of the right one-touch key. When it is desired for the heating power of the right IH heat source 6R to be 3 kW, this key is pushingly operated.

### (Left Heating Power Setting Operating Unit)

Similarly, a group of one-touch keys that are similar to the ones of the right heating power setting operating unit 70 are disposed also in the left heating power setting operating unit 71 for setting the heating power of the left IH heat source 6L.

### (Center Operating Unit)

Referring to Figs. 3 and 16, in the center operating unit 72, an operation button 95 of the operating switch that starts energization of the electric radiant heat sources 22 and 23 of the grill heating chamber 9 used for grilling (roasting) and oven cooking and an operation button 96 of the operating switch that stops energization thereof are provided next to each other.

In the center operating unit 72, operation buttons 97A and 97B of the temperature control switch that sets the control temperature of the grilling, which is carried out by the electric radiant heat sources 22 and 23, and the temperature of the electromagnetic cooking, which is carried out by the left IH heat source 6L and the right IH heat source 6R, by 1-degree increments or 1-degree decrements are provided sideways in one line. Further, the power on/off switching button 98 for the central electric radiant heat source 7 and the configuration switches 99A and 99B that each sets the level of the heating power incrementally or decrementally are also provided here.

Furthermore, a convenient menu key 130 is provided to the center operating unit 72. When the key is pushingly operated when setting to deep fry (using the left IH heat source 6L and the right IH heat source 6R), to deep-fry preheating status display (using the left IH heat source 6L and the right IH heat source 6R, and heating oil to a preset preheating temperature), and to timer cooking (cooking by energizing the left IH heat source 6L, the right IH heat source 6R, the central electric radiant heat source 7, the electric radiant heat sources 22 and 23 provided in the grill heating chamber 9 for a set time set by the timer switch), the desired input screen or the status display screen can be easily read to the integrated display means 100 described later.

On the right side of the key 250 dedicated to bread, a right IH convenient menu button 131R that includes a hard button is provided. The button is a configuration button to perform various settings of the right IH heat source 6R. A similar configuration button is also provided to the left IH heat source 6L (not shown).

Upon operation of the start switch that operates and starts the timer counter (not shown), the elapsed time from the starting point is measured and is numerically displayed on the liquid crystal display screens 45R and 45L. Note that the indication light of the liquid crystal display screen 45R and 45L penetrates through the top plate 21 and the elapsed time is clearly displayed to the user in units of "minute(s)" and "second(s)".

Similar to the right heating power setting operating unit 70, a left timer switch (not shown) and a left liquid crystal display 45L are provided to the left heating power setting operating unit 71 on the left side such that they are disposed in a symmetrical position relative to the left-right center line CL1 of the main body 1.

### (Heating Power Indicating Lamp)

On the right front side of the top plate 21 between the right IH heat source 6R and the right heating power setting operating unit 70, a right heating power indicating lamp 101R that indicates the level of heating power of the right IH heat source 6R is provided. The right heating power indicating lamp 101R is provided in the vicinity of the bottom side of the top plate 21 so as to emit an indication light to the top side through (penetrating through) the top plate 21.

Similarly, a left heating power indicating lamp 101L that indicates the level of heating power of the left IH heat source 6L is provided on the left front side of the top plate 21 between the left IH heat source 6L and the left heating power setting operating unit 71. The left heating power indicating lamp 101L is provided in the vicinity of the bottom side of the top plate 21 so as to emit an indication light to the top side through (penetrating through) the top plate 21. Note that the illustration of these indicating lamp 101R and 101L are omitted in the circuit configuration diagram of Fig. 13.

### (Display Means G)

The display means G of the cooking system according to Embodiment 1 includes the integrated display means 100 (see Figs. 1 and 3).

Referring to Figs. 1, 3, and 16, the integrated display means 100 is provided in the center portion in the left and right direction of the top plate 21 and on the front side in the front and rear direction. This integrated display means 100 is constituted mainly by a liquid crystal display and is provided in the vicinity of the bottom side of the top plate 21 so as to emit an indication light to the top side through (penetrating through) the top plate 21.

The integrated display means can be used to input and confirm the energization status (heating power, time period, and the like) of the left IH heat source 6L, the right IH heat source 6R, the central electric radiant heat source 7 and the electric radiant heat sources 22 and 23 of the grill heating chamber 9. That is to say, the heating condition and the operation status such as the heating power corresponding to the following three cases are clearly displayed, by means of characters, illustration, and graphs.
(1) The function of the left and right IH heat sources 6L and 6R (whether during cooking operation)
(2) The function of the central electric radiant heat source 7 (whether during cooking operation)
(3) If cooking with the grill heating chamber 9, the operation procedures and function when heat cooking (for example, which of the one is currently being performed among roasting, grilling and oven cooking).

The liquid crystal screen used in the integrated display means 100 is a known dot matrix LCD screen. This screen is capable of providing a screen with high-definition (equivalent to QVGA with a resolution of 320 × 240 pixels or to VGA with 640 × 480 dots and that is capable of displaying 16 colors) and can display a large number of characters in a case where characters are displayed. Not only ones with one layer, the liquid crystal screen may be one displaying with more than two upper and lower layers to increase displayed information. The display area of the liquid crystal screen is a rectangular shape with a height (front-rear direction) of approximately 4 cm and width of 10 cm.

Further, the display area that displays information is divided into a plurality of areas each corresponding to a heat source (see Fig. 16). For example, the display is allocated into ten areas in total that are defined as below.
(1) A corresponding area 100L of the left IH heat source 6L (total of two, i.e., 100L1 for heating power and 100L2 for time period).
(2) A corresponding area 100M of the central electric radiant heat source 7 (total of two, i.e., 100M1 for heating power and 100M2 for time period).
(3) A corresponding area 100R of the right IH heat source 6R (total of two, i.e., 100R1 for heating power and 100R2 for time period).
(4) An cooking area 100G of the grill heating chamber 9.
(5) An guiding area (one area, i.e., 100GD) that displays reference information related to various cooking as required or by operation of the user, as well as notifying the user when an abnormal operation is detected or when an improper operation is carried out.
(6) A key display area 100F that displays six input keys 141, 142, 143, 144, 145, and 146 that are mutually independent and that has a function such that each various cooking conditions and the like can be directly input.
(7) An arbitrary display area 100N.

When the key of the arbitrary display area 100N is pushed, detailed and useful information on cooking is displayed in the guide area 100GD of the integrated display means 100 by means of character.

Further the overall background color of the display area is generally displayed in an unified color (white, for example); however, when in a case of "compound cooking", the display areas 100R and 100G change into the same color that is different from the other heat sources 100L and 100M (for example, yellow or blue). This change of color can be performed by switching the operation of the back light when the display screen is a liquid crystal display; however detailed description will be omitted.

Although each of the above ten areas (display areas) are provided on the liquid crystal screen of the integrated display means 100, they are not each formed or partitioned on individual physical displays. That is, they are established by software (program for a microcomputer) for screen display and their areas, shapes, and positions can be changed by the software as appropriate; however, in consideration of the user usability, the order of alignment of the left IH heat source 6L, the central electric radiant heat source 7, the right IH heat source 6R, and the like is set at all times in the same order so as to match the left-right order of each heat source.

Specifically, on the display, information is displayed such that the left IH heat source 6L is on the left side, the central electric radiant heat source 7 is in the center, and the right IH heat source 6R is on the right side. Further, the cooking display area 100G of the grill heating chamber 9 is at all times displayed on the near side relative to the corresponding area 100L of the above left IH heat source 6L, the corresponding area 100M of the above central electric radiant heat source 7, and the corresponding area 100R of the right IH heat source 6R. Furthermore, the display area 100F of the input keys is displayed on the forefront at all times in any case whatsoever.

Additionally, as regards the input keys 141 to 146, a contact type key that changes its static capacitance by touch of the user's finger or the like is employed. With the user's light touch to a position corresponding to the key surface on the top side of the glass plate that covers the top side of the integrated display means 100, a valid input signal to an energization control circuit 200 is generated.

On the glass plate in a portion (area) including the input keys 141 to 146, there is no display whatsoever of characters, graphics, and symbols (including the arrows of the key 143 and 145 in Fig. 16) by means of printing or marking. The liquid crystal screen (key display area F) below these keys are configured to display characters, graphics, and symbols indicating the input functions of the keys according to each operation scene of the input keys.

Not all of the input keys 141 to 146 are always simultaneously displayed. As for a key that is invalid upon operation (an input key that does not have to be operated), such as the input key 144 in Fig. 16, it is in an inactive state such that the characters and graphics of the input function is not displayed on the liquid crystal screen. Operation of one of the active state input keys 141 to 146 will be a valid operation command signal to the control program that sets the operation of the energization control circuit 200.

Further, the input key 146 is a key that is operated when a cooking condition is to be determined or when cooking is to be started. Once this is operated and the cooking operation is started, the input key is changed to an input key displaying "STOP" (see Figs 17 and 18). As regards other input keys 141 to 145, the input command may change as appropriate. The valid input function can be easily identified by the characters, graphics, or symbols displayed as appropriate.

Note that when a particular heat source is to be stopped while using multiple heat sources, in the case of Fig. 17, for example, pressing of the input key 143 will change the color or will flash each of the corresponding area so as to indicate that the area has been selected in the sequential order of the corresponding area 100M of the central electric radiant heat source 7, the corresponding area 100L of the left IH heat source 6L, and the corresponding area 100R of the right IH heat source 6R. Subsequently, by pressing the stop key 146 after calling (selecting) the desired corresponding area, the particular heat source is stopped. Whereas, when the input key 145 is pressed, selection can be made in the other direction in the sequential order of the corresponding area 100M of the central electric radiant heat source 7, the corresponding area 100R of the right IH heat source 6R, and the corresponding area 100L of the left IH heat source 6L, and after calling the desired corresponding area, the stop key 146 may be pressed. "AM" is an active mark that is displayed besides the name of a heat source carrying out a heat cooking operation, and the user can recognize whether the heat source is driven or not by seeing if this mark is displayed or not.

### (Grill Heating Chamber)

As shown in Figs. 1 and 6, the front opening 9A of the grill heating chamber 9 is openably covered with the door 13, and the door 13 is supported by a support mechanism (not shown) such as rails or rollers in the grill heating chamber 9 such that the door 13 is movable in the front-rear direction by a user operation. Further, a window plate made of heat-resisting glass is disposed in a center opening 13A of the door 13 so as to allow visual recognition of the inside of the grill heating chamber 9 from the outside. "13B" is a handle protruded forward to perform an opening/closing operation of the door. Note that the grill heating chamber 9 forms a predetermined space SX (see Fig. 6) with the inside rear wall of the main body as described above. As described later, the exhaust duct 14 is disposed therein by utilizing this space, and the exhaust hood 12 is also formed.

The door 13 is connected to front ends of metal rails that extend horizontally in both the left and right side position of the heating chamber 9. Generally, when cooking oily foodstuff, a metal saucer 108 (see Fig. 6) is placed on the rails. The saucer 108 is used while placing a metal grill 109 thereon. As such, when the door is drawn out horizontally to the front side, the saucer 108 (when the grill 109 is placed thereon, the grill, too) is drawn out horizontally to the front side of the grill heating chamber 9 along with the drawing out motion. Note that the saucer 108 is supported by merely placing the left and right end portions thereof on the two metal rails. Accordingly, the saucer 108 is independently detachable from above the rails.

Further, the shape of the grill 109 and the position, shape, and the like of the saucer 108 are devised so that they will not knock into the lower heater 23 and obstruct the saucer 108 from being drawn out to the front. The grill heating chamber 9 has a "double side grilling function" that heats foodstuff from above and below when meat, fish, or other foodstuff is placed on the grill 109 and when the electric radiant heat sources 22 and 23 are energized (at the same time, upon time division, or the like). Furthermore, this grill heating chamber 9 is provided with an in-chamber temperature sensor 242 (see Fig. 13) that detects the temperature inside the chamber; accordingly it is possible to cook while maintaining the temperature inside the chamber to a desired temperature.

As shown in Fig. 6, the grill heating chamber 9 includes a tubular metal inner frame 9C, which has an opening 9B in the entirety of the rear (back) side and an opening 9A on the front side; and an outer frame 9D that covers all of the outside of this inner frame while maintaining predetermined gaps with the inner frame, namely, gap 113 (below), gap 114 (above), both left and right gaps (115, not shown). Note that "307" in Fig. 6 is a space formed between the outer frame 9D of the grill heating chamber 9 and the bottom side of main body case 2.

The outer frame 9D has five sides, namely the left and right two sides, the top side, the bottom side, and the rear side in which the entirety is formed of a steel sheet and the like. The inside surfaces of these inner frame 9C and outer frame 9D are formed with a coating that has high cleanability such as enamel, are coated with heat resistant coating film, or are formed with an infrared radiation film. When an infrared radiation film is formed, the infrared radiant quantity to the heated object such as foodstuff is increased, heating efficiency is increased, and uneven baking is improved. "9E" is an outlet formed on the upper portion of the rear side wall of the outer frame 9D.

A metal exhaust duct 14 is disposed so as to communicate with the outside of the outlet 9E. The cross section of the passage of this metal exhaust duct 14 is square or rectangular, and, as shown in Fig. 6, from midway, as the duct extends to the downstream side, the duct is inclined obliquely upwards, and subsequently is bent to a vertical direction such that the upper end opening 14A is ultimately in communication with the vicinity of the center vent hole 20C formed in the upper frame 20.

"121" is a deodorizing catalyst disposed in the exhaust duct 14 in the position on the downstream side of the outlet 9E. The catalyst is activated by being heated with the electric heater (121H) for the catalyst and functions to remove the odorous component from the hot exhaust in the grill heating chamber 9 passing through the exhaust duct 14.

### (Exhaust Structure, Intake Structure)

As described above, a right vent hole (serves as an inlet) 20B, a center vent hole (serves as an outlet) 20C, and a left vent hole 20D that are long sideways are formed on the rear portion of the upper frame 20. A metal flat-plate shaped cover 132 (see Fig. 1), which is formed with numerous and small communication holes throughout, is detachably placed above these three rear vent holes so as to cover the entire upper side of the vent holes. The cover 132 may be one with tiny holes serving as communication holes that is formed by press work on a metal sheet (also known as perforated metal), or other than that, may be a wire netting or one with a small gridded shape. In any case, the cover may be any that does not let the user's finger or foreign matter enter from above into each of the vent holes 20B, 20C, and 20D.

The suction 37B in the uppermost portion of the suction tube 37A of the fan case 37 is located immediately below the right end portion of the cover 132 such that the suction 37B is capable of introducing external indoor air such as air in the kitchen into the left and right cooling chamber 8R and 8L in the main body A through the communication holes of the cover 132.

As shown in Fig. 2, the upper end of the exhaust duct 14 is positioned in the rear exhaust hoods 12. In other words, the rear exhaust hoods 12, which are in communication with the space 116 (see Fig. 6) that is formed around the grill heating chamber 9, are secured in both the left and right sides of the exhaust duct 14. As described above, the grill heating chamber 9 is disposed with a predetermined space 116 with the horizontal partition plate 25 (see Fig. 6). This space 116 is ultimately in communication with the rear exhaust hoods 12. As mentioned above, since the inside of the upper portion component chamber 10 is in communication with the rear exhaust hoods 12 through the pair of outlets 28A that is formed in the rear partition plate 28, when the cooling air flowing in the upper portion component chamber 10 (arrow Y5 in Fig. 5) is discharged to the outside of the main body 1 as arrow Y9 of Fig. 2, the air inside the space 116 is induced and discharged along with this.

### (Auxiliary Cooling Structure)

Referring to Figs. 4 and 5, a front component case 46 accommodates therein a mounting substrate 56 that fixes thereon various electrical and electronic components 57 of the top side operating unit 61 and light emitting elements (LED) that indicates the heating power with light during induction heat cooking. The front component case 46 includes a transparent plastic made lower duct 46A whose top side is opened and a transparent plastic made upper duct 46B that serves as a cover that adheres to the top side opening of this lower duct 46A so as to cover the opening. In the right edge portion and the left end portion of the lower duct 46A, vent holes 46R and 46L are opened, respectively (see Fig. 4), and in the center rear portion thereof, a notch permitting ventilation is formed.

On the ceiling side of the upper duct 46B, the integrated display means 100 is disposed in the middle and liquid crystal display screens 45R and 45L are each disposed in the right and left, respectively (see Fig. 4). The cooling air of the fan 30 enters the ventilation space 42H of the cooling duct 42 through the second outlet 34B of the component case 34, enters the front component case 46 from below the liquid crystal display screen 45R and 45L through a vent hole 42K that has been formed so as to correspond with the ventilation space 42H, and is discharged from the notch 46 into the upper portion component chamber 10. As such, both the liquid crystal display screen 45R and 45L and the integrated display means 100 are cooled by the cooling air from the fan 30 at all times.

In particular, since the cooling air from the second outlet 34B of the component case 34 is not air that has cooled the left and right IH heating coils 6LC and 6RC that become high in temperature during the induction heating operation, the temperature thereof is low, and even though with a small volume of cooling air, increase of temperature of both the liquid crystal display screens 45R and 45L and the integrated display means 100 can be effectively suppressed. Especially, since the rear positions of the left and right IH heating coils 6LC and 6RC that are on the downstream side of the flow of the cooling air (arrow Y5 in Fig. 5) are not easily cooled, in Embodiment 1, the relative portion is cooled by supplying the cold air from the first outlet 34A to the ventilation space 42F directly.

### (Auxiliary Exhaust Structure)

As shown in Fig. 6, a tubular bottom portion 14B is formed having a shape that is sunk downwards a level at a portion that is on the downstream side of the deodorizing catalyst 121 of the exhaust duct 14. A vent hole 14C is formed at the tubular bottom portion 14B. An exhaust purpose auxiliary axial flow fan 106 faces this vent hole, where "106A" are its rotor blades and "106B" is a drive motor that rotates the rotor blades 106A. The fan is supported by the exhaust duct 14. During cooking in the grill heating chamber 9, since the grill heating chamber 9 becomes high in temperature, the inside air pressure naturally increases thus discharging high-temperature ambient air therefrom which ascends through the exhaust duct 14. By operating the fan 106 and taking in air inside the main body A into the exhaust duct 14, as indicated by arrow Y7, the high-temperature air in the grill heating chamber 9 is induced to this fresh air and is exhausted, as indicated by arrow Y8, from the upper end opening 14A of the exhaust duct 14 while decreasing its temperature.

The exhaust purpose auxiliary axial flow fan 106 is not always operated during operation of the cooking system and is operated while cooking is carried out in the grill heating chamber 9. This is because high-temperature hot air is discharged to the exhaust duct 14 from the grill heating chamber 9. Further, the air flows Y7 and Y8 in Fig. 6 and the air flows Y1 to Y5 in Fig. 5 are completely unrelated and is not a continuous flow.

### (Control Means F)

The control means F of the cooking system according to Embodiment 1 includes the energization control circuit 200 (see Fig. 13).

Fig. 13 is a component diagram that illustrates the entirety of the control circuit of this cooking system, in which the control circuit is formed with the energization control circuit 200 that is formed by embedding a single or a plurality of microcomputer therein. The energization control circuit 200 includes four parts, namely, an input unit 201, an output unit 202, a storage unit 203, and an arithmetic control unit (CPU) 204, is supplied with DC power through a voltage stabilizer (not shown), and serves a central role as control means controlling all of the heat sources and the display means G. In Fig. 13, the inverter circuit 210R for the right IH heat source 6R is connected to a commercial power supply with a voltage of 100V or 200V through the rectifier circuit (also known as a rectifier bridge circuit) 221.

Similarly, in parallel with this inverter circuit 210R for the right IH heat source 6R, the inverter circuit 210L for the left IH heat source 6L, which has a similar basic configuration as that of the right IH heating coil 6RC (induction heating coil) shown in Fig. 13, is connected to the commercial power supply through the rectifier bridge circuit 221. That is, the left IH heating coil 6LC (induction heating coil) includes the rectifier bridge circuit 221 whose input side is connected to the bus-line of an commercial power supply; the direct current circuit that includes the coil 222, which is connected to the DC side output terminal, and the smoothing capacitor 223; a resonance circuit, which one end is connected to a connecting point of the coil 222 and the smoothing capacitor 223, formed by a parallel circuit of the right IH heating coil 6RC and a resonance capacitor 224; and the IGBT 225 serving as switching means in which the collector side is connected to the other end of the resonance circuit.

The major difference between the inverter circuit 210L for the left IH heat source 6L and the inverter circuit 210R for the right IH heat source 6R is that the inverter circuit 210L has the main heating coil MC and the sub heating coils SC. Accordingly, the inverter circuit 210L for the left IH heat source 6L includes the inverter circuit MIV for the main heating coil, which supplies electric power to the inner coil LC2 and the outer coil LC1, that is, to the main heating coil MC, and the inverter circuits SIV1 to SIV 4 for the sub heating coils, which individually supplies electric power to each of the four independent sub heating coils SC1 to SC4 described later. Further, the timing of energization and the amount of energization of the four sub heating coils SC1 to SC4 are all determined by the energization control circuit 200.

The inverter circuit MIV for the main heating coil employs a variable output frequency method, thus, by changing the frequency, it will be possible to vary the inverted power, that is, the obtained heating power. As the drive frequency of the inverter circuit MIV is set higher, the inverted power reduces and damage to the electrical and electronic elements constituting the circuit such as the switching means (IGBT) 225 and the resonant capacitor 224 increases, as well as increase in the amount of heat therefrom. Since this is not preferable, a predetermined upper limit frequency is determined and control is carried out such that the frequency is changed at of under the determined frequency. Electric power allowing continuous control at the upper limit frequency is the minimum electric power. When electric power lower than this is to be input, duty factor control, which performs intermittent energization, may be used in combination, thus obtaining an ultimate low heating power. The heating power of the inverter circuits SIV1 to SIV4 for the sub heating coils may be controlled in the same manner.

Further, the drive frequency for driving the inverter circuit MIV is basically set to be the same as the drive frequency for the inverter circuits SIV1 to SIV4 for the sub heating coils. If it is to be changed, the energization control circuit 200 controls the drive frequency difference between the two frequencies to be out of the range of 15 to 20 kHz such that the difference between the two does not enter the audio frequency range. This is because, when two or more induction heating coils are driven at the same time, depending on the frequency difference, the frequency difference becomes a cause of unpleasant sound such as the ones called beat noise or interference noise.

Note that the main inverter circuit MIV and the sub inverter circuits SIV1 to SIV4 for the sub heating coils do not have to be driven at the same time. For example, depending on the heating power instructed by the energization control circuit 200, the heating operation may be switched alternately at short intervals. Herein, "at the same time" refers to a case in which the energization start timing and the energization stop timing is completely simultaneous.

A heater driving circuit 211 is a heater driving circuit of the central electric radiant heat source 7; "212" is a heater driving circuit that drives the electric radiant heat source 22 for in-chamber heating of the grill heating chamber 9; similarly, "213" is a heater driving circuit that drives the electric radiant heat source 23 for in-chamber heating of the grill heating chamber 9; "214" is a heater driving circuit that drives a catalytic heater 121H provided midway of the exhaust duct 14; and "215" is a driving circuit that drives the liquid crystal screen of the integrated display means 100.

The emitter of the IGBT 225 is connected to a common connecting point of the smoothing capacitor 223 and the rectifier bridge circuit 221. The flywheel diode 226 is connected between the emitter of the IGBT 225 and the collector so that the anode of the flywheel diode 226 is on the emitter side. "N" refers to a metal pan that is a heated object.

A current detection sensor 227 detects the current flowing through the resonance circuit that includes the parallel circuit of the right IH heating coil 6RC and the resonance capacitor 224R. The detection output of the current detection sensor 227 is input to a placement-of-heated-object determination unit 280 described later; through this, determination information on whether there is a heated object is supplied to the input unit of the energization control circuit 200, and determination of the presence of the heated object N is performed. Further, if an inappropriate pan (heated object N) is used in the induction heating or if by some kind of accident, an undercurrent or an overcurrent having a value difference equivalent to or above a predetermined value when compared to a normal current value is detected, the energization control circuit 200 controls the IGBT 225 through the driving circuit 228 to instantaneously stop the energization of the induction heating coil 220.

Similarly, since the inverter circuit MIV for the main heating coil and the inverter circuits SIV1 to SIV 4 for the sub heating coils, which individually supplies electric power to each of the four independent sub heating coils SC1 to SC4, have the same circuit configuration of that of the inverter circuit 210R for the right IH heat source 6R, description will be omitted. However, these common circuit configuration is denoted collectively as the inverter circuit 210L for the left IH heat source 6L in Fig. 13 in which "6LC" is the left IH heating coil, "224L" is a resonant capacitor. The inverter circuit MIV for the main heating coil MC is also connected to the above mentioned rectifier bridge circuit 221; the direct current circuit that includes the coil 222 and the smoothing capacitor 223; a resonance circuit, which one end is connected to a connecting point of the coil 222 and the smoothing capacitor 223, that includes a parallel circuit of the main heating coil MC and a resonance capacitor 224; and the IGBT 225 serving as switching means in which the collector side is connected to the other end of the resonance circuit.

The current detection sensor 227 is, although not shown, provided to the inverter circuit 210L of the left IH heat source 6L in the same manner. Note that the current detection sensor 227 may include a shunt, which measures current using a resistor, or a current transformer.

A driving circuit 260 drives the inverter circuit MIV for the main heating coil and serves the same role as the driving circuit 228. Similarly, driving circuits 261 to 264 each drives the corresponding inverter circuits SIV1 to SIV4 for the sub heating coils.

A current detection sensor 266 detects the current flowing through the resonance circuit that includes the parallel circuit of the main heating coil MC and the resonant capacitor (not shown); similarly, current detection sensors 267A, 267B, 267C (not shown), and 267D (not shown) each detects current flowing through the corresponding one of the resonance circuits that includes a parallel circuit of the sub heating coil SC and the resonant capacitor (not shown). These current sensors 266, 267A, 267B, 267C, and 267D serve similar roles to that of the current detection sensor 227.

As in the invention, in a cooking system that heats an heated object N with an induction heating method, the power control circuit for distributing high-frequency power to the left and right IH heating coils 6LC and 6RC is called a resonant inverter. The configuration includes a circuit connecting the inductance of the left and right IH heating coils 6LC and 6RC, as well as that of the heated object N (metal object) to the resonant capacitor (224L and 224R in Fig. 13), in which the on/off control of the switching circuit element (IGBT, 225 in Fig. 13) is carried out at a driving frequency of approximately 20 to 40 kHz.

Further, as regards the resonant inverter, there is a current resonance type suitable for a 200-V power supply and a voltage resonance type suitable for a 100-V power supply. The resonant inverter circuit is divided into a so-called half bridge circuit and a full bridge circuit depending on to where the connection target of the left and right IH heating coils 6LC and 6RC and the resonant capacitors 224L and 224R is switched by the relay circuit.

As described above, in a case where a heated object N (metal object) is induction heated by energization of the left and right IH heating coils 6LC and 6RC, when the heated object N is of a magnetic material such as iron, current with a frequency of approximately 20 to 40 kHz may be distributed to the resonance circuit connected to resonant capacitors (224L and 224R in Fig.13) by controlling the on/off of the switching circuit element (IGBT, 225 in Fig. 13) at a driving frequency of approximately 20 to 40 kHz.

On the other hand, in a case in which the heated object N is made of a material with high electrical conductivity such as aluminum or copper, in order to obtain the desired heating output, a large current needs to be induced on the bottom side of the heated object N by distributing a large current to the left and right IH heating coils 6LC and 6RC. Accordingly, in a case in which the heated object N is made of a material with high electrical conductivity, on/off control is performed at a driving frequency of 60 to 70 kHz.

Referring to Fig. 13, a motor driving circuit 33 is a motor driving circuit of the drive motor 300 of the fan 30 to keep the internal space of the main body A in Fig. 1 within a fixed temperature range, and a motor driving circuit 231 is a driving circuit of the drive motor 106B of the fan 106 disposed in the exhaust duct 14.

### (Temperature Detecting Circuit)

Referring to Fig. 13, a temperature detecting circuit 240 is input with temperature detection information from each of the following temperature detecting elements.
(1) The temperature detecting element 31R provided in the substantially middle portion of the right IH heating coil 6RC.
(2) The temperature detecting element 31L provided in the substantially middle portion of the left IH heating coil 6LC.
(3) A temperature detecting element 241 provided in the vicinity of the electric heater of the central electric radiant heat source 7.
(4) The temperature detecting element 242 for detecting the in-chamber temperature of the grill heating chamber 9.
(5) A temperature detecting element 243 disposed in the vicinity of the integrated display means 100.
(6) Temperature detecting elements 244 and 245 that are each adhered to and mounted on the corresponding one of the two radiation fins 43A and 43B inside the component case 34 and that individually detects the temperature of the corresponding one of the two radiation fins.

Note that the temperature detecting element may be provided to two or more places of the subject of the temperature detection. For example, a more accurate temperature control may be achieved by providing each of the temperature sensors 31R of the right IH heat source 6R to a middle portion of the right IH heating coil 6RC and its circumference. Further, the temperature detecting elements may be ones employing different principles. For example, the temperature detecting element in the middle portion of the right IH heating coil 6RC may be one using an infrared system and the temperature detecting element on the outer circumference may be a thermister type.

On the basis of the temperature measurement state from the temperature detecting circuit 240, the control circuit 200 controls the motor driving circuit 33 of the drive motor 300 of the fan 30 continuously so that the fan 30 is operated to perform cooling with air in order that each of the temperature measured portion does not become a predetermined temperature or higher.

The temperature detecting element 31L provided in the middle portion of the left IH heating coil 6LC includes five temperature detecting elements 31L1 to 31L5, which will be described in detail later.

### (Sub Heating Coils)

Referring to Figs. 9, 11, and 12, an outer coil 6LC1 of the left IH heating coil 6LC is a circular outer coil with a center point X1 and a maximum outer diameter DA (= twice the radius R3) and an inner coil 6LC2 is a coil circularly winded in the outer coil with a space 270 therebetween and has the same center point X1. The main heating coil MC is configured with two circular coils that are concentric circles.

The four sub heating coils SC1 to SC4 are disposed while maintaining a predetermined space 271 with the outer circumference of the main heating coil MC. As shown in Fig. 11, the sub heating coils are curved along the same circumference, around the center point X1 having a radius R2, and is disposed so as to be interspersed with substantially same distances between each other. Each are shaped in a curved ellipse or oval as shown in Figs. 9 and 11. These sub heating coils SC1 to SC4 are also formed so as to have an ellipse or oval outer shape by twisting one or a plurality of assembled wires and spirally winding this, and then by partially binding it with a binding tool or by hardening it with heat-resistant resin.

As shown in Fig. 11, these four sub heating coils SC1 to SC4 are disposed on a circle with a radius R3 from the center point X1 while maintaining a space 273 with an uniform size between each other. The line of circumference having a radius R3 coincides with the center line of each of the sub heating coils SC1 to SC4 in its longitudinal direction. In other words, around the circular main heating coil MC that constitutes a closed circuit, four sub heating coils SC1 to SC4 are disposed each forming an arc on the inside (on the side that is facing the outer circumference of the main heating coil MC) having a radius R2 from the center point X1 of the main heating coil MC, in which each of the assembled wires are curved and extended with a radius of curvature in accordance with the corresponding arc, thus constituting an electrically closed circuit. The height (thickness) of the main heating coil MC and the height (thickness) of each of the sub heating coils SC1 to SC4 are the same. The main heating coil MC and each of the sub heating coils SC1 to SC4 are horizontally provided and fixed on coil supports 290 described later such that the facing distances between their upper sides and the bottom side of the top plate 21 are the same.

The straight line Q1 illustrated in Fig. 9 is a straight line that connects an edge of the bend on the inside, in other words, one end RA of the bent arc (specifically, the starting point), of each of the four sub heating coils SC1 to SC4 to the center point X1. In the same manner, the straight line Q2 is a straight line that connects the other end RB of the arc (specifically, the end point) of each of the four sub heating coils SC1 to SC4 to the center point X1. When heating efficiency is considered, it is preferable that the length between the two ends RA and RB (between the starting point and the end point), that is, the length of the arc (of the sub heating coil SC) with a radius R2 that is bent along the circumference of the main heating coil MC, is long. This is because, as will be described later, the peripheral line of the main heating coil MC and the sub heating coils SC1 to SC4 are devised to reduce magnetic interference between each other by distributing the high-frequency current in the same direction. However, in actuality, the direction of current between two adjacent sub heating coils SC1 to SC4 will be opposite to each other. This will have some influence, thus will cause a problem. In order to suppress this influence, the coils are separated with a constant distance (space 273 described later) therebetween. Accordingly, there is a certain limitation to the length of the arc. Specifically, referring to Figs. 9 and 11, assuming that space 271, which is an electric insulation distance between the main heating coil MC and each of the sub heating coils SC1 to SC4, is 5mm, since the outer diameter of the main heating coil MC is twice the length of R1, that is, 180 mm, R2 is 180 mm + 5 mm + 5 mm = 190 mm, and the circumferential length of R2 is approximately 596.6 mm (= diameter R2, 190 mm × circular constant, 3.14). When the four sub heating coils SC1 to SC4 are arranged uniformly (every 90 degrees), one fourth of the length will be 149.15 mm. An angle defined by Q1 an Q2 is not 90 degrees but is, for example, 60 to 75 degrees. Here, if the angle is 70 degrees, then the above 149.15 mm will be 116 mm obtained from the expression: ratio of 70 degrees ÷ 90 degrees (approximately 0.778) × 149.15 mm. That is, the length of the innermost arc of each of the sub heating coils SC1 to SC4 is approximately 116 mm.

Further, as in Embodiment 1, when the number of sub heating coils SC is four, out of the 360 degrees circumference of the main heating coil MC, since a range of 280 degrees (the above mentioned four times of 70 degrees) is formed with arcs (of the sub heating coils SC) that are bent (with a radius of curvature R2) along the outer circumference of the main heating coil MC, it can be said that in approximately 77.8 % (= 280 degrees ÷ 360 degrees, hereinafter this rate is referred to as "concordance rate" in the subsequent description) of the range, the direction of the peripheral line of the main heating coil MC and the inner fringe of each sub heating coils SC1 to SC4 are in concordance with each other (parallel). This means that there is a large margin for allowing the high-frequency current to be distributed in the same direction between the main heating coil MC and the sub heating coils SC1 to SC4 and, thus, contributes to increase in the heating efficiency of the heated object N by reduction of magnetic interference. Note that in order to facilitate understanding of the description of Figs. 9 and 11, the sizes of each of the main heating coil MC and the sub heating coils SC1 to SC4 is not drawn to proportional scale. The larger the concordance rate, the length in which the high-frequency current flows in the same direction becomes larger and the length of the area in which the magnetic flux density of two adjacent heating coils is increased increases. This is desirable when considering heating efficiency; however, in actuality, there is a limitation due to the need to secure the above spaces 273, and it is not possible to achieve a concordance rate of 100%. If the concordance rate is, preferably, 60% or more, it will be possible to configure a system with high heating efficiency.

Note that referring to Fig. 11, since the diameter R3 is R2 + (2 × average width W1 of the assembled wires of the sub heating coils SC on the side that is adjacent to the main heating coil MC) + (2 × average width W2 of the assembled wires of the sub heating coils SC on the outside), when W1 = 15 mm and W2 = 15 mm, then R3 is 250 mm (= 190 mm + 30 mm + 30 mm). The space 271 may not be the minimum dimension of 5 mm but may be, for example, 10 mm. The space is an insulation space that is needed to maintain the insulation between the two objects, namely, the main heating coil MC and each of the sub heating coils SC1 to SC4 that are each supplied with power from different power sources. The dimension of each space 271 can be further shortened by interposing an electrical insulator, such as porcelain or thermally stable plastic, that is formed into a thin plate between the main heating coil MC and each of the sub heating coils SC1 to SC4 so as to block between the two and improve the electric insulation of each space 271.

As shown in Fig. 9, these four sub heating coils SC1 to SC4 are arranged such that their maximum outer diameters are DB. As described in Fig. 10, the outer coil 6LC1 and the inner coil 6LC2 are connected in series. Accordingly, the outer coil 6LC1 and the inner coil 6LC2 are energized at the same time.

Each of the sub heating coils SC1 to SC4 is not a perfect circle and may be divided into two, upper and lower, layers to facilitate manufacturing. That is, it may be manufactured by bundling about 30 fine wires (element wire) of approximately 0.1 mm to 0.3 mm, twisting one or a plurality of this assembled wire, and spirally winding this into two coils having a completely identical planar shape that is of an ellipse or oval outer shape, and then connecting the two in series, thus forming an electrically single coil.

A space (cavity) 272 is spontaneously created when forming each of the sub heating coils SC1 to SC4. This space 272 is used to air-cool each of the sub heating coils SC1 to SC4 itself, and the air for cooling supplied from the fan 30 ascends through this space 272. A coil support 290 is integrally formed with a non-metallic material such as thermally stable plastic or the like, has eight arms 290B radially extending from the center point X1, and has an outermost circumferential edge 290C with an annual shape connected to the arms.

When the infrared sensors 31L1 to 31L5 are to be supported, five support portions 290D1 to 290D5 are arranged on the upper side or the lateral side of the arms 290b integrally or as a separate component (see Figs. 9 and 12). Support protrusions 290A are integrally formed on the four arms 290B, among the eight radially extending arms 290B, that face the center portion of the sub heating coils SC1 to SC4. Three support protrusions are interspersed to four locations such that one is provided in the space 272 of the corresponding one of the sub heating coils SC1 to SC4, one of the remaining two is provided nearer to the center point X1 relative to the corresponding one of the sub heating coils SC1 to SC4, whilst the other one is provided on the outside.

Two supporting tongues 290E are integrally formed to each of the four arms 290B that faces the two ends of the sub heating coils SC1 to SC4, on which the two ends of the sub heating coils SC1 and SC4 are placed. The middle portion of the sub heating coils SC1 to SC4 is placed on the top side of the other two arms 290B.

A cylindrical fixing portion 290F is integrally and protrudingly formed on each top side of the supporting tongue 290E. These fixing portions are located in positions corresponding to the two ends of the spaces 272 when the sub heating coils SC1 to SC4 are disposed. With the fixing portions 290F and the support protrusions 290A, three points of the sub heating coils SC1 to SC4, that is, the center portion of the spaces 272 and the inside and outside positions, are positionally controlled. Accordingly, there will be no deformation caused by careless side shifting or by expansion force (typical ones are indicated in Fig. 12 by dot and dash line arrows FU and FI) due to heating.

Note that the reason why the support protrusions 290A and the fixing portions 290F control the positions by partially abutting to the inside and the circumference of each of the sub heating coils SC1 to SC4 without forming a wall (also called a rib) surrounding the whole circumference of each coil is to free the inside and the circumference of the sub heating coils SC1 to SC4 as much as possible so that it becomes a passage for the air for cooling.

As shown in Figs. 12 and 15, the coil support 290 is placed on the top side of the upper case 42A of the cooling duct 42. The coil support 290 is cooled by the cooling air that is blown up from the blow out hole 42C of the cooling duct 42, and the main heating coil MC and the sub heating coils SC1 to SC4 thereabove are cooled so that they do not reach an abnormal temperature due to the heat generation. Accordingly, substantially whole of the coil support 290 is a gridded shape (see Fig. 12) so as to ensure ventilation of air. The magnetic flux leakage prevention materials 73 that are radially disposed relative to the center point X1 partially traverses the passage of the air. Further, the bottom side of the sub heating coils SC1 to SC4 are in an exposed state except for portions that are facing the arms 290B and the supporting tongues 290E, thus heat radiation effect is improved by the exposed portion.

The magnetic flux leakage prevention materials 73 are mounted on the bottom side of the coil supports 290 in a radial state relative to the center point X1. As shown in Fig. 11, each space 273 is provided so that the adjacent sub heating coils SC1 to SC4 does not magnetically interfere with each other when they are energized at the same time. That is, when driving current is distributed to the circular main heating coil MC in an anticlockwise direction when seen from above, driving current is also distributed to the sub heating coils SC1 to SC4 in a clockwise direction. Accordingly, the direction of current will be the same between the current flowing in the main heating coil MC and the current flowing in the sub heating coils SC1 to SC4 on the side that is near the main heating coil. However, the direction of current between two adjacent sub heating coils SC1 to SC4 will be opposite to each other, and, hence, it has been devised to reduce these magnetic interference.

Note that when driving current is distributed to the circular main heating coil MC in a clockwise direction when seen from above, driving current is distributed to the sub heating coils SC1 to SC4 in an anticlockwise direction.

The direction of the driving current is time divisioned and is alternately switched to opposite directions (alternating current).

It is desirable that the size of space 273 between the end portions of the sub heating coils SC1 to SC4 is larger than the space 271. Further, Fig. 11 is not a diagram that illustrates the precise dimensions of the actual product and although it cannot be understood directly from the figure, it is preferable that the transverse dimension, that is along the straight line passing through the center point X1, of the spaces (cavities) 272 of the sub heating coils SC1 to SC4, that is, the width indicated by the arrow in Fig. 11, is larger than the space 271. The above is for reducing the magnetic interference, since the current that flow through the sub heating coils SC1 to SC4 flow in counter directions to each other. Compared to the above, the space 271 may be narrow since cooperative heating is conducted by magnetic coupling.

### (Individual Light Emitting Unit)

Referring to Figs. 9, 11, 13, and 15, individual light emitting units 276 are illuminants that are disposed in four locations interspersed along a concentric circle of the main heating coil MC. Each individual light emitting unit 276 is provided with a light source (not shown) using an electric lamp, organic EL, or light emitting diode (LED) and a light guide that guides light entering from the light source and is driven by a driving circuit 278 shown in Fig. 13.

The light guide may be of synthetic resin including acrylic resin, polycarbonate, polyamide, or polyimide, or a transparent material such as glass. As shown in Fig. 15, the top end side of the light guide is directed towards the bottom side of the top plate 21 and the light from the light source is radiated from the top end side of the light guide as indicated by the dot and dash line in Fig. 15. Note that, as above, an illuminant that emits light in a liner manner in the upwards direction is proposed in Japanese Patent No. 3941812, for example. Emitting or lighting of this illuminant will enable the user to know whether each of the sub coils SC1 to SC4 is in an induction heating operation.

### (Wide Area Light Emitting Unit)

Referring to Figs. 9, 11, 13, and 15, wide area light emitting unit 277 is an annular illuminant that has a maximum outer diameter of DC on a circle that is concentric to that of the individual light emitting units 276, in which the annular illuminant surrounds the outside of the individual light emitting units 276 with a predetermined space 275 in between. This wide area light emitting unit 277 is provided with a light source (not shown) similar to that of the individual light emitting units 276 and a light guide that guides light entering from the light source and is driven by the driving circuit 278 as shown in Fig. 13.

As shown in Fig. 15, the top end side of the light guide of this wide area light emitting unit 277 faces the bottom side of the top plate 21. As indicated by the dot and dash line in Fig. 15, light from the light source is radiated from the top end side of the light guide. With the emitting or lighting of this illuminant, the outer edge portion of the group of sub heating coils SC1 and SC4 and the main heating coil MC can be distinguished.

The position of the guide mark 6LM that is a circle (a solid line in Fig. 1 and 3) displayed on the top plate 21 does not match the position of the individual light emitting units 276.

This is because while the position of the guide mark 6LM substantially corresponds to the outer diameter DA of the main heating coil MC, the individual light emitting units 276 have sizes that surround the sub heating coils SC1 to SC4.

Further, while the position of the circular cooperative heating area mark EM that is displayed on the top plate 21 substantially coincides with the position of the wide area light emitting unit 277, since the cooperative heating area mark EM is formed on the top plate 21 typically by means of print or the like, the top end portion of the wide area light emitting unit 277 is set so as to adjoiningly face a position a few millimeters outside of the cooperative heating area mark EM in consideration of the print or coating of the paint (using a material that does not penetrate most of the visible light). Note that if transparency of the cooperative heating area mark EM is ensured, they may be completely matched.

### (Arrangement of Infrared Sensor)

The infrared sensors 31L include, as shown in Fig. 9, five sensors 31L1 to 31L5. Among them, infrared sensor 31L1 is disposed in the space 270. This temperature sensor 31L1 detects the temperature of the heated object N such as a pan and the like that is placed on the main heating coil MC. On the outside of the main heating coil MC, infrared sensors 31L2 to 31L5 for the sub heating coils SC1 to SC4 are arranged. Each of the infrared sensors is disposed in the corresponding projection-shaped support protrusion 290A formed in the coil support 290.

Note that the infrared sensors 31L2 to 31L5 may not be used in order to exert the function of the placement-of-heated-object determination unit 280, that is, the function determining whether there is a heated object N placed or not, and, alternatively, a light detecting unit (photosensor) may be used. This is because reaching of light from the indoor lighting and light of the natural world such as sunlight from above the top plate 21 can be determined. When there is no heated object N placed, the light detecting portion below the heated object N detects ambient light such as that of an indoor lighting, and accordingly this may be used as determination information indicating that no pan or the like is placed.

Temperature data from each of the temperature sensors 31R, 31L, 241, 242, 244, and 245 is sent to the energization control circuit 200 through the temperature detecting circuit 240. However, the temperature detection data from the infrared sensors (that is, all of the five sensors 31L1 to 31L5) related to the heating coils 6RC and 6LC is input to the placement-of-heated-object determination unit 280.

A ring-shaped metal shielding ring 291 (see Fig. 15) is disposed on the outermost side of the coil support 290. A speaker 316 shown in Fig. 13 is driven by signals from a voice synthesizer 315. This voice synthesizer 315 notifies various information that is displayed on the integrated display device 100 by means of phonetic sound, and notifies information such as heating power, the name of the heat source that is performing heating operation (for example, left IH heat source 6L), elapsed time from the start of cooking, remaining time of the set time of the timer, various detection temperatures, reference information for each type of cooking that is displayed on the guide area (100GD), detection of abnormal operation, improper operation of the user, and the like, including information leading to facilitation of cooking in a desirable state and in a desirable heating position (including the position of the heated object N). Information such as which of the main heating coil MC and the sub heating coils SC are performing heating operation, which will be described later, is included.

### (Operation of Cooking System)

Next, an outline of an operation of the cooking system configured as above will be described.

A basic operation program from activation of power to the start of preparation of cooking is stored in the storage unit 203 (see Fig. 13) in the energization control circuit 200.

The user first connects the power plug to a commercial power supply of 200 V and pushes the operation button 63A (see Fig. 2) of the main power switch 63 to power-up.

Then a predetermined low supply voltage is supplied to the energization control circuit 200 through the voltage stabilizer (not shown) and the energization control circuit 200 is started up. The energization control circuit 200 carries out self-diagnosis with its control program and if there is no abnormality, the motor driving circuit 33 that drives the drive motor 300 of the fan 30 is pre-driven. Further, the left IH heat source 6L, the right IH heat source 6R, and the driving circuit 215 of the liquid crystal display of the integrated display means 100 are each pre-activated.

The temperature detecting circuit 240 in Fig. 13 reads the temperature data detected by each of the temperature detecting elements (temperature sensors) 31R, 31L (unless otherwise specified, in the description hereinafter, including all of the five 31L1 to 31L5), temperature detecting elements 241, 242, 244, and 245 and sends the data to the energization control circuit 200.

As above, since data such as circuit current, voltage, and temperature of the main components are collected to the energization control circuit 200, the energization control circuit 200 carries out determination of aberrant heating as an abnormality monitoring control before cooking. For example, when the surrounding area of the liquid crystal display substrate of the integrated display means 100 is higher than the heatresistant temperature of the liquid crystal screen substrate (for example, 70°C), then it is determined as abnormally high temperature by the energization control circuit 200.

Further the current detection sensor 227 in Fig. 13 detects the current flowing through the resonance circuit 225 that includes the parallel circuit of the right IH heating coil 6RC and the resonant capacitor 224. This detection output is supplied to the input unit 201 of the energization control circuit 200. The energization control circuit 200 compares the obtained detection current of the current detection sensor with the regular current value in the determination reference data that is stored in the storage unit 203, and if an undercurrent or an overcurrent is detected, the energization control unit 200 determines that there is abnormality due to some kind of trouble or defective continuity.

When no abnormality is determined during the above self diagnosis, "preparation to start cooking is completed". However, if abnormality is determined, a predetermined procedure under abnormality is carried out and start of cooking is disallowed (a similar abnormality detection is carried out to the left IH heating coil 6LC).

If no abnormality is determined, displays indicating that heating operation is allowed are displayed in the corresponding areas 100L1, 100L2, 100M1, 100M2, 100R1, 100R2, and 100G of each heat source in the integrated display means 100. Then, a display displaying the user to select a desired heat source and, when induction heating, place the heated object N such as a pan on the desired guide mark 6LM, 6RM, or 7M of the heat source illustrated on the top plate 21 (a voice synthesizer 315 working in association with the integrated display means 100 encourags the user by phonetic sound at the same time). Further, the energization control circuit 200 commands all of the individual light emitting units 276 and the wide area light emitting unit 277 to emit or light in a predetermined color (such as yellow, hereinafter referred to as "pattern 1").

### (Cooking Mode)

Next, a case will be described in which the mode is shifted to a cooking mode after the abnormality monitoring processing before cooking has been completed with an explanatory case in which the right IH heat source 6R is used.

There are two ways to use the right IH heat source 6R, that is, to use the front side operating unit 60 and to use the top side operating unit 61.

### (Starting Cooking with Front Side Operating Unit)

First, a case in which the front side operating unit 60 is used will be described.

The user first turns the right operation dial 64R of the front side operating unit 60 to the left or right (the heating power is set in accordance with the amount turned).

Although not shown, three independent timer dials are provided to the front lower portion of the front side operating frame 62 of the front side operating unit 60. The user sets the timer of the right IH heat source 6R to a certain time period. With this, operating signals are input to the energization control circuit 200 and cooking conditions such as the heating power and the heating time is set by the energization control unit 200.

Next, the energization control circuit 200 drives the driving circuit 228 and drives the right IH heat source circuit 210R (see Fig. 13). Further, the integrated display means 100 is driven by the driving circuit 215 and the cooking conditions such as the heating power and the cooking time is displayed in this display area. The driving circuit 228 applies drive voltage to the gate of the IGBT 225, and, thus, a high-frequency current flows in the right IH heating coil 6RC. However, electrical heating with high heating power is not carried out from the start, but a detection of propriety of the heated object N such as a pan is carried out as below.

The current detection sensor 227 detects the current flowing through the resonance circuit that includes the parallel circuit of the right IH heating coil 6RC and the resonant capacitor 224. This detection output is supplied to the input unit of the energization control circuit 200. Further, when compared with the regular current value, if an undercurrent or an overcurrent is detected due to some kind of trouble or defective conduction, the energization control circuit 200 determines that there is abnormality. The energization control circuit 200 also has a function of determining whether the size of the used pan (heated object N) is appropriate or not in addition to the above type of abnormality detection function.

Specifically, for the first few seconds, a predetermined electric power (1 kW, for example) is distributed to the resonance circuit rather than the heating power (electric power) that the user has set, and the input current value at that time is detected by the current detection sensor 227.

That is, it is known that, when the IGBT 225, which serves as switching means, is driven by the energization control circuit 200 by a driving signal with a predetermined electric power and a same conduction ratio, the current flowing through the portion of the current detection sensor 227, in a case in which a pan (heated object N) with a diameter smaller than the area of the right IH heating coil 6RC is placed on the top plate 21, is smaller than the current flowing through the portion of the current detection sensor 227, in a case in which a pan (heated object N) with a diameter larger than the area of the heating coil 220 is placed on the top plate 21.

Therefore, values of the current flowing through the portion of the current detection sensor 227 when an excessively small pan (heated object N) is placed are provided as determination reference data on the basis of a result derived from an experiment conducted in advance. Accordingly, when an excessively small current is detected by the current detection sensor 227, it can be determined by the energization control circuit 200 that it is used in an abnormal state, and, the process is shifted to the processing route for abnormal processing.

Note that even when the heating power is one that the user has set, for example, if a normal heating state can be maintained by the energization control circuit 200 changing the duty factor to the switching means 225 and by reducing the conduction ratio to a permissible range, then electric power adjusting control processing is carried out automatically. Accordingly, even if a small current value is detected, not all are shifted to the abnormal processing uniformly and unconditionally.

As above, in a state in which determination of the pan (heated object N) is carried out, characters "Detecting Propriety of Heated object" is first displayed in the display area 100R2 of the right IH heat source 6R. Further, a few seconds later, in accordance with the result of the determination of the above abnormal current detection monitoring processing, warning characters such as "Used Pan Too Small" and "Use Larger Pan (with diameter of 10 cm or more)" are displayed when the pan (heated object N) is too small.

When this determination result of the propriety of the pan is generated, the area of the display areas 100R1 and 100R2 of the right IH heat source 6R are enlarged a few times from the states of Fig. 17 and display indicating that the pan (heated object N) is not appropriate is displayed in the display area. When both the left IH heat source 6L and the central electric radiant heat source 7 are not used, the display areas 100R1 and 100R2 of the right IH heat source 6R are enlarged to sizes that cover the display areas 100L1, 100L2, 100M1, and 100M2 of the left IH heat source 6L and the central electric radiant heat source 7.

Subsequently, if the user does not take measures such as exchanging the pan (heated object N), after a certain elapse of time from when the pan (heated object N) had been indicated to be too small in the display area E, while not stopping the energization control circuit 200, the heating operation of the right IH heat source 6R is automatically stopped for a moment.

If the user changes the pan (heated object N) to a larger one, the user will be able to resume cooking once more by carrying out a cooking start operation again.

When it is determined that the pan (heated object N) is adaptable by performing the above pan (heated object N) detection operation, the energization control circuit 200 carries out energization control processing that automatically accommodates power so that the right IH heat source 6R exerts its original set heating power. With this, the heated object N such as a pan or the like becomes high in temperature by the high-frequency magnetic flux from the right IH heating coil 6RC, and thus an electromagnetic induction heat cooking operation (cooking mode) is started.

The direct-current voltage that is obtained by the rectifier bridge circuit 221 and the smoothing capacitor 223 is input to the collector of the IGBT 225 serving as a switching element. The on/off control of the IGBT 225 is performed with the input of the driving signal from the driving circuit 228 to the base of the IGBT 225. By combining the on/off control of the IGBT 225 and the resonant capacitor 224, a high-frequency current is generated in the right IH heating coil 6RC and due to the electromagnetic induction effect caused by this high-frequency current, eddy current is generated in the heated object N such as a pan placed on the top plate 21 that is above the right IH heating coil 6RC. Accordingly, the eddy current that has been generated in the heated object N turns into Joule heat and the heated object generates heat being able to be used for cooking.

The driving circuit includes an oscillator circuit, and the drive signal that is generated by this oscillator circuit is supplied to the base of the IGBT 225 thus carrying out the on/off control of the IGBT 225. By controlling the oscillatory frequency and the oscillatory timing of the oscillator circuit of the driving circuit 228, the conduction ratio and the conduction timing of the right IH heating coil 6RC, and the frequency of the current and the like is controlled. As such, the heating power control of the right IH heating coil 6RC is achieved.

Note that when command stopping the energization of the right IH heat source 6R is issued, the energization of the right IH heat source 6R is stopped; however the operation of the fan 30 is continued for two to five minutes after the stop of the above energization. This will prevent the overshoot problem from happening, which is a rapid increase in temperature due to hot air stagnating around the right IH heating coil 6RC of the right IH heat source 6R immediately after the suspension of the fan 30. Further, this can prevent adverse effects such as temperature increase of the integrated display means 100 from occurring. This time period to continue the operation is determined by the energization control circuit 200 with a predetermined formula and a numerical table corresponding to the state of temperature increase until the stop of energization and conditions such as the indoor temperature and the high/low of the operated heating power of the heat source.

However, the energization of the fan 30 will be also suspended at the same time if it has been determined that the cooling fan itself is malfunctioning (for example, when only the temperature of the cooling fans 43A and 43B are increasing) such as detection of abnormal current of the fan 30.

The liquid crystal display substrate of the integrated display means 100 is heated by the reflected heat from the bottom portion of the heated object N, which is heated during heat cooking with the left and right IH heat source 6L and 6R, and the radiant heat from the top plate 21.

Further, in a case in which a deep fry pan (heated object N) with high temperature after its use is left in the middle portion of the top plate 21, the liquid crystal display substrate will also receive heat from the high temperature (approximately 200°C) pan (heated object N).

Accordingly, in Embodiment 1, the integrated display means 100 is cooled by air from both the left and right sides with the fan 30 to suppress increase in temperature.

When the fan 30 is driven under the above normal operating environment, as shown in Fig. 5, air outside the main body 1 is drawn into the fan case 37 through the suction 37B of the suction tube 37A of the fan case 37. The air that has been drawn in is discharged forward in a horizontal direction from the outlet (exit) 37C with the blades 30F that is rotating in high speed in the fan case 37.

The component case 34 in front of the outlet 37C is connected to the fan case 37 in an adhered manner. Since the air installation port is in an adhered manner and is in communication with the outlet 37C, air from the fan 30 is sent so as to increase the inner pressure (static pressure) inside the component case 34 and the outlet 37C. A portion of the cooling air that has been sent in is discharged from the first outlet 34A that is provided on the top side of the component case 34 on the side near to the outlet 37C.

The temperature of the discharged air is substantially the same as that of the air that has exited the outlet 37C since it has not cooled any high-temperature heating element or heat generating electric parts on the way and is still fresh air as it has been.

Further, the air for cooling that has been sent into the ventilation space 42F of the cooling duct from the first outlet 34A is blown out upwards from the blow out hole 42C, as indicated by arrow Y3 in Figs. 5 and 7, impinges on the bottom side of the right IH heating coil 6RC that is immediately above, and cools the coil effectively. Note that when the right IH heating coil 6RC is partially shaped with a space that allows air for cooling to penetrate therethrough as above, the cooling air from the first outlet 34A also penetrates through this space so as to cool the coil.

Meanwhile, the cooling air that has been sent into the component case 34 from the fan 30 with some pressure is not directed to the surface of the circuit board 41 and, also, does not flow near the surface. Since the cooling air flows mainly through the portion of the radiation fins 43A and 43B that is a structure protruding out to the surface (one side) of the circuit board 41 and through and between multiple heat exchanging fin elements, the radiation fins 43A and 43B are mainly cooled.

Further, among the cooling air that has been pushed out from the outlet 37C (arrow Y2 in Fig. 5), the main stream, which is the portion with the fastest velocity, flows out of the outlet 37C to the front in a straight line and is blown out from the second outlet 34B that is provided in the component case 34 in a position on the most downstream side of the cooling air, as indicated by arrow Y4 in Fig. 5. Since this second outlet 34B has an opening area that is a few times larger than that of the first outlet 34A, the greater part of the cooling air that has been pushed into the component case 34 from the outlet 37C is blown out from this second outlet 34B.

Furthermore, the cooling air that has been blown out is guided to the ventilation spaces 42G and 42H of the cooling duct 42 and the greater part of the cooling air is blown out from the blow out holes 42C that is formed in plural numbers on the top side of the upper case 42A, as indicated by arrows Y4 and Y5 in Fig. 7, impinges on the bottom side of the right IH heating coil 6RC that is immediately above, and cools the coil effectively.

A portion of the cooling air that has been guided into the ventilation space 42H of the cooling duct 42 is guided into the front component case 46 that houses each of the light emitting elements (LEDs) of the right heating power indicating lamp 101R and left heating power indicating lamp 101L that indicates by means of light various electrical and electronic components 56 and the heating power during induction heat cooking. Specifically, the cooling air of the fan 30 enters the ventilation space 42H of the cooling duct 42 from the second outlet 34B of the component case 34, passes through the vent hole 42K of the cooling duct 42 formed in correspondence with the ventilation space 42H, and enters the vent hole 46R or 46L (see Fig. 4) of the lower duct 46A that is positioned so as to adhere immediately above the vent hole 42K.

With the above, the cooling air that has entered the front component case 46 first cools the liquid crystal display screens 45R and 45L (see Fig. 4) from below, and, then, in the course of being discharged from the notch 46c into the upper portion component chamber 10 while flowing in the front component case 46, the built-in components and the like are sequentially cooled including sequentially cooling with the cooling air the liquid crystal display screens 45R and 45L, integrated display means 100, mounting substrate 56 that mounts thereon various electrical and electronic components, and the light emitting elements of the right heating power indicating lamp 101R and left heating power indicating lamp 101L that indicates by means of light the heating power during induction heat cooking.

In particular, since the cooling air that has been guided into the front component case 46 is not air that has cooled the left and right IH heating coils 6LC and 6RC that become high in temperature during the induction heating operation, the temperature thereof is low and even though with a small volume of cooling air, the liquid crystal display screens 45R and 45L and the integrated display means 100 are continuously cooled so as to effectively suppress the increase of temperature.

As shown in Figs. 2, 3, 5, and 6, the cooling air that has been blown out from multiple blow out holes 42C of the cooling duct 42 flows in the upper portion component chamber 10 towards the back as indicated by arrows Y5 and Y6. The flow of the cooling air merges with the cooling air that has been discharged from the notch 46C into the upper portion component chamber 10, flows into the rear exhaust hood 12 that is opened to the outside in the main body A, and is ultimately discharged from the rear exhaust hood 12 as shown by arrow Y9 (see Fig. 2).

### (Starting Cooking with Top Side Operating Unit)

Next, a case in which the top side operating unit 61 (see Fig. 3) is used will be described.

Since the energization control circuit 200 is already activated and the driving circuit 215 (see Fig. 13) of the liquid crystal display of the integrated display means 100 is pre-activated, input keys for selecting all of the heat sources are displayed on the liquid crystal display of the integrated display means 100. Here, when an input key (either one of 143 to 145 that are shown in Fig. 1 or 17 will be the key) that selects the right IH heat source 6R among the above keys is pressed, the area of the corresponding area 100R (100R1 for heating power and 100R2 for time period) of the right IH heat source 6R of the liquid crystal display is automatically enlarged, and further, in this state, the input keys 142 to 145 are displayed with input functions switched so as to correspond to the situation, and by successively operating the displayed input keys, cooking conditions such as the type of cooking (also known as menu, for example, Tempura, boiling water, stew, keeping the food warm, etc.), the level of heating power, and the heating time are set.

Further, when at a stage in which the desired cooking conditions are set, the input key 146 displays characters "SET" as shown in Fig. 16. The inputting of the cooking conditions is set by touching this.

Furthermore, as described above, the energization control circuit 200 performs determination processing of the propriety of the pan. When it is determined that the pan (heated object N) is adaptable, the energization control circuit 200 carries out energization control processing that automatically accommodates power so that the right IH heat source 6R exerts a predetermined heating power that the user has set. With this, the pan, which is the heated object N, becomes high in temperature by the high-frequency magnetic flux from the right IH heating coil 6RC, and thus an electromagnetic induction heat cooking operation (cooking mode) is started.

### (Cooking with One-touch Setting)

In the right heating power setting operating unit 70, one-touch setting keys 90, each for a heating power, are provided that facilitates the setting of the heating power of the right IH heat source 6R with a push of a button by the user. Since three one-touch keys are provided, namely, a low heating power key 91, a middle heating power key 92, and a high heating power key 93, the heating power can be input with one operation by pushing the low heating power key 91, the middle heating power key 92, the high heating power key 93, or the 3 kW key 94, without the need to operate the input key of the integrated display means 100 via at least one menu screen. Note that cooking using the left IH heat source 6L can be started with the same operation as above.

### (Starting Cooking with Grill Heating Chamber)

Next, a case in which the electric radiant heat sources 22 and 23 (see Fig. 6) of the grill heating chamber 9 are energized will be described. Cooking with this can be carried out while the right IH heat source 6R and the left IH heat source 6L are heat cooking; however, a limiting program with an interlock function is embedded in the energization control circuit 200 so that cooking cannot be carried out with the central electric radiant heat source 7 at the same time. This is because the above will exceed the limit of the rated power of the whole cooking system.

There are two ways to start various cooking in the grill heating chamber 9, which are using the input key displayed on the liquid crystal display of the integrated display means 100 in the top side operating unit 61 and pushing the operation button 95 (see Fig. 16) for the electric radiant heat sources 22 and 23.

In either way, various cooking can be carried out in the grill heating chamber 9 by energizing the electric radiant heat sources 22 and 23 at the same time or separately. By receiving information from a temperature sensor 242 and a temperature control circuit 240, the energization control circuit 200 controls the energization of the electric radiant heat sources 22 and 23 so that the ambient temperature inside the grill heating chamber 9 becomes a target temperature, which is set in the energization control circuit 200 in advance, and after an elapse of a predetermined time from the start of the cooking, notifies it (display by the integrated display means 100 or a notification by the voice synthesizer 315), and ends the cooking.

Due to heat cooking with the electric radiant heat sources 22 and 23, hot air with high temperature is generated inside the grill heating chamber 9. Accordingly, the internal pressure of the grill heating chamber 9 naturally increases and air naturally ascends in the exhaust duct 14 from the outlet 9E at the back. In the course of the above, the odor component in the exhaust is decomposed by the deodorizing catalyst 121 that has become high in temperature with energization of the electric heater 121H for the catalyst by the heater driving circuit 214 for driving.

Meanwhile, since the exhaust purpose auxiliary axial flow fan 106 is provided midway of the exhaust duct 14, regarding the hot air that is ascending the exhaust duct 14, by operating the fan 106 and taking in air inside the main body A into the exhaust duct 14, as indicated by arrow Y7 (see Fig. 6), the high-temperature air in the grill heating chamber 9 is induced to this fresh air and is exhausted, as indicated by arrow Y8, from the upper end opening 14A of the exhaust duct 14 while decreasing its temperature.

As above, with the exhaust stream of the upper end opening 14A (see Fig. 6) of the exhaust duct 14, the air in the rear exhaust hood 12 adjacent to the upper end opening 14A is induced and discharged to the outside. That is, the air in the space 26 between the grill heating chamber 9 and the horizontal partition plate 25 and the air in the upper portion component chamber 10 are also discharged together through the rear exhaust hood 12.

Next, operation in a case in which the left IH heat source 6L (see Fig. 6) is used in heat cooking will be described. Note that, same as the right IH heat source 6R, the left IH heat source 6L shifts to cooking mode after the abnormality monitoring processing before cooking has been completed and there are two ways to use the left IH heat source 6L, that is, to use the front side operating unit 60 (see Fig. 2) and to use the top side operating unit 61 (see Fig. 3). In the below description, description will be given from the stage in which energization to the left IH heating coil 6LC (see Fig. 2) is started and cooking is started.

In the cooking system of the invention, when an elliptical or a rectangular pan (heated object N) that has a pan bottom diameter greatly larger than the maximum outer diameter DA (see Fig. 9) of the main heating coil MC is used, the elliptical heated object N is heated with the main heating coil MC and can further be heated cooperatively with the sub heating coils SC1 to SC4.

For example, it is assumed that there is an elliptical pan (heated object N) that extends over both the main heating coil MC and a single sub heating coil SC1 that is on the right of the main heating coil MC.

When such an elliptical pan (heated object N) is placed and heat cooking is started, the temperature of the elliptical pan (heated object N) increases. Both the infrared sensor 31L1 (Fig. 9) of the main heating coil MC and the infrared sensor 31L2 of the sub heating coil SC1 detects a phenomenon indicating that the input of the ambient light (light of the indoor light and sunlight) is smaller compared to those of the other infrared sensors 31L3, 31L4, and 31L5 and that the temperature is on the rise. Based on these information, the placement-of-heated-object determination unit 280 determines that an elliptical pan (heated object N) exists.

Further, basic information to determine whether the same single heated object N is placed above is input to the placement-of-heated-object determination unit 280 (see Fig. 13) from the current sensor 227 of the main heating coil MC and the current sensors 267A to 267D (see Fig. 14) of each of the sub heating coils SC1 to SC4. By detecting the current change, the placement-of-heated-object determination unit 280 detects the impedance change of the main heating coil MC and the sub heating coils SC. The energization control circuit 200 issues a command signal to drive the inverter circuit MIV of the main heating coil MC on which the elliptical pan (heated object N) is placed and each inverter circuit SIV1 to SIV4 of the sub heating coils SC1 to SC4, distribute high-frequency current to at least one of the sub heating coils among the four sub heating coils SC1 to SC4 that is placed with the elliptical pan (heated object N), and suppress or stop distributing high-frequency current to one or some of the remaining sub heating coils that is not placed with the elliptical pan (heated object N).

For example, when the placement-of-heated-object determination unit 280 determines that the same singular elliptical pan (heated object N) is placed above the main heating coil MC and a single sub heating coil SC1, the energization control circuit 200 operates only the main heating coil MC and the specific sub heating coil SC1 to work in association with each other and provides the high-frequency power to the two heating coils in a heating power rate set in advance from respective inverter circuits MIV and SIV1 (the heating power distribution will be described later in detail). Here, the "heating power rate" refers to distribution performed by the energization control circuit 200, in a case, for example, in which 2.4 kW is distributed to the main heating coil MC and 600 W to the sub heating coil SC2 when the user starts cooking with the left IH heat source 6L with a heating power of 3 kW. Further, only the individual light emitting unit 276 (see Fig. 9) that is positioned outside the sub heating coil SC1 is changed from a yellow light emitting state (pattern 1) to a red light emitting state (hereinafter, referred to as "pattern 2"). The driving circuit 278 (see Fig. 13) drives the individual light emitting unit 276, and a predetermined light source (red lamp, LED, etc.) in the individual light emitting unit 276 is emitted or lighted and the yellow light source that had been emitted or lighted until then is turned off. Accordingly, only the activated sub heating coil SC1 is displayed with a red light belt so as to be visible from above the top plate 21. The emitting of the individual light emitting units 276 corresponding to the other sub heating coils are stopped.

This sub heating coil SC1 cannot be driven alone to perform induction heat cooking and the other three sub heating coils SC2, SC3, and SC4 cannot perform induction heat cooking by itself or by combination. In other words, the feature is such that one or some of the four sub heating coils SC1, SC2, SC3, and SC4 that are disposed around the main heating coil MC are only heated and driven when the main heating coil MC is driven.

Further, when such cooperative heating is carried out, the energization control circuit 200 supplies high-frequency power from the dedicated inverter circuits MIV and SIV1 to the main heating coil MC and the specified sub heating coil SC1 in proportion with the heating power rate set in advance to carry out a heating operation. Based on this information, the energization control circuit 200 issues a driving command to the driving circuit 278 (see Fig. 13) and the individual light emitting unit 276 is, as mentioned above, from when the cooperative heating has been started, made to emit light so that the sub heating coil SC1 that is carrying out the cooperative heating can be identified.

Further, in Embodiment 1, the individual light emitting unit 276 is emitted or lighted as a means of displaying the cooperative heating. That is, the user can recognize that a state of cooperative heating has been entered when the individual light emitting unit 276 is changed from the initial yellow light emitting state (pattern 1) to the red light emitting state ("pattern 2").

Note that rather than this displaying pattern, the integrated display means 100 may directly display characters on the liquid crystal display screen as shown in Fig. 18.

Note that the wide area light emitting unit 277 (see Fig. 9, 11, and 15) is driven by the driving circuit 278 (see Fig. 13) from the stage in which the abnormality determination is completed after the power is activated by the user pushing the operation button 63A (see Fig. 2) of the main power switch 63. Since it is first emitted or lighted in yellow, it will be possible to guide the user the placing position from the stage in which the elliptical pan (heated object N) is placed above the left IH heat source 6L. At the stage in which the heating operation is started by supply of high-frequency power for heating to the main heating coil MC, the energization control circuit 200 changes the luminescent color of the wide area light emitting unit 277 (for example, changing the ones that were yellow to red). For example, the emitting or lighting of the yellow light source (lamp, LED, etc.) in the wide area light emitting unit 277 is stopped and, alternatively, the emitting or lighting of the red light source (lamp, LED, etc.) that is disposed next to the yellow light source may be started or a polychromatic light source (three color LED and the like) may be used to change the luminescent color.

Further, even when the elliptical pan (heated object N) is temporarily lifted up or shifted to the left or right for a predetermined time t (a few seconds to about 10 seconds), the energization control circuit 200 maintains the heating operation and does not change the emitting or lighting status of the wide area light emitting unit 227 and keeps on displaying the preferable position to place the elliptical pan (heated object N) to the user. At this point, when the elliptical pan (heated object N) is lifted up for more than the predetermined time t, the placement-of-heated-object determination unit 280 determines that there is no elliptical pan (heated object N) and outputs this to the energization control circuit 200. On the basis of the discrimination information from the placement-of-heated-object determination unit 280, the energization control circuit 200 issues a command temporarily reducing or stopping the heating power of the induction heating until the elliptical pan (heated object N) is placed once more. In this case, while the preferred place to place the elliptical pan (heated object N) is kept displayed to the user, the emitting or lighting state (lighting color, and the like) of the wide area light emitting unit 277 may be changed in accordance with the state of the heating power. For example, when in a state in which the heating power is lowered, it may be emitted or lighted in orange, and when stopped, emitted or lighted in yellow. Accordingly, it will be possible to display the preferable place of placement, as well as notifying the state of the heating power to the user.

Further, when the elliptical pan (heated object N) is shifted to the left, for example, the placement-of-heated-object determination unit 280 determines that the same singular elliptical pan (heated object N) is placed above the main heating coil MC and the sub heating coil SC2 on the left side, and, based on the discrimination information from the placement-of-heated-object determination unit 280, the energization control circuit 200 operates only the two, that is, the main heating coil MC and the specific sub heating coil SC2, to work in association with each other and provides the high-frequency power to the two heating coils in a heating power rate set in advance from respective inverter circuits MIV and SIV2. Further, the energization to the sub heating coil SC2 on the left side is stopped. The "heating power" (for example 3 kW) and the heating power distribution (for example, when attempting to cook with a heating power of 3 kW with the left IH heat source 6L, the main heating coil MC will have a heating power of 2.4 kW and the sub heating coil SC1 will have a heating power of 600 W, so it will be 4:1) that are already performed are maintained and cooking is continued. The integrated display device 100 maintains the display of the heating power of 3 kW by means of numbers and letters.

Further, since the sub heating coil SC1 is not contributing to the cooperative heating any more, and alternatively, since a different sub heating coil SC2 has been added to the cooperative heating operation, high-frequency power is supplied to the dedicated inverter SIV2. That is, when the energization control circuit 200 detects that the sub heating coil SC1 has been switched to the sub heating coil SC2 on the basis of the discrimination information from the placement-of-heated-object determination unit 280, the energization control circuit 200 issues a driving command to the driving circuit 278. It is commanded so that the sub heating coil SC2 performing cooperative heating can be identified with the individual light emitting unit 276. That is, the energization control circuit 200 makes the driving circuit 278 drive the individual light emitting unit 276 such that the individual light emitting unit 276 on the outside position (left side in Fig. 9) of the relevant sub heating coil SC2 alone is emitted or lighted. Accordingly, the specified light source (red lamp, LED, etc.) in the individual light emitting unit 276 is emitted or lighted (with pattern 2) and the red light source that has been emitted or lighted until then at a position adjoining the sub heating coil SC2 is turned off.

Note that the direction of the high-frequency current IA flowing in the main heating coil MC and the high-frequency current IB flowing in each of the sub heating coils SC1 to SC4 are preferably the same on their adjacent sides, as shown in Fig. 11, from the view point of heating efficiency (Fig. 11 illustrates a case in which they are in agreement while the main heating coil MC has a flow in the counterclockwise direction and each of the four sub heating coils has a flow in the clockwise direction). This is because, in an area where two independent coils are adjacent to each other, when the currents of the coils flow in the same direction, the magnetic fluxes generated by the currents intensifies each other, the density of the magnetic flux that interlink with the heated object N is increased, and more eddy current is generated on the bottom side of the heated object; hence, efficient induction heating is enabled. The loops illustrated by broken lines in Fig. 15 shows magnetic flux loops when high-frequency currents with opposite flow directions with that of the high-frequency currents IA and IB shown in Fig. 11 are made to flow. With this magnetic flux loop, eddy current that flows in the opposite direction to the high-frequency current is generated on the bottom side of the heated object N, and Joule heat is generated. When the main heating coil MC and the sub heating coils SC1 to SC4 are disposed close to each other and when the currents are made to flow in opposite directions, the alternating magnetic fields generated by the coils interfere with each other in a certain adjoining area and as a result restricts the amount of pan current (the current flowing in the heated object N) generated by the main heating coil MC and the sub heating coils SC1 to SC4 from becoming large and the calorific value that becomes large proportional to the square of this pan current is curbed. However, this creates a different advantage. That is, in the adjacent area described above where the magnetic flux density becomes high, since the magnetic flux density can be suppressed to a low density, in a wide area planarly covering the main heating coil MC and one or more sub heating coils SC1 to SC4 performing cooperative heating, the distribution of the magnetic flux that interlink with the heated object N can be equalized, that is, can be uniformized, thus providing an advantage when cooking in a wide heating region. Accordingly, the invention is not limited to the method in which the current is made to flow in the same direction in each area where the heating coil MC and each of the sub heating coils SC1 to SC4 are adjacent to each other. A control operation may be adopted in which the directions of the currents are switched or selected to be the same or, on the other hand, switched or selected to be opposite to each other depending on the heating target or the cooking menu. Note that the direction of each magnetic loop shown in Fig. 15 is determined by the directions of the high-frequency currents IA and IB flowing in the heating coils.

Figs. 19 to 21 illustrates a flowchart of a control operation according to Embodiment 1 of the invention.

The control program of this flowchart is stored in the storage unit 203 (see Fig. 13) that is inside the energization control circuit 200.

Referring to Fig. 19, when starting cooking, first, the operation button of the main power switch 63 provided in the front side operating unit 60 of the main body A of the cooking system, illustrated in Fig. 1, is pushed and turned on (step 1, hereinafter, "step" will be abbreviated as "ST"). Accordingly, electric power of a predetermined voltage is supplied to the energization control circuit 200, and the energization control circuit 200 itself checks whether there is any abnormality in the entire cooking system (ST2). The energization control circuit 200 carries out self-diagnosis with its control program and if there is no abnormality, the motor driving circuit 33 (see Fig. 13) that drives the drive motor 300 of the fan 30 is pre-driven. Further, the driving circuit 215 of the liquid crystal display of the left IH heat source 6L and the integrated display means 100 are each pre-activated (ST3).

Then, as the result of the abnormality determination processing (ST2), if no abnormality is detected, the process proceeds to ST3. On the other hand, if abnormality is detected, the process proceeds to predetermined abnormal processing and, ultimately, the energization circuit 200 itself turns the electric power off and stops.

When the process proceeds to ST3, the energization circuit 200 controls the driving circuit 278 so that all of the individual light emitting units 276 and the wide area light emitting unit 277 are emitted or lighted at the same time (yellow color, pattern 1). Note that either one of the individual light emitting units 276 and the wide area light emitting unit 277 may be first emitted or lighted, then, a different light emitting unit may be emitted or lighted, and thus, by gradually increasing the number of light emitting units, all of the individual light emitting units 276 and the wide area light emitting unit 277 may be emitted or lighted. Then, in the above state in which all of the individual light emitting units 276 and the wide area light emitting unit 277 are emitted or lighted (with pattern 1), command from the user is awaited. Note that all of the individual light emitting units 276 and the wide area light emitting unit 277 are in a state in which yellow light is continuously emitted (ST3A).

Then, as mentioned above, since there are IH heating sources 6L and 6R on the left and right side, respectively (see Fig. 3), the user selects either one with the front side operating unit 60 or the top side operating unit 61 (ST4). Here, when the left IH heat source 6L is selected, the result of the selection is displayed in the corresponding area 100L1 for the left IH heat source 6L in the integrated display means 100. As shown in Fig. 18, the area of the corresponding area 100L1 is automatically enlarged, and this area is maintained for a certain time period (when other heat sources, such as the right IH heat source 6R, are not in operation, then, this enlarged area of L1 is kept as it is until cooking is completed). Subsequently, it is detected whether there is a pan (heated object N) above the selected heating coil 6LC. This detection is carried out by the placement-of-heated-object determination unit 280.

When the energization control circuit 200 determines that a pan (heated object N) is placed on the basis of the detection information of the placement-of-heated-object determination unit 280 (ST5), the energization control circuit 200 determines if the pan (heated object N) is appropriate for induction heating (ST6). This determination is carried out on the basis of discrimination information from the placement-of-heated-object determination unit 280. The placement-of-heated-object determination unit 280 discriminates the heated object N, such as a pan (heated object N) that has a markedly small diameter and a pan (heated object N) in which its bottom is greatly deformed or bent, on the basis of the difference in their electrical characteristics, and outputs the discrimination result as discrimination information.

Further, on the basis of the discrimination information from the placement-of-heated-object determination unit 280, the energization control circuit 200 performs determination processing of whether the pan (heated object N) is appropriate in ST6, and when it is determined to be appropriate, the procedure proceeds to ST7 that is a step starting the heating operation. The set heating power (for example, one of the nine levels, from 120 W for the minimum heating power "heating power 1" to 2.5 kW for the "heating power 8", and 3 kW for the "maximum heating power") is displayed in the corresponding area 100L1 of the left IH heat source 6L of the integrated display means 100. Note that the heating power may initially be set to a predetermined heating power, such as a middle heating power (for example a heating power 5 of 1 kW) as a default setting, allowing cooking to be started with this initially set heating power without the user having to set the heating power. In Fig. 18, the heating power is displayed by characters in two ways, namely, "maximum" and"3 kW".

Further, if inappropriate, since the display means such as the integrated display means 100 is already operating at this stage, the energization control circuit 200 makes the integrated display means 100 display that the pan (heated object N) is inappropriate, and at the same time, makes the voice synthesizer 315 output this as message information and the speaker 316 to notify this by output of phonetic sound.

As above, when either one of the left or right IH heat sources 6L and 6R is selected, since cooking is started automatically based on the preset heating power, there is no need to issue a new cooking start command with the input key, the dial, the operation button, or the like.

When the heating operation is started in ST7A with the left IH heat source, induction heating is carried out with the main heating coil MC and the sub heating coils SC1 to SC4 that constitute the left IH heat source 6L. In ST5, detection is carried out whether the pan (heated object N) is only on the main heating coil MC or, further, in addition to that, on which sub heating coils SC1 to SC4 the pan is placed. If the pan (heated object N) is placed only on the main heating coil MC, it will be induction heating with the main heating coil MC alone, and if the same pan (heated object N) is also on at least one of the sub heating coils SC1 to SC4, it will be cooperative heating with the main heating coil MC and the at least one of the sub heating coils SC. The above determination processing is carried out in ST8.

In the case of cooperative heating, under the control of the energization control circuit 200, cooperative heating is started by supplying high-frequency current to the sub heating coils SC1 to SC4 involved in the heating and the main heating coil MC from the corresponding inverter circuits MIV and SIV1 to SIV4 (ST9). Further, with the control command from the energization control circuit 200, the illumination pattern of the wide area light emitting unit 277 is changed from the emitting or lighting state of yellow (pattern 1) to the emitting or lighting state of red (pattern 2) (ST10). Note that the change may be such that while the same color as ST3A is emitted or lighted, the emitting or lighting is performed in an intermittent manner so that it looks as if it is flashing to the user or may be such that the brightness of the emitting or lighting is increased. Either corresponds to changing the pattern and switching of the invention.

Further, the energization control circuit 200 outputs to the integrated display means 100, for example, information indicating that the main heating coil MC and the sub heating coil SC1 are in the midst of cooperative heating along with information on the heating power. Accordingly, the corresponding areas 100L1 and L2 of the integrated display means 100 displays that SC1 is the sub heating coil that has started the heating operation by means of characters and graphics. In Fig. 18, a display example "main coil and left sub coil simultaneously heating" is illustrated by characters. Note that since this display section is in the corresponding area L1, heating power information "heating power: maximum 3kW" is adjacently displayed. That is, the display position of the heating power and the position displaying information on the cooperative heating operation are positioned adjacently. Here, CM corresponds to information indicating that cooperative heating operation is performed. Further, the energization control circuit 200 outputs the same information to the voice synthesizer 315 as well. With this, the voice synthesizer 315 creates phonetic sound information such as "sub heating coil on the left is also carrying out heating" and outputs this from the speaker 316 such that notification of the above massage is carried out by phonetic sound at the same time as the display.

Note that other than keeping the emitting or lighting state of the wide area light emitting unit 277, the individual light emitting unit 276 provided to each of the sub heating coils SC1 to SC4 may be simultaneously emitted or lighted, as shown in Fig. 11, so that the user can visually identify the sub heating coils SC1 to SC4 that are involved in the cooperative heating, for example.

Further, the processes ST8 to ST10 are repeated in a short cycle of a few seconds until there is a heat-cooking stop command from the user. Even if the sub heating coil SC1 on the right side is temporarily involved in the cooperative heating, there are cases in which the placed position of the pan (heated object N) is changed by unintentional or intentional slight shifting of the pan (heated object N) in all directions by the user during cooking. Hence, in ST8 that is the cooperative heating determination step, the processing of specifying the sub heating coils SC1 to SC4 that is to be actually driven is carried out constantly by the energization control circuit 200 obtaining information of the placement-of-heated-object determination unit 280 and the temperature sensors 31L1 to 31L5.

On the other hand, if it is determined that cooperative heating is not to be performed in ST8, the energization control circuit 200 controls the main inverter circuit MIV such that the main heating coil MC alone is driven. Accordingly, high-frequency current is supplied from the inverter circuit MIV to the main heating coil MC and independent heating is started (ST11). Then, the individual light emitting unit 276, which radiates light to the outer circumferential edge of the heating area corresponding to the main heating coil MC that is involved in the independent heating, is changed from the state in which yellow light is emitted or lighted (pattern 1) to the state in which red light is emitted or lighted (pattern 2) (ST12). Note that the change may be such that while the same color as ST3 is emitted or lighted, the emitting or lighting is performed in an intermittent manner so that it looks as if it is flashing to the user or may be such that the brightness of the emitting is increased. Either corresponds to changing the form and switching of the invention. Note that other than keeping the emitting or lighting state of the individual light emitting units 276, the emitting or lighting of the wide area light emitting unit 277 may be continued but also may be turned off. Then the process proceeds to step 13.

Subsequently, when a heat-cooking stop command is sent from the user or when it is determined by the energization control circuit 200 that a certain set time has elapsed (time is up) during cooking with the timer, the energization control circuit 200 controls the main inverter circuit MIV and the sub inverter circuits SIV1 to SIV4 and stops the energization of the main heating coil MC and all of the sub heating coils SC1 to SC4 that has been heat driven at that time. Further, in order to alert that the temperature of the top plate 21 is high, the energization control circuit 200 allows a high-temperature notifying operation to be started which is done by flashing all of the wide area light emitting unit 277 and the individual light emitting units 276 in red (ST14).

The high-temperature notifying operation is continued after the energization of the main heating coil MC and the sub heating coils SC1 to SC4 are stopped until a certain time that has been set in advance (for example, 20 minutes) elapses or until the detection temperature data from the temperature detecting circuit 240 indicates that the temperature of the top plate 21 has dropped to, for example, 50°C (due to natural heat radiation, it normally takes 20 minutes or more). The above determination of the temperature drop or elapse of time is performed in ST15 and if the high-temperature notifying condition is satisfied, the energization control circuit 200 ends the high-temperature notification and the operation of the cooking system is ended (subsequently, the electric power switch is automatically tuned off. That is, when the power switch had been turned ON, power has been supplied to a relay (not shown) for maintaining the power switch ON. This power supply is shut off, and the relay is turned OFF; hence, the power switch is also turned OFF automatically).

Note that the energization control circuit 200 synchronizes with the start of the high-temperature notifying operation ST14, and displays a warning text "Do not touch the top plate, the top plate is still high in temperature" or a graphic indicating this on the liquid crystal screen of the integrated display means 100. Note that in the vicinity and neighbor of the integrated display means 100, a separate display may be provided that displays with LEDs characters "Caution High Temperature" that stand out on the top plate 21, and this may further notify the high temperature.

As configured as above, in Embodiment 1, after the start of energization of the heating coil and before the induction heating operation substantially starts, it is possible to inform the user all of the heating region by means of emitting or lighting of the individual light emitting units 276 and the wide area light emitting unit 277. Then, since the emitting or lighting state of the individual light emitting units 276 and the wide area light emitting unit 277 can be visually confirmed by the user after the selection of the heat source by the user and the start of the heating operation, even in the preparation state before placing the pan (heated object N), the optimum position to place the pan (heated object N) can be understood, and thus provides the user with high usability.

Further, since the high-temperature notification is performed by using the individual light emitting units 276 and the wide area light emitting unit 277, a cooker with high safety can be provided without increasing the parts count.

An operation in a case where the sub heating coil performing the cooperative heating operation is switched from SC1 to SC2 after the illumination pattern of the wide area light emitting unit 277 has been changed from the emitting or lighting state of yellow (pattern 1) to the emitting or lighting state of red (pattern 2) (ST10) will be described subsequently with reference to Fig. 20.

As mentioned above, when the user moves the elliptical pan (heated object N) on the top plate 21 to the left, for example, the placement-of-heated-object determination unit 280 determines that a same single elliptical pan (heated object N) is placed on the main heating coil MC and the sub heating coil SC2 on the left side and outputs this discrimination information to the energization control circuit 200. When the energization control circuit 200 detects this on the basis of the discrimination information from the placement-of-heated-object determination unit 280 (ST10A), the sub inverter circuit SIV1 corresponding to the sub heating coil SC1 is stopped, and the main inverter circuit MIV and the sub inverter circuit SIV2 are controlled such that only the main heating coil MC and the specific sub heating coil SC2 on the left side work in association with each other. As such, high-frequency power is supplied to the two heating coils MC and SC2 in a heating power rate set in advance from respective inverter circuits MIV and SIV2. Further, the energization to the sub heating coil SC1 on the right side is stopped. The undergoing "heating power" (for example 3 kW) and the heating power distribution (for example, when attempting to cook with a heating power of 3 kW with the left IH heat source 6L, the main heating coil MC will have a heating power of 2.4 kW and the sub heating coil SC1 will have a heating power of 600 W, so it will be 4:1) are maintained and cooking is continued. The integrated display device 100 maintains the display of the heating power of 3 kW by means of numbers and letters (ST10B).

Further, the corresponding area 100L1 of the integrated display means 100 displays that the sub heating coil that is performing the heating operation has been switched from SC1 to SC2 by means of characters and graphics (see Fig. 18). Note that this can be displayed in the corresponding area 100L2.

In ST10C, which is the next step, unless the user changes the heating power settings, the processes ST8 to ST10 is repeated until there is a heat-cooking stop command from the user. When a heat-cooking stop command is sent from the user or when it is determined by the energization control circuit 200 that a certain set time has elapsed (time is up) during cooking with the timer, the process jumps to ST14 in Fig. 19, and the energization control circuit 200 stops the energization of the main heating coil MC and all of the sub heating coils SC1 to SC4 that has been heat driven at that time and ends the process (ST14 to ST16).

The end of the heating operation is displayed in the corresponding area 100L1 of the integrated display means 100. Further, unless the user has turned off the switch (not shown) of the voice synthesizer 315, similar to ST10, the end of the operation is notified by phonetic sound at the same time. Note that although the control program has been described with a sequential flowchart in Figs. 19 to 21, the determination processing of abnormality (ST2), determination processing of whether a pan is placed or not (ST5), determination processing of appropriateness of the pan (ST6), and the like are provided as subroutines. Further, interrupt handling is performed such that the main routine that determines the heating control operation is interrupted by the subroutine at appropriate timings. In actuality, abnormality detection and detection of placement of a pan are executed a number of times during induction heat cooking.

A case in which the user changes the heating power settings in step ST10C will be described.

The induction cooking system according to Embodiment 1 of the invention includes a main heating coil MC heating a heated object N placed on a top plate 21; a group of sub heating coils SC including a plurality of sub heating coils SC1 to SC4 each disposed adjacent to the outside of the main heating coil; a main inverter circuit MIV supplying a high-frequency current to the main heating coil MC; a group of sub inverter circuits SIV1 to SIV4 independently supplying the high-frequency current to each of the plurality of sub heating coils of the group of sub heating coils; a placement-of-heated-object determination unit 280 determining whether the same heated object N is placed above the main heating coil and the first or sub heating coils; input units 64R, 64L, 70, 71, 72, 90, 94, and 142 to 145 that are operated by the user setting a heating power during induction heating; an integrated display means 100 on which the setting information of the input unit is displayed; and an energization control circuit 200 controlling, on the basis of the setting information of the input unit, output of each of the main inverter circuit MIV and the group of sub inverter circuits SIV1 to SIV4 independantly as well as controlling the integrated display means. On the basis of information from the placement-of-heated-object determination unit 280, when a cooperative heating operation is started with the main heating coil MS and the group of sub heating coils SC, the energization control circuit 200 controls the output of the main inverter circuit MIV and the output of the group of sub inverter circuits SIV1 to SIV4 to become a predetermined distribution such that a cooperative heating operation with a heating power value set by a user is obtained, and when in a state in which one or some of the sub heating coils SC that is performing the cooperative heating operation is increased or reduced in number, or is switched to a different one of the sub heating coils, the energization control circuit 200 maintains the distribution of the output before the change and the display means 100 displays the predetermined heating information so as to be visually seen regardless of the increase or reduction in the number of sub heating coils that is performing the cooperative heating operation or the switching to the different sub heating coil.

In ST10C in Fig. 20, when it is determined that a heating-power change command has been issued, the process proceeds to ST17 in Fig. 21. In ST17, it is determined whether the changed heating power is larger or smaller than a predetermined heating power level (for example, 501W); if it is changed to a larger heating power than the predetermined heating power, then the process proceeds to ST18, while the predetermined heating power distribution is maintained by control by the energization control circuit 200. That is, in the above-mentioned example of 3 kW, when the executed heating power is 3 kW, then the heating power of the main heating coil MC is 2.4 kW and the heating power of the sub heating coil SC2 is 600 W, and the ratio is 4:1. This distribution is maintained. Further, the set heating power after the change is displayed in the corresponding area 100L1 of the integrated display means 100 as "middle heating power 1 kW" by the energization control circuit 200.

On the other hand, when the heating power is changed to a heating power that is smaller (there are three: 120 W, 300 W, and 500W) than the predetermined heating power level (501 W), the process of step 17 is followed by step 19, and the energization control circuit 200 outputs a control command signal with a different heating power distribution to the main inverter circuit MIV and the group of sub inverter circuits SIV1 to SIV4. Accordingly, even if the number of sub heating coils SC that is to perform cooperative heating is one or more than two, the heating power difference between the main heating coil MC and the sub heating coil(s) SC is maintained at a constant rate. Further, as for this heating power after the change, the set heating power after the change is displayed in the corresponding area 100L1 of the integrated display means 100 as "heating power: low:500 W".

A representative example of the heating power and the heating power ratio will be specifically illustrated in the following tables 1 to 3.

**[Table 1]**

| The heating power value (W) of the main heating coil MC and the sub heating coils SC1 to 4 when the maximum heating power is 3000 W. | | | | |
|---|---|---|---|---|
| When the heating power ratio of the main heating coil and the entire sub heating coils is fixed to 4:1 | | | | |
| Main heating coil | First sub heating coil (SC1) | Second sub heating coil (SC2) | Third sub heating coil (SC3) | Fourth sub heating coil (SC4) |
| 2400 | 600 | | | |
| 2400 | 300 | 300 | | |
| 2400 | 200 | 200 | 200 | |
| 2400 | 150 | 150 | 150 | 150 |

**[Table 2]**

| The heating power value (W) of the main heating coil MC and the sub heating coils SC1 to 4 with heating power 6 (1500 W). | | | | |
|---|---|---|---|---|
| When the heating power ratio of the main heating coil and the entire sub heating coils is fixed to 4:1 | | | | |
| Main heating coil | First sub heating coil (SC1) | Second sub heating coil (SC2) | Third sub heating coil (SC3) | Fourth sub heating coil (SC4) |
| 1200 | 300 | | | |
| 1200 | 150 | 150 | | |
| 1200 | 100 | 100 | 100 | |
| 1200 | 75 | 75 | 75 | 75 |

**[Table 3]**

| The heating power value (W) of the main heating coil MC and the sub heating coils SC1 to 4 with heating power 3 (500 W). | | | | |
|---|---|---|---|---|
| When the heating power ratio of the main heating coil and the entire sub heating coils is changed to 3:2 | | | | |
| Main heating coil | First sub heating coil (SC1) | Second sub heating coil (SC2) | Third sub heating coil (SC3) | Fourth sub heating coil (SC4) |
| 300 | 200 | | | |
| 300 | 100 | 100 | | |
| 300 | 66 | 66 | 66 | |
| 300 | 50 | 50 | 50 | 50 |

When the heating power is changed to a heating power that is smaller (there are three: 120 W, 300 W, and 500W) than the predetermined heating power level (501 W), and when the minimum driven heating power of the sub heating coil SC is 50 W, then, with the heating power ratio of 4:1 as in Fig. 2, the sub heating coil SC will be driven at a low heating power of 25 W and 33 W as in Table 2,, which is a problem.

In the actual product, since the impedance between each individual metal pan that serves as the heated object N is different, even when a high-frequency power equivalent or larger than a predetermined value is applied to the pan, the heat conversion ratio is not constant. As described in Embodiment 1, the current detection sensor 227 detects the current flowing through the resonance circuit that includes the parallel circuit of the left IH heating coil 6LC and the resonant capacitor 224L and by using this, determinations are performed determining whether there is a heated object N, whether the pan (heated object N) is appropriate for induction heating, and, further, whether an undercurrent or an overcurrent having a value difference equivalent to or above a predetermined value when compared to a normal current value is detected. Accordingly, the current applied to the induction heating coil is minutely controlled such that the designated heating power is exerted. Consequently, when the heating power settings is set low, since the flow of current is small, a problem that detection of current cannot be accurately performed arises. In other words, when heating power is high, it is relatively easy to detect the current component flowing in the resonance circuit; however, when heating power is low, without taking measures such as increasing the sensitivity of the current sensor, it will not be possible to accurately deal with the change in heating power, hence, it will not be possible to carry out the object of performing an accurate heating power control operation.

Note that although not shown, the input current value of the power to the inverter circuits MIV and SIV1 to SIV4 may be detected in actuality, and the above-mentioned current value on the output side of the coil detected by the current sensor may be used in combination to achieve appropriate control.

Note that similar to the main heating coil of the left IH heating coil 6LC, the sub heating coil SC is formed of a twisted, assembled wire constituted of fine wires with a size of approximately 0.1 mm to 0.3 mm. Since the cross-sectional area in which the current that causes induction heating flows is small, compared with the main heating coil MC, a large driving current cannot be applied and the maximum heating capacity is accordingly small. However, by further reducing the wire diameter of the fine wires of each coil and with more winding, thus increasing the surface area of the coil conductor, even if the drive frequency of each inverter circuits SIV1 to SIV4 is increased, the surface resistance can be reduced; hence, it will be possible to control further low heating power continuously while suppressing loss and temperature rise.

**Table 4**

| The heating power value (W) of the main heating coil MC and the sub heating coils SC1 to 4 with heating power 3 (500 W). | | | | |
|---|---|---|---|---|
| When the heating power ratio of the main heating coil and the entire sub heating coils is fixed to 4:1 | | | | |
| Main heating coil | First sub heating coil (SC1) | Second sub heating coil (SC2) | Third sub heating coil (SC3) | Fourth sub heating coil (SC4) |
| 400 | 100 | | | |
| 400 | 50 | 50 | | |
| 400 | 33 | 33 | 33 | |
| 400 | 25 | 25 | 25 | 25 |

In Embodiment 1, control is performed such that the heating power distribution is changed to 3:2.

Note that in a case in which the heating power is 120 W or 300 W, even with the heating power distribution of 3:2, the minimum driven heating power 50 W cannot be maintained. In such a case, control is performed such that a display encouraging change of the heating power such as "Set heating power is too small and heat cooking cannot be performed. Please set the heating power to 500 W or higher" is displayed on the corresponding area 100L1 of the integrated display means 100 or the heating is limited to the main heating coil MC alone. In actuality, it is not practical to assume that a large pan that covers both the main heating coil MC and the sub heating coil SC will be heated with a heating power of 120 W or 300 W, and there is no concern of degrading the actual usability even if the above control is to be performed.

During the cooperative heating operation, the energization control circuit 200 controls the amount of electric power supplied to each of the main heating coil MC and the group of sub heating coils SC1 to SC4 such that the heating power ratio (also called "power ratio") between the main heating coil MC and the group of sub heating coils SC1 to SC4 is within a substantially constant range. Since it is difficult to suppress the amount of electric power applied when the heating power setting is small as mentioned above, the actual power supply time may be limited so that the amount of electric power is reduced per unit time. For example, if the power applying time to each of the sub heating coils SC1 to SC4 from the corresponding sub inverter circuits SIV1 to SIV4 is reduced to 50% by duty factor control, the amount of electric power per unit time that is actually contributing to heating can be 50%. That is, if it is difficult to reduce the heating power by limiting the frequency of the applied electric power alone, duty factor control may be adopted in which the rate of time supplying electric power to time not supplying electric power can be reduced such that the actual acting electric power can be reduced to a smaller value.

Note that in Embodiment 1 of the invention, although it is described that the heating power ratio between the main heating coil MC and the group of sub heating coils SC1 to SC4 is maintained substantially constant during cooperative heating, the present invention does not limit the heating power ratio during various cases of the cooperative heating to be always maintained to a "predetermined ratio". For example, when the user changes the heating power settings, there are cases in which the control becomes transitionally unstable immediately after the change, and the ratio may deviate from the target heating power ratio temporarily. Further, during cooperative heating, when the pan is moved laterally or is lifted up for a short time, the movement is detected by the current sensors 227 and 267A to 267D, and it will be needed to be identified whether the movement is due to improper usage or the like, and thus, time is required to select the appropriate control processing. Until implementation of this identification or adaptive control is determined, the ratio may deviate from the target heating power ratio temporarily. Rather than knowing the instantaneous change in the applied current, as long as the user can confirm that the heating power set by the user has not been changed against the intent of the user, the user will feel no uneasiness in the course of cooking.

Note that even if the user has not changed the heating power settings, upon selection of another cooking menu by the user, there are cases in which the heating power ratio between the main heating coil MC and the group of sub heating coils SC1 to SC4 is changed. For example, in a case in which a large frying pan with a rectangular outer shape is used to fry a few hamburgers and in which the frying pan is placed on the top plate 21 so that it is longitudinal in the front-rear direction at a position slightly to the left relative to the center point X1, the heating will be performed with the main heating coil MC illustrated in Fig. 9 and the second sub heating coil SC2 that is provided in the obliquely left front position and the fourth sub heating coil SC4 that is provided in the obliquely left rear position. For the entire bottom side of the frying pan to uniformly increase its temperature, a heating power of 1.5 kW or 2 kW is recommended, and, as such, the control target value of the amount of electric power supplied to each of the main heating coil MC and the sub heating coils SC2 and SC4 is set with a predetermined heating power ratio. However, in a case in which the same frying pan is used at the same position with a heating power of 2 kW or 1.5 kW to fry an omelet using a few eggs, since the cooked ingredient (beaten eggs) spreads thinly on the entire bottom surface of the frying pan, the result of cooking is, in some cases, better when the temperature of the peripheral portion of the frying pan is increased earlier than the center portion of the bottom surface and when the heating power is increased a little in the peripheral portion. Accordingly, in the case of such a cooking menu, the heating powers of the two sub heating coils SC2 and SC4 are set higher than that of the main heating coil MC. As above, it is desirable that the heating power rate between the main heating coil MC and the group of sub heating coils SC1 to SC4 is changed (even with the same level of heating power) depending on the content of the actual cooking menu.

Note that in Embodiment 1, although the main heating coil MC is set to exert higher heating power than that of the entire group of sub heating coils SC1 to SC4, the invention is not limited to this in any way. The heating powers may be changed in many ways depending on conditions such as the structure and size of the main heating coil MC and each of the sub heating coils SC1 to SC4 or the number of disposed sub heating coils SC. For example, the heating power of the entire group of sub heating coils SC1 to SC4 may be set larger than the main heating coil MC or the two may be set the same. However, when the system is used in a common household, typically, a round normal sized pan, for example, one with a diameter of 20 cm to 23 cm, is often used. When such a standard pan is used, induction heating will be performed with the main heating coil MC alone, so it is desirable that consideration is made so that a minimum heating power required for this kind of cooking is abled. Further, during cooperative heating, that is, when two or more independent induction heating coils are driven together at a specific time so as to magnetically cooperate with one another, it is desirable from the viewpoint of stable and reliable control that the operation timing of the main inverter circuit MIV and the sub inverter circuits SIV1 to SIV4 are coordinated. For example, it is desirable that at least one of the below timings are coordinated, that is, the start timing of heating, the stop timing of heating, the changing timing of the heating power with the main inverter circuit MIV and the first sub inverter circuit SIV1. As an example of the above, a case can be though of in which switching is performed from a state in which the main inverter circuit MIV and the first sub inverter circuit SIVI are in operation at the same time to a state in which the second sub inverter circuit SIV2 is in operation with the main inverter circuit MIV, operations of the main inverter circuit MIV and the first sub inverter circuit SIVI are synchronized and stopped when the operation is switched to the second sub inverter circuit SIV2, and then the two, that is, the main inverter circuit MIV and the second sub inverter circuit SIVI2 are both driven at the same time. Note that the control may be such that the main inverter circuit MIV and each sub inverter circuit SIV are limited to a predetermined low heating power for a predetermined time (for example, 10 seconds) immediately after being driven; during this predetermined time, performing interrupt handling of some or all of the determination processing of abnormality (ST2), determination processing of whether a pan is placed or not (ST5), determination processing of appropriateness of the pan (ST6), as shown in Figs. 19 to 21 in Embodiment 1; and when there is no problem, continuing cooking by automatically increasing the heating power to the heating power that the user has set.

Note that in the above example, exemplary description is given while a resonance circuit that includes a parallel circuit of an IH heating coil and a resonant capacitor is used; however, resonance circuit that includes a series circuit of an IH heating coil and a resonant capacitor may also be used.

Further, in the above-described Embodiment 1, although it has been assumed that during induction heating of the left IH heating coil 6LC, only the fan 30 of the left cooling chamber 8L is operated and the fan 30 of the right cooling chamber 8R is not operated, depending on the used state of the cooking system (cases such as the left and right IH heating coils 6LC and 6RC has been driven simultaneously until immediately before or when the central electric radiant heat source 7 or the grill heating chamber 9 is used) and depending on the environment such as the temperature of the upper portion component chamber 10, each fan 30 of the left and right cooling chambers 8L and 8R may be operated at the same time. Further, the operation speeds (fan capacities) of each of the left and right fans 30 are not always the same and either one or both may be changed as appropriate in accordance with the used state of the cooking system.

Furthermore, the outer dimensions of the left and right cooling units CU do not necessarily have to be the same and the dimensions of each of the fans 30, the rotating blades 30F, the motors 300, the fan cases 37, and the component cases 34 may be changed as appropriate in accordance with the calorific value and the size of the subject to be cooled (induction heating coil and the like). However, if the maximum heating power of each of the left and right IH heating sources 6L and 6R are equal, it is preferable that the sizes and specifications of the components of the two cooling units CU are made common to the extent possible so as to reduce production cost and improve ease of assembly. Changing, such as the disposition of the cooling unit CU to either one side in the left or right, has no relation to the purport of the invention.

Furthermore, the vertical partition plates 24R and 24L and the horizontal partition plate 25 are not necessarily required in the embodiment of the invention. For example, as a matter of course, the outer walls of the grill heating chamber 9 may be covered with a heat insulating material. If a sufficient gap can be provided with the outer walls of the grill heating chamber 9 or if the temperature of the gap can be kept low (for example, with free convection or forced convection of air), these partition plates 24 and 25 and the heat insulating material may be omitted. Further, among the outer wall of the cooling unit CU itself, a heat shield panel may be mounted or a heat insulating film may be formed on the side facing the outer wall of the grill heating chamber 9. This will enable the facing gap with the outer wall of the grill heating chamber 9 to be minimum, and if assuming that the width of the main body A is the same, the width of the grill heating chamber 9 can be made larger in proportion.

Further, in the above Embodiment 1, the integrated display means 100 is capable of displaying the operation condition of the four heat sources, namely, the left IH heating coil 6LC, the right IH heating coil 6RC, the central electric radiant heat source (heater) 7, the electric radiant heat sources (heaters) 22 and 23 individually or in multiple numbers at the same time, commanding the start or stop of the heating operation with the touch operation to the input keys 141 to 145, and setting the energizing conditions. However, the integrated display means 100 may be one limited to merely a display function without the above input function to the energization control circuit 200.

Furthermore, the placement-of-heated-object determination unit 280 that determines whether the same single pan (heated object N) is placed above the main heating coil MC and the sub heating coils SC1 to SC4 may use, as described in the above Embodiment 1, infrared sensors 31 that detect temperatures or current detection sensors 227 that detect the current flowing in the heating coils, as well as means that optically detect whether there is a pan (heated object N) above the sensor. For example, if there is a pan (heated object N) above the top plate 21, light from the lighting equipment on the kitchen ceiling or the sun will not enter the top plate 21, but if there is no pan (heated object N) above the top plate 21, ambient light such as light of the lighting equipment or light of the sun will enter the top plate 21. It may be one that detects the difference. Additionally, as methods of determining the material properties of the pan (heated object N) other than the method in which the material properties of the pan (heated object N) is determined on the basis of the current flowing in the heating coil and the input current flowing in the inverter circuit, for example, ones using other electrical characteristics can be considered such as a method in which the material properties of the pan (heated object N) is determined on the basis of the voltage flowing in the heating coil and the input current flowing in the inverter circuit. For example, in Japanese Unexamined Patent Application Publication No. 2007-294439, a technique is introduced in which the material and the size of an heated object is distinguished on the basis of the input current value flowing in the inverter circuit and the current value flowing in the heating coil.

Note that in Embodiment 1, although it is described that the placement-of-heated-object determination unit 280 "determines" that the same single pan (heated object N) is on the main heating coil MC and one or more of the sub heating coils SC1 to SC4, in actuality, it is not determined that the number of pans is one. That is, processing of actually counting the number of the placed pans is not adopted. In these types of induction cooking systems, it is difficult to assume that cooking is performed while a plurality of heated object N is placed on one induction heating coil; accordingly, the inventors have deemed that "the same single pan (heated object N) is placed" when there is no large difference between the impedance of the main heating coil MC and one or more of the sub heating coils SC1 to SC4, in which the impedance is detected by the current sensors 227 and 267A to 267D. In other words, as shown in Fig. 14, the placement-of-heated-object determination unit 280 can obtain the size of the currents flowing in the main heating coil MC and one or more of the sub heating coils SC1 to SC4 and, accordingly, can obtain each size of the impedance. If the value of the impedance is within a predetermined range, a determination signal is sent to the energization control circuit 200 indicating that the same single pan (heated object N) is placed. Similarly, when temperatures are detected by the infrared sensors 31, the placement-of-heated-object determination unit 280 determines that the same single pan (heated object) is placed on the basis of the comparison result of comparing whether the detection temperatures of each of the infrared sensors 31 corresponding to plural heating coils are the same or not. When using means such as a photosensor that utilizes the fact that the light income changes depending on whether there is a pan or not, it is practical to process that there is a pan placed on the main heating coil MC and one or more of the sub heating coils SC1 to SC4 on the basis of comparison of the size of the light income.

### Embodiment 2

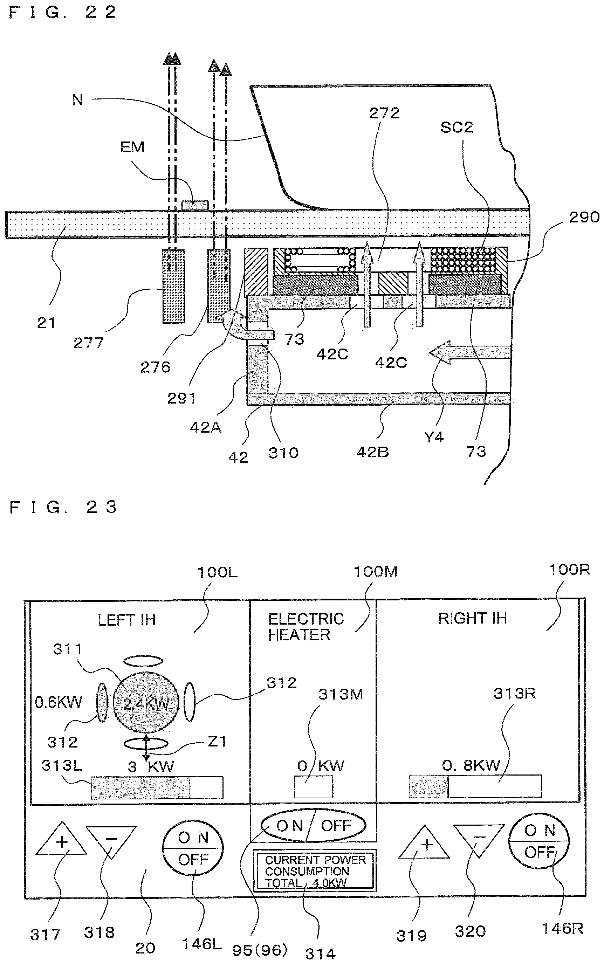

Figs. 22 and 23 illustrates an induction cooking system according to Embodiment 2 of the invention and Fig. 22 illustrates an enlarged longitudinal sectional view of the main heating coil of the left side induction heating source and its peripheral area of the induction cooking system, and Fig. 23 is a plan view illustrating its integrated display means. Note that similar or corresponding elements of Embodiment 1 are designated with like reference numerals.

In Embodiment 2, as illustrated in Fig. 22, while the cooling duct 42 positioned below the coil support 290 has multiple blow out holes 42C formed in the portion facing the main heating coil MC and the sub heating coils SC1 to SC4, the cooling duct 42 is configured such that cooling air Y4 is provided from the right IH heat source 6R side. A through hole 310 for blowing out cooling air towards the lower portion of the lateral side of each individual light emitting unit 276 is formed on the side wall of the cooling duct 42.

Further, it is configured such that an annular cooperative heating area mark EM is formed on the top plate 21 by means of printing or the like and light from the individual light emitting units 276 are radiated upwards from the vicinity of the inside of the cooperative heating area mark EM. Furthermore, it is configured such that light of the wide area light emitting unit 277 is emitted upwards from the vicinity of the outside of the cooperative heating area mark EM.

A first characteristic of Embodiment 2 is that schematic graphics 311 are displayed on the liquid crystal screen of the integrated display means 100 in the corresponding area 100L of the left IH heat source 6L to indicate to the user by graphics that the main heating coil MC and the four sub heating coils SC1 to SC4 are carrying out cooperative heating.

That is, as shown in Fig. 23, a graphic 311 schematically displaying the main heating coil MC and graphics 312 schematically displaying the sub heating coils SC1 to SC4 are displayed in the predetermined corresponding area 100L provided in the liquid crystal screen of the integrated display means 100. Among the four graphics 312 displayed in the periphery of graphic 311, one or some that is performing a cooperative heating operation is displayed with a different color. In Fig. 23, a graphic 312 on the left side is performing a cooperative heating operation and, naturally, graphic 311 that indicates the main heating coil MC is displayed with a different color as that of the other graphics 312 while performing cooperative heating.

Further, in Embodiment 2, three display units 313L, 313M, and 313R, which displays power consumption of each of the used heat source with a numerical value and a graph, appear on the display screen of the integrated display means 100 while performing the heating operation. In Fig. 23, each of the displays 3 kW, 0 kW and 0.8 kW is the power consumption.

Further, a second characteristic is that a display window 314 displaying the entire power consumption with a numerical value appears on the liquid crystal screen on the front side of the integrated display means 100. Note that for the power consumption, a separate circuit integrating the current flowing in the inverter circuit and the currents of other main motor parts (for example, fan 30 and the like) need to be provided.

In Fig. 23, input keys 317 and 318 are a pair of input keys for setting the heating power of the left IH heat source 6L and include an adding key 317 that sets the heating power a level higher with each pushing of the key and a subtracting key 318 that sets the heating power a level lower with each pushing of the key.

Similarly, input keys 319 and 320 are a pair of input keys for setting the heating power of the right IH heat source 6R and include an adding key 319 that sets the heating power a level higher with each pushing of the key and a subtracting key 320 that sets the heating power a level lower with each pushing of the key. These four input keys automatically appear on the liquid crystal screen when operation is required, such as a stage before start of cooking. The input keys 146L and 146R are keys similar to the input keys in Fig. 16 according to Embodiment 1 and, similar to the four input keys 317 to 320 described above, appear on the liquid crystal screen when operation is required, such as a stage before start of cooking. The input keys 146L and 146R issue two commands, namely, start and end of cooking, to the energization control circuit 200, and when heating of the left IH heat source 6R is to be started, by touching the input key 146L on the left, operation selection command and induction heating command for the heat source 6L are issued, and by another touch, a command commanding immediate stop of the induction heating operation is issued to the energization control circuit 200. Similarly, by touching the input key 146R on the right side once, operation selection command and induction heating command for the IH heat source 6R on the right are issued, and by another touch, the induction heating operation can be immediately stopped.

The input key 95 in Fig. 23 has a similar function to that of the operation button 95 for the electric radiant heat sources 22 and 23 in Fig. 16 according to Embodiment 1 and, similar to the four input keys 317 to 320 described above, automatically appear on the liquid crystal screen when operation is required, such as a stage before start of the electric radiant heat source. By touching this once, operation selection command and heating command for the heat sources 22 and 23 are issued, and by another touch, a command commanding immediate stop of the heating operation is issued to the energization control circuit 200. Each of the input keys 95 and 317 to 320 serves as an input unit of a capacitance switch that is provided with electrodes on the surface and the other side of the top plate 21 that covers the entire top side of the display screen of the integrated display means 100.

Z1 in Fig. 23 indicates a mutual space (distance) between graphic 311, which indicates that cooperative heating with the main heating coil MC and the four sub heating coils SC1 to SC4 is performed, and the position where the heating power information is displayed. In Fig. 23, graphic 311 is displayed at a position that is in the corresponding area L1 of the left heat source 6L of the same integrated display means 100 and is adjacent to the display "3 kW" with a distance of Z1. That is, the displayed position of the heating power and the displayed position of the information on the cooperative heating are positioned adjacently. Note that the actual diameter of this Z1 is desirably 10 cm or smaller such that when the user is cooking while having the left upper side of the top plate 21, which is a few tens of centimeters to 1 m (meter) away from the user, in his/her angle of view, the user is able to visually recognize both the heating power display and the display of the cooperative heating operation at the same time without moving his/her line of sight vertically and horizontally. However, the invention is not limited to this numerical value in any way. The term "adjoining" refers to a case in which the positional relation is near, although not mutually side by side.

The displayed position of the heating power information and the position displaying information on the cooperative heating operation are described as "adjoining" when in a range in which the user performing cooking with the display means such as the integrated display means 100 that is on the top side of the cooking system in his/her angle of view can see the two without moving much of his/her line of sight vertically and horizontally. In other words, for example, in a case in which the user first visually confirms the heating power information and then after confirms the cooperative heating operation, it is a range in which the user does not have to move his/her face much or move his/her line of sight when confirming the latter after the former.

With the above configuration, even when portion of the individual light emitting unit 276 cannot be easily seen (much of this happens on the backside of the pan) by the user due to the placement of the pan (heated object N), clear visual conformation on which of the sub heating coils SC1 to SC4 is actually involved in cooperative heating can be made in the corresponding area 100L of the left IH heat source 6L in the integrated display means 100.

With such a configuration as above, when cooperative heating is carried out by cooperation of the main heating coil MC and the sub heating coils SC1 to SC4, the energization control circuit 200 controls the driving circuit 278 such that only the individual light emitting unit 276 that is located outside of the sub heating coil SC that is performing cooperative heating is made to perform emitting or lighting so that the sub heating coil SC that is performing cooperative heating can be identified. The example in Fig. 23 illustrates that the sub heating coil SC2 that is performing cooperative heating is the sub heating coil SC2 that is disposed on the left side of the main heating coil MC, and as shown in Fig. 23, under the control of the energization control circuit 200, the driving circuit 278 is made to drive only the individual light emitting unit 276 on the left side of the sub heating coil SC2 to be emitted or lighted.

Since the wide area light emitting unit 277 in Fig. 22 is driven by the driving circuit 278 from the stage in which the user activates power by pushing the operation button 63A (see Fig. 2) of the main power switch 63, it will be possible to guide the user the placing position from the stage in which the elliptical pan (heated object N) is placed above the left IH heat source 6L. Further, even when the elliptical pan (heated object N) is temporarily lifted up or shifted to the left or right, the emitting or lighting status of the wide area light emitting unit 227 does not change and is kept to display the preferable position to place the elliptical pan (heated object N) to the user.

Further, regardless of whether it is a cooperative heating operation with some or all of the sub heating coils SC1 to SC4 and the main heating coil MC or heating solely with the main heating coil MC, the user can always confirm the status of the set heating power from above the top plate 21 by looking at the liquid crystal screen of the integrated display means 100 (also the user can know the status from the voice synthesizer 315). Further, even when one or some of the sub heating coils SC1 to SC4 that is involved in cooperative heating changes, the user will be able to obtain information on the heating power after the change with ease.

Furthermore, in Embodiment 2, when using the left IH heat source 6L, graphic 311 of the main heating coil MC and four graphics 312 schematically displaying all of the sub heating coils SC1 to SC4 are all displayed at the same time. When heat cooking is started, if there is any sub heating coils SC1 to SC4 that is actually contributing to the cooperative heating, only graphic 312 that can identify the relevant sub heating coil SC is changed such as being changed to a different color, being made to flash, and the like, and, thus, it will be possible to notify the user. It is understood that in Fig. 23, the display color of the sub heating coil SC2 on the left side and the main heating coil MC in the middle are different from the other sub heating coils SC1, SC3, and SC4. Further, as for the heating power distribution, each electric power is directly displayed by a numerical value such as 2.4 kW and 0.6 kW.

Note that in Embodiment 2, cooling air Y4 passes through the spaces 272 formed in the middle of the sub heating coils SC1 to SC4 from the cooling duct 42 positioned below the coil support 290, and thus cools the sub heating coils SC1 to SC4 from the inside (see Fig. 22). Meanwhile, a portion of the cooling air Y4 is blown out towards the lower portion of the lateral side of each individual light emitting unit 276. The individual light emitting units 276 and the wide area light emitting unit 277, whose light guides are formed of plastic, are cooled by the cooling air that has been blown out from the through holes 310, and, hence, their thermal degradation and deformation can be prevented.

### Embodiment 3

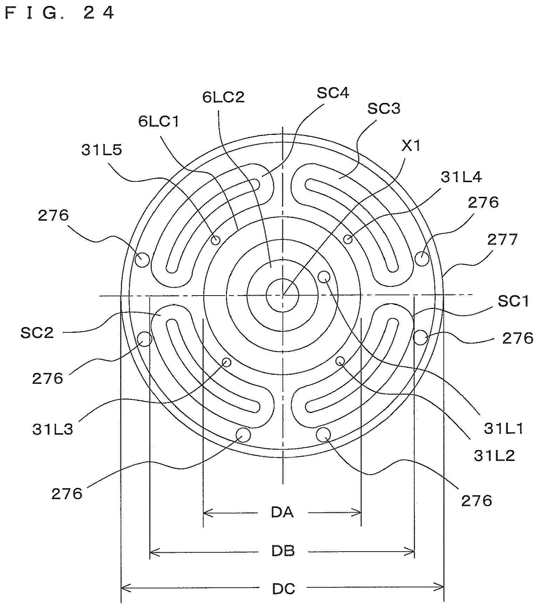

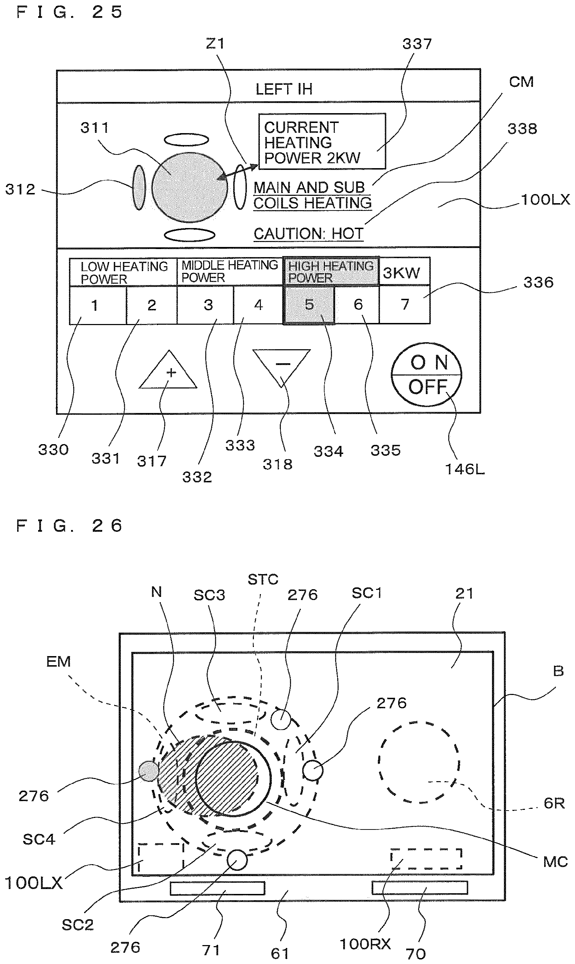

Figs. 24 and 25 illustrates an induction cooking system according to Embodiment 3 of the invention, Fig. 24 is a plan view illustrating an induction heating source on the left side, and Fig. 25 is a plan view illustrating a heating power display portion of the heat source on the left side. Note that similar or corresponding elements of Embodiment 1 are designated with like reference numerals.

In Embodiment 3, the individual light emitting units 276 are not lengthy provided along the outer circumference of the sub heating coils SC1 to SC4 but display is performed by emitting or lighting a local poriton(s) in one or two locations. That is, as shown in Fig. 24, the individual light emitting units 276 are each provided to a position close to the two ends of the coil as for the two sub heating coils SC1 and SC2 that are close to the user side and the individual light emitting unit 276 is provided to a position close to the front end of the coil as for the two sub heating coils SC3 and SC4 that are far from the user side (the rear side).

In Embodiment 3, as an alternative of the liquid crystal screen of the integrated display means 100 of Embodiment 1 mentioned above, as shown in Fig. 25, the embodiment includes a display unit 100LX dedicated to the left IH heating unit 6L. A first characteristic of Embodiment 3 is that schematic graphics 311 and 312 are displayed on the display screen of the display unit to indicate to the user by graphics that the main heating coil MC and the four sub heating coils SC1 to SC4 are carrying out cooperative heating (This point is the same as Embodiment 2 mentioned above).

Note that it can be known at the same time that cooperative heating operation is carried out with the display CM displaying "Main and sub coils heating".

That is, graphic 311 schematically illustrating the main heating coil MC and graphics 312 schematically illustrating the sub heating coils SC1 to SC4 are displayed on the display unit 100LX dedicated to the left IH heating unit 6L and display which sub heating coil is involved in the cooperative heating.

Furthermore, in Embodiment 3, in the display unit 100LX dedicated to the left IH heating unit 6L, the newest heating power of the main heating coil MC and the group of sub heating coils SC are displayed by display 337 by letters and the like. In the example in Fig. 25, it can be understood that an induction heating operation is carried out with a charge of 2 kW at present.

The input keys 330 to 336 are input keys for heating power and are each formed on the surface of the top plate 21 on the top side of the main body with a capacitance switch. Corresponding to the electrodes of each input key, below the top plate 21, there is a liquid crystal display screen including a single screen or a plurality of aligned screens constituting the display unit 100LX. With the liquid crystal display screen, it will be possible to identify the position of each of the input keys 330 to 336 for setting the heating power. Seven keys each corresponding to a heating power value are provided as these input keys 330 to 336. The heating power can be set directly with a single touch operation. When a specific heating power is selected, a portion of the relevant input key keeps on illuminating during the induction heating. The example in the Figure is in a state in which high heating power (2 kW) is selected by "high heating power: 5" 334 where the key is highlighted against the other keys by light emitted from the back side.

Input keys 317 and 318 are a pair of input keys for setting the heating power of the left IH heat source 6L and include an adding key 317 that sets the heating power a level higher with each pushing of the key and a subtracting key 318 that sets the heating power a level lower with each pushing of the key.

An input key 146L is a key similar to the input key 146L in Embodiment 2 and, in a similar manner as the above-mentioned seven input keys 330 to 336 for heating power, automatically (that is, under the control of the energization control circuit 200) appears and disappears as appropriate on the liquid crystal screen during a period from the stage before the start of cooking until the end of cooking, and issues two commands, namely, start and end of cooking, to the energization control circuit 200. Further, when this is first pressed before heating and cooking, the left IH heat source 6L is selected. Subsequently, when this is pressed during induction heating, the induction heating is instantaneously stopped. When pressed once more, induction heating is started. A high-temperature notifying portion 338 is displayed during induction heating as a means to send out a warning that the top plate 21 will become high in temperature. It may be displayed in letters as illustrated in the Figure or may be displayed by graphics.

As configured as above, similar to Embodiments 1 to 2, when cooperative heating is carried out by cooperation of the main heating coil MC and the sub heating coils SC1 to SC4, the individual light emitting unit 276 lights up in the aim to identify the sub heating coil SC2 that is performing the cooperative heating operation, and irrespective of which of the sub heating coils SC1 to SC4 is performing cooperative heating, the wide area light emitting unit 277 keeps on displaying the preferable placing position of the pan (heated object N) on the top plate 21 at all times.

Further, regardless of whether it is a cooperative heating operation with some or all of the sub heating coils SC1 to SC4 and the main heating coil MC or heating solely with the main heating coil MC, the user can always confirm the status of the set heating power from above the top plate 21 by looking at the screen of the integrated display means 100 (also the user can know the status from the voice synthesizer 315). Further, even when one or some of the sub heating coils SC1 to SC4 that is involved in cooperative heating changes, the user will be able to obtain information on the current heating power with ease.

Note that as regards the two sub heating coils SC3 and SC4 that are far from (on the rear side) the user side, the reason for not providing the individual light emitting unit 276 to a position close to the rear end of each coil is out of consideration that it will not be easy to visually observe the individual light emitting unit 276 behind the placed pan (heated object N). Although the above has an advantage of reducing cost, there will be no problem in providing the individual light emitting unit to the rear position.

With the configuration being as such, in Embodiment 3, similar to Embodiment 2, when cooperative heating is performed with the cooperation of the main heating coil MC and the sub heating coils SC1 to SC4, regardless of whether it is a cooperative heating operation with some or all of the sub heating coils SC1 to SC4 and the main heating coil MC or heating solely with the main heating coil MC, the user can always confirm the status of the set heating power from above the top plate 21. Further, even when one or some of the sub heating coils SC1 to SC4 that is involved in cooperative heating changes, the user will be able to obtain information on the current heating power (in the example in Fig. 25, the heating power being 2 kW in total) with ease.

### Embodiment 4

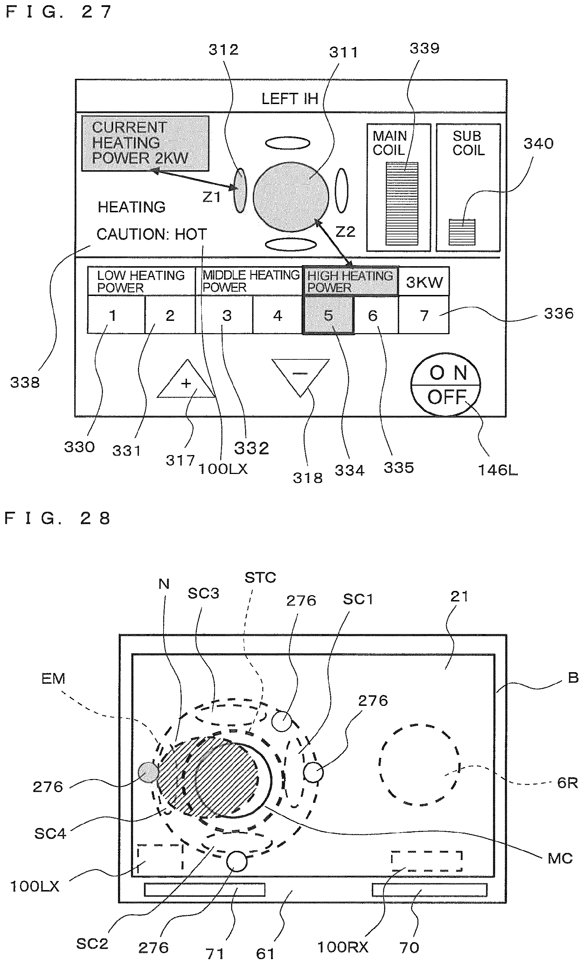

Figs. 26 and 27 illustrates an induction cooking system according to Embodiment 4 of the invention, Fig. 26 is a plan view illustrating an induction heating source on the left side, and Fig. 27 is a plan view illustrating a heating power display portion of the heat source on the left side. Note that similar or corresponding elements of Embodiment 1 are designated with like reference numerals.

In Embodiment 4, the individual light emitting units 276 are not lengthy provided along the outer circumference of the sub heating coils SC1 to SC4 but annular individual light emitting units 276 are provided on the circumference of the wide area light emitting unit 277 at four places. A center light emitting unit (main heating coil light emitting unit) STC disposed under the top plate 21 so as to surround the circumference of the main heating coil MC indicates an outer edge position of the area substantially corresponding to the heating region of the main heating coil MC, and is annularly provided near a position immediately below the guide mark 6LM illustrated in Figs. 1 and 3 of Embodiment 1.

Further, the individual light emitting units 276 are made to differ the color of the radiated light between when in cooperative heating and when not in cooperative heating.

Further, similar to Embodiment 3 mentioned above, the embodiment includes a display unit 100LX dedicated to the left IH heating unit 6L. A first characteristic of Embodiment 4 is that schematic graphics 311 and 312 are displayed on the display screen of the display unit 100LX to indicate to the user by graphics that the main heating coil MC and one or some of the four sub heating coils SC1 to SC4 are carrying out cooperative heating (This point is the same as Embodiments 2 and 3 mentioned above).

That is, graphic 311 schematically illustrating the main heating coil MC and graphics 312 schematically illustrating at least one of the sub heating coils SC1 to SC4 are displayed on the display unit 100LX dedicated to the left IH heating unit 6L (see Fig. 27).

Furthermore, in Embodiment 4, in the display unit 100LX dedicated to the left IH heating unit 6L, the newest heating power of the main heating coil MC and the group of sub heating coils SC are displayed by display 337 by letters and the like. In the example in Fig. 27, it can be known clearly that an induction heating operation is carried out with a charge of 2 kW by the display of letters "Current heating power 2 kW" and the letters "Heating".

The input keys 330 to 336 are input keys for heating power and are each formed on the surface of the top plate 21 on the top side of the main body with a capacitance switch. Corresponding to the electrodes of each switch, there is a liquid crystal display screen including a single screen or a plurality of aligned screens constituting the display unit 100LX below the top plate 21. With the liquid crystal display screen, it will be possible to identify the position of each of the input keys 330 to 336 for setting the heating power. Seven keys each corresponding to a heating power value are provided as these input keys. The heating power can be set directly with a single touch operation.

Since the input key itself and the letter portion such as "middle heating power, high heating power" that indicates the level of heating power are lighted up by a light source (for example, light emitting diodes) disposed thereunder, the user can know whether the heating power of the relevant one of the input keys 330 to 336 is valid or not by seeing whether there is emittance of light.

When a specific heating power is selected, a portion of the relevant input key keeps on illuminating during the induction heating. The example in Fig. 27 is in a state in which high heating power (2 kW) is selected by "high heating power : 5" 334 where the key is highlighted against the other keys by light emitted from the back side.

Z1 in Fig. 27 indicates the distance from graphics 311 and 312, which indicates that cooperative heating with the main heating coil MC and the four sub heating coils SC1 to SC4 is performed, to the position where the heating power information is displayed. In Fig. 27, the displayed positions of graphics 311 and 312 are in the display screen of the dedicated display unit 100LX, and the display of the heating power "2 kW" and the graphic 312 (indicating one of the sub heating coils) are adjacent to each other while being apart at a distance Z1. That is, the display of the heating power and the display of the information on the cooperative heating are adjacent to each other. Further, Z2 indicates the distance from graphic 311 indicating the main heating coil MC to the displayed portion of the input key 334 for the heating power that is displaying "high heating power".

Note that the actual sizes of Z1 and Z2 is preferably 10 cm or smaller, as described in Embodiment 2; however, the invention is not limited to this numerical value in any way. As in Embodiment 4, as in the input key 334 for heating power, if the display "high heating power" corresponds to the key and if the input key 334 is displayed in a different pattern as the other input keys, then it can be said that the heating power information is also indicated by the input key portion.

Input keys 317 and 318 are a pair of input keys for setting the heating power of the left IH heat source 6L and include an adding key 317 that sets the heating power a level higher with each pushing of the key and a subtracting key 318 that sets the heating power a level lower with each pushing of the key.

An input key 146L is a key similar to the input key 146L in Embodiment 2 and, in a similar manner as the above-mentioned seven heating power input keys 330 to 336, automatically appears and disappears as appropriate on the liquid crystal screen during a period from the stage before the start of cooking until the end of cooking, and issues two commands, namely, start and end of cooking, to the energization control circuit 200. Further, when this is pressed before heating and cooking, the left IH heat source 6L is selected. Subsequently, when this is pressed during induction heating, the induction heating is instantaneously stopped. When pressed once more, induction heating is started. A high-temperature notifying portion 338 is displayed during induction heating so as to send out a warning that the top plate 21 will become high in temperature.

The mark 339 in Fig. 27 is a heating power indicating mark illustrating the amount of heating power that is given to the main heating coil MC with a rectangular bar-shaped graphic and the mark 340 is similarly a heating power indicating mark illustrating the amount of heating power that is given to the group of sub heating coils SC with a rectangular bar-shaped graphic. The height of each of the graphics changes in proportion to the strength of the corresponding heating power. For example, as shown in Fig. 27, the size (height) of the heating power indicating mark 339 on the left side (for the main heating coil MC) is a few times larger than that of the heating power indicating mark 340 on the right side (for the group of sub heating coils SC). It can be easily understood that the left side, that is, the main heating coil MC side is operating in a state with a heating power that is a few times larger than the right side.

As configured as above, similar to Embodiments 1 to 3, when cooperative heating is carried out by cooperation of the main heating coil MC and the sub heating coils SC1 to SC4, the emitting or lighting color of the individual light emitting unit 276 are changed so that the sub heating coil SC2 that is performing the cooperative heating operation can be identified and thus this sub heating coil can be informed to the user.

For example, as shown in Fig. 26, in a case in which the heating operation is started with an elliptical pan (heated object N) placed above the main heating coil MC and the sub heating coil SC4 on the left side so as to extend over the two, based on the determination result of the placement-of-heated-object determination unit 280, the energization control circuit 200 determines that an elliptical pan (heated object N) with the same material exists above the main heating coil MC and the sub heating coil SC4 on the left side and drives the inverter circuit MIV for the main heating coil and the inverter circuit SIV4 for the sub heating coil such that high-frequency power is supplied to the two coils with a predetermined heating power distribution.

In this case, only the individual light emitting unit 276 that is in the left vicinity of the inverter circuit SIV4 for the sub heating coil is emitted or lighted in a different emitting or lighting color and emitting or lighting pattern to the other individual light emitting units 276 with the control of the energization control circuit 200. For example, when not performing cooperative heating, the emitting or lighting color of the individual light emitting unit 276 is "yellow" when seen from above the top plate 21, but when performing cooperative heating, it is changed to "red".

Further, regardless of whether it is a cooperative heating operation with some or all of the sub heating coils SC1 to SC4 and the main heating coil MC or heating solely with the main heating coil MC, the user can always confirm the status of the set heating power from above the top plate 21 by looking at the screen of the dedicated display unit 100LX (also the user can know the status from the voice synthesizer 315). Further, even when one or some of the sub heating coils SC1 to SC4 that is involved in cooperative heating changes, the user will be able to obtain information on the current heating power with ease.

Note that since in Embodiment 4, the center light emitting unit (main heating coil light emitting unit) STC that indicates the outer edge position of the area substantially corresponding to the heating region of the main coil MC is provided so that the preferable placing position of the heated object N such as a pan is indicated in a more clear manner when heating with the main heating coil MC alone, when using a normal-sized round pan (heated object N) that matches the outer diameter of the main heating coil MC, the center position of the main heating coil MC and its preferable placing position can be easily understood visually.

Further, in Embodiment 4, although the center light emitting unit (main heating coil light emitting unit) STC performs emitting or lighting operation before the start of the cooperative heating operation of the main heating coil MC and the sub heating coils SC1 to SC4 and continues the emitting or lighting of the main heating coil and the sub heating coils during cooperative heating, the center light emitting unit STC may be turned off during cooperative heating of the main heating coil MC and the sub heating coils SC1 to SC4. This is because the user can imagine the rough position of the center light emitting unit (main heating coil light emitting unit) STC by looking at the emitting or lighting of the individual light emitting units 276 and can understand that the positions of the individual light emitting units 276, which agrees with the position of the cooperative heating area mark EM, are the outer limit, and therefore can easily understand that the moving-away (opposite) direction with respect to the individual light emitting unit 276, that is, the main coil center point X1 direction, is the center of the preferable heating area.

Note that as for the sub heating coil SC3 that is positioned far from the user side (the rear side), there is no individual light emitting unit 276 provided to the position that is close to the rear end of that coil; alternatively it is provided at the side. This is because it have been taken into consideration that the individual light emitting unit 276 will be blocked by the placed pan (heated object N) making it difficult for the user to visually see the individual light emitting unit 276; however, there will be no problem in providing the individual light emitting unit 276 at the rear position of the sub heating coil SC3.

### Embodiment 5

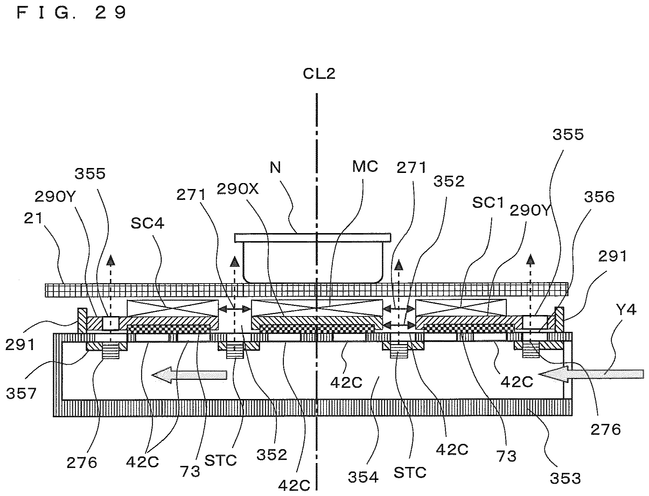

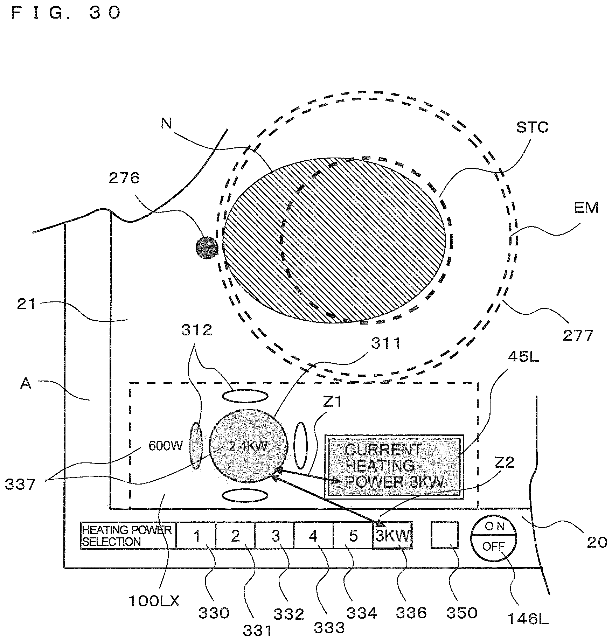

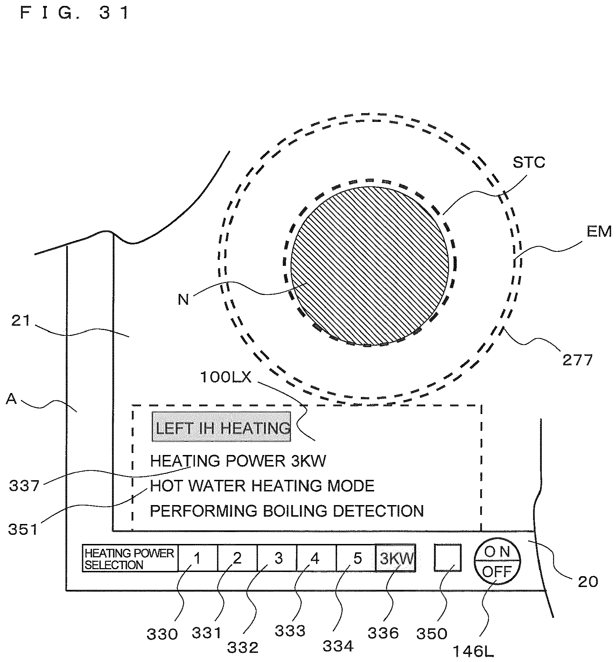

Figs. 28 and 29 illustrate an induction cooking system according to Embodiment 5 of the invention. Fig. 28 is a plan view illustrating an entirety of the main body; Fig. 29 is an enlarged longitudinal sectional view of a main heating coil of an induction heating source on the left side and its peripheral area of an induction cooking system; Fig. 30 is a plan view illustrating the main portions of the top plate from the center to the left side, in a state in which cooperative heating is performed; Fig. 31 is similarly a plan view illustrating the main portions of the top plate on the left side, in a state in which cooperative heating is not performed. Note that similar or corresponding elements of Embodiments 1 to 4 are designated with like reference numerals.

Further, similar to Embodiments 3 and 4 described above, the embodiment includes a display unit 100LX dedicated to the left IH heating unit 6L. That is, as in Embodiment 1 above, a left heating power setting operating unit 71 is provided in a position on the left side relative to the left-right center position of the main body A, and behind and near the unit as well as near the front of the top plate 21 (front with respect to the user, lower part of the drawing of Fig. 28), a display unit 100LX, in which the user can visually see one or plural display screens through the top plate 21, is provided (see Fig. 30). A first characteristic of Embodiment 4 is that, as shown in Fig. 30, schematic graphics 311 and 312 are displayed on the display screen of the display unit 100LX to indicate to the user by graphics that the main heating coil MC and at last one of the four sub heating coils SC1 to SC4 are carrying out cooperative heating (This point is the same as Embodiments 2, 3, and 4 mentioned above). That is, graphic 311 schematically illustrating the main heating coil MC and graphics 312 schematically illustrating the sub heating coils SC1 to SC4 are displayed on the display unit 100LX dedicated to the left IH heating unit 6L.

Furthermore, in Embodiment 5, in the display unit 100LX dedicated to the left IH heating unit 6L, the newest heating power of the main heating coil MC and the group of sub heating coils SC are displayed by display 337 by letters and the like. In the example in Fig. 29, it can be known clearly that an induction heating operation is carried out with a charge of the maximum heating power of 3 kW, and the heating power of the main heating coil MC is set to 2.4 kW and that of the sub heating coil SC on the left side is set to 0.6 kW by the display of letters "Current heating power 3 kW" (note that when this display is displayed, notification may be performed simultaneously with the voice synthesizer 315).

The input keys 330 to 334 and 336 are input keys for heating power and are each formed in the front side portion of a frame 20 that covers the outer circumference of the top side of the main body A. The control units including press switches are formed in a line. Further, on the right side of the display unit 100LX, a liquid crystal display screen 45L that displays the current heating power is provided. The input keys 330 to 334 and 336 for heating power allows selection of heating power values in six levels. The six heating power values increases the heating power as it moves to the right. The heating power can be set directly with a single press operation.

When a specific heating power is selected, the input result thereof is displayed on the liquid crystal display screen 45L. Further, a predetermined heating power distribution result corresponding to this heating power is displayed to the user by the display 337.

A switching switch 350 exposes its operating element in the left heating power setting operating unit 71, in the frame 20 at a position on the left side relative to the left-right center position of the main body A. The switching switch 350 issues a command signal of whether or not to perform cooperative heating to the energization control circuit 200. When this switching switch is pressed once, as shown in Fig. 29, schematic graphics 311 and 312 of the main heating coil MC and the group of sub heating coils SC and the display 337 indicating the newest heating power can be displayed. Subsequently, when pressed again, information related to the heating power display 337 during normal induction heating with the main heating coil alone, heat-cooking menu display 351 (the objective of the heating and cooking), further, whether heating operation is being performed, and the like can be displayed all at once. Note that although there are multiple heat-cooking menus and the user can arbitrarily select one among them, the selection key is not depicted in Fig. 29 and Fig. 30. When it is determined that no cooperative heating operation will be performed with the switching of the switching switch 350, based on the command from the energization control circuit 200, the liquid crystal display screen 45L is automatically turned off. Further, in a state in which the switching switch 350 is operated so that graphics 311 and 312 and the display 337 indicating the newest heating power are not displayed, the energization control circuit 200 issues a control signal so that the sub inverter circuits SIV1 to SIV4 do not supply high-frequency power to the group of sub heating coils.

In Embodiment 5, the individual light emitting units 276 are not lengthy provided along the outer circumference of the sub heating coils SC1 to SC4 but are provided on the circumference of the wide area light emitting unit 277 at four places at even intervals. A center light emitting unit (main heating coil light emitting unit) STC is disposed under the top plate 21 so as to surround the circumference of the main heating coil MC, indicates an outer edge position of the area substantially corresponding to the heating region of the main coil MC, and is annularly provided near a position immediately below the guide mark 6LM illustrated in Figs. 1 and 3 of Embodiment 1.

Further, the individual light emitting units 276 are made to differ the color of the radiated light between when a cooperative heating operation is performed and when a cooperative heating operation is not performed. In a state in which the individual light emitting units 276 and the wide area light emitting unit 277 are lighted, as shown by the broken lines in Fig. 29, there will be a dual annular band of light on the top plate 21.

As shown in Fig. 29, in Embodiment 5, a toroidal shaped, thermally stable plastic coil support 290Y in which four sub heating coils SC1 to SC4 are placed thereon is disposed, with a predetermined gap 352, around the disk shaped, thermally stable plastic coil support 290X in which the main heating coil MC is placed thereon. These two coil supports 290X and 290Y are fixed above a flow duct 353 that includes multiple blow out holes 42C in its entire upper side that serves as a ceiling wall. This flow duct 353 corresponds to an integrally formed upper case 42A and lower case 42B of Embodiment 2. The internal space 354 of this flow duct 353 is forcefully introduced with cooling air as shown by an arrow Y4 in Fig. 29. Through holes 355 are disposed in the outer circumference of the coil support 290Y that is on the outside in four locations interspersed at 90 degrees angles along a circle with a center point CL2. As for the first and third sub heating coils SC1 and SC3, the through holes are positioned on the right side thereof, as for the fourth sub heating coil, one is provided on the left side of the fourth sub heating coil, and one for the second sub heating coil is provided at its front.

Light-guiding holes 356 are formed in the ceiling wall of the flow duct 353 so as to correspond to the through holes and each has a circular or elliptical shape. The individual light emitting units 276 each include a light-emitting element, such as a light emitting diode that emits light of a point light source or equivalent light sources that spreads its light in a predetermined circular range. STC is a center light emitting unit (main heating coil light emitting unit) mentioned above. When these center light emitting unit STC and the individual light emitting units 276 are lighted, as shown by an arrow with a dot and dash line in Fig. 29, an indication light that is a visible light that penetrates through the top plate 21 is emitted. Note that as an alternative example, if the through holes 355 are formed so as to be interspersed in certain short intervals at positions near the outer side of each sub heating coils SC1 to SC4, the indication light will be visually recognized as a dotted line from above the top plate 21.

As shown in Fig. 29, the center light emitting unit (main heating coil light emitting unit) STC is configured to use the predetermined gaps 352 that are formed between the coil supports 290X and 290Y and to radiate the indication light to the top plate 21 side through the gaps. Holder plates 357 are for fixing the light-emitting elements of the center light emitting unit STC to the inner surface of the ceiling wall of the flow duct 353. The shielding ring 291 is disposed so as to cover the peripheral line of the coil support 290Y and adheres or adjoins thereto.

Note that the gaps 352 has a size that is substantially equivalent to that of the space 271 between the outermost periphery of the main heating coil MC and the inner peripheral surface of the sub heating coils SC1 to SC4. Note that ferrite slabs 73 serves as a magnetic flux leakage prevention material and is disposed so as to cross at right angles or to intersect the flowing direction of the current of the main heating coil MC and the sub heating coils SC1 to SC4. Four to eight ferrite slabs 73 are disposed radically from the center portion of each coil.

As configured as above, similar to Embodiments 1 to 4, when cooperative heating is carried out by cooperation of the main heating coil MC and the sub heating coils SC1 to SC4, the emitting or lighting color of the individual light emitting unit 276 are changed so as to specify the sub heating coil SC (for example, SC2) that is performing the cooperative heating operation and thus it is possible to notify this sub heating coil to the user.

For example, as shown in Fig. 28, in a case in which the heating operation is started with an elliptical pan (heated object N) placed above the main heating coil MC and the sub heating coil SC4 on the left side so as to extend over the two, based on the determination result of the placement-of-heated-object determination unit 280, the energization control circuit 200 determines that an elliptical pan (heated object N) with the same material exists above the main heating coil MC and the sub heating coil SC4 on the left side and drives the inverter circuit MIV for the main heating coil and the inverter circuit SIV4 for the sub heating coil such that high-frequency power is supplied to the two coils with a predetermined heating power distribution.

In this case, only the individual light emitting unit 276 that is in the left vicinity of the inverter circuit SIV4 for the sub heating coil is emitted or lighted in a different emitting or lighting color and lighting pattern to the other individual light emitting units 276. For example, when not performing cooperative heating, the emitting or lighting color of the individual light emitting unit 276 is "yellow" when seen from above the top plate 21, but when performing cooperative heating, it is changed to "red".

Further, regardless of whether it is a cooperative heating operation with some or all of the sub heating coils SC1 to SC4 and the main heating coil MC or heating solely with the main heating coil MC, the user can always confirm the status of the set heating power from above the top plate 21 by looking at a predetermined portion (liquid crystal display screen 45L) of the display unit 100LX dedicated to the left IH heat source 6L (also the user can know the status from the voice synthesizer 315). Further, even if the number of sub heating coils SC1 to SC4 involved in the cooperative heating is changed or even if changed to other sub heating coils SC1 to SC3, the user is able to easily obtain information on the heating power after the change has took place.

Further, since performance of the cooperative heating operation can be forbidden with the switching switch when an evidently small heated object N is used, the display of the schematic graphics 311 and 312 for the main heating coil MC and the group of sub heating coils SC in the display screen of the display unit 100LX can be made unnecessary, and proportionate to this, information related to the display 337 of the independent heating power of the main heating coil, heat-cooking menu display 351, and the like can be displayed all at once. The display content during heating other than the cooperative heating operation can be enriched. Note that when cooperative heating operation is forbidden with the switching switch, processing of the placement-of-heated-object determination unit 280 can be made unnecessary.

Note that in Embodiment 5, since the center light emitting unit (main heating coil light emitting unit) STC that indicates the outer edge position of the area substantially corresponding to the heating region of the main coil MC is provided so that the preferable placing position of the heated object N such as a pan is indicated in a more clear manner when heating with the main heating coil MC alone, when using a normal-sized round pan (heated object N) that matches the outer diameter of the main heating coil MC, the center position of the main heating coil MC and its preferable placing position can be easily understood visually.

Further, in Embodiment 5, although the center light emitting unit (main heating coil light emitting unit) STC performs emitting or lighting operation before the start of the cooperative heating operation of the main heating coil MC and the sub heating coils SC1 to SC4 and continues the emitting or lighting of the main heating coil and the sub heating coils during cooperative heating operation, the center light emitting unit STC may be turned off during cooperative heating operation of the main heating coil MC and the sub heating coils SC1 to SC4. This is because the user can imagine the rough position of the center light emitting unit (main heating coil light emitting unit) STC by looking at the emitting or lighting of the individual light emitting units 276 and can understand that the positions of the individual light emitting units 276, which agrees with the position of the cooperative heating area mark EM, are the outer limit, and therefore can easily understand that the moving-away (opposite) direction with respect to the individual light emitting unit 276, that is, the main coil center point X1 direction, is the center of the preferable heating area.

Note that the switching switch 350 of Embodiment 5 may be a switch attached with a menu selection function. Menu refers to "timer cooking" that automatically induction heats for a set time set by the timer switch (described in Embodiment 1), "boiling water" that boils water, "deep fry" that cooks deep fried food by heating oil that is filled in a deep fry pan, "rice cooking" that cooks rice by induction heating a container with a lid in which a preset amount of rice and water is contained in the container, "grill cooking" that is placing a magnetic metal container such as one made of metal on the top plate 21 and heat cooking meat and other foodstuff in the container, and the like. In the above case, the menu selection switch may be one with a plurality of control keys that allows user input by press operation or touch.

Further, as shown in Fig. 29, since the center light emitting unit (main heating coil light emitting unit) STC and the individual light emitting units 276 are disposed inside the internal space 354 of the flow duct 353, the cooling air that has been supplied from the outside to cool the main heating coil MC and the sub heating coils SC1 to SC4 becomes in contact with the units at normal temperature that is a temperature before the cooling air reaches the heating coils, thus the units are cooled at all times. Accordingly, an advantageous effect of preventing thermal degradation of light-emitting elements, such as a light emitting diode, that are relatively susceptible to high temperature can be enjoyed. Further, although the coil supports that supports the main heating coil MC and the sub heating coils SC1 to SC4 becomes 300 degrees or more during induction heating, since the structure thereof is such that the inner coil support 290X and the coil support 290Y on the outside is separated with predetermined gaps 352, the structure is one that the temperature of the inner coil support 290X, which is immediately under the main heating coil MC that is most frequently used, is not easily transferred to the coil support 290Y on the outside.

Note that a portion of the cooling air that is supplied to the internal space 354 of the flow duct 353 passes through the gaps 352 and the through holes 355 and is blown out from the top plate 21. Accordingly, since this cools the light-emitting elements of the center light emitting unit STC; the light-emitting elements of the individual light emitting units 276; a light-guiding panel (not shown) that is formed of transparent materials such as acrylic resin and that annularly spreads the light; and further, the holder plates 357 as well, an advantageous effect of preventing these components from being thermally degraded can be enjoyed. When the center light emitting unit STC and the individual light emitting units 276 spreads the light from a point light source of the light-emitting element such as a light emitting diode into a band or an annular shape with a transparent resin plate and making the light to be seen as an annular line or an annular broken line from above the top plate 21, the above light-guiding panel (not shown) is required. It is preferable that this light-guiding panel is made to pass through the through holes 355 that is formed in the above coil support 290Y and extend the light-guiding panel near a position immediately below the top plate 21 as much as possible, such that more light will be radiated on the top plate 21. Furthermore, in this case, according to Embodiment 5, it will be possible to provide the light-guiding panel in a standing manner to above the coil support 290Y without the light-guiding panel becoming in contact with the hole edge of the through holes 355. Accordingly, high temperature of the coil support 290Y can be prevented from being transferred directly.

Regarding Embodiment 3 to 5, means for displaying the heating power of the main heating coil MC and the group of sub heating coils SC1 to SC4 is not limited to the display unit 100LX dedicated to the left IH heat source 6L mentioned above but may be the integrated display means 100 (see Embodiment 1) commonly used with the other heat sources. Further, the method of displaying the amount of electric power supplied to the induction heating source may be a method such as displaying with light emitted by a plurality of light-emitting elements such as light emitting diodes. The display means may be a plurality of light emitting diodes that are illustrated in Japanese Unexamined Patent Application Publication No.2008-171757, for example. Further, the display form of the heating power maybe in numbers and letters directly displaying the heating power value (watt), in graphics such as symbols and bar graphs and the like, and, further, letters such as "high heating power" and "low heating power" that indicates the level of heating power as a relative concept (see Fig. 25). Furthermore, as shown in Fig. 30, for clear identification of the input key itself that displays the heating power between the other elements, the relevant input key may be displayed brighter or in a different color by light emitting means so that the user can visually confirm the heating power displayed in the input key.

In Embodiments 3 to 5 above, the total number of sub heating coils that constitute the group of sub heating coils SC1 to SC4 and the total number of the sub inverter circuits SIV1 to SIV4 that supplies high-frequency current to the coils are both four and are the same in number; however, the invention is not limited to this. For example, as in the example in Figs. 9 and 11 illustrating Embodiment 1, relative to the center point X1, the first heating coil SC1 and the second heating coil SC2 may be disposed on the front side, and in a position symmetrical to the first heating coil SC1 and the second heating coil SC2 in the front-rear direction, the third heating coil SC3 and the fourth heating coil SC4 may be disposed. In other words, this is an alternative example in which the four sub heating coils SC1 to SC4 are each disposed on 45 degrees slants.

In this alternative example, the first sub inverter circuit SIV1 may drive the first heating coil SC1 and the fourth sub heating coil SC4, and the second sub inverter circuit SIV2 may drive the third heating coil SC3 and the second sub heating coil SC2.

In this case, the first sub inverter circuit SIV1 does not drive the first heating coil SC1 and the fourth sub heating coil SC4 at the same time but drives only either one of the two. The second sub inverter circuit SIV2 also does not drive the third heating coil SC3 and the second sub heating coil SC2 at the same time but drives only either one of the two. This is preferable since this can reduce unnecessary magnetic leakage and increase heating efficiency. With the above configuration, advantageously, it is be possible to reduce the number of expensive inverter circuits and thus reduce cost, and it is possible to reduce the installing space of the circuit board. As in the exemplary Figs. 9 and 11, in a case in which four sub heating coils SC1 to SC4 are disposed and in which the user is cooking using a non-circular pan such as an elliptical or oval pan, when the pan is placed on the front side so as to be long sideways, the first heating coil SC1 and the second heating coil SC2 that are on the front side relative to the center point X1 may be driven, and when the pan is placed on the left side relative to the center point X1 so as to be long in the front-rear direction, the second heating coil SC2 and the fourth heating coil SC4 may be driven, further, when the pan is placed on the right side relative to the center point X1 so as to be long in the front-rear direction, the first heating coil SC1 and the third heating coil SC3 may be driven. In any of the three patterns, the sub inverter circuit may be switched, and among the pairs (two heating coils) of sub heating coils, either one may be selected and used without any problem.

Note that in a case where a single common sub inverter circuit that switches two sub heating coils is used, consequently, it will be possible to drive two sub heating coils when the common sub inverter circuit switches the connection of one of the sub heating coil and the other sub heating coil alternatively under a temporal condition, such as a short time interval. For example, when each of the two sub inverter circuits drives two sub heating coils, then four sub heating coils in total can be used for heat cooking. Accordingly, in a case where more than four sub heating coils are provided, the number of sub inverter circuits can be suppressed to its minimum number with this concept.

### (Summary: Display Example of Information Indicating Cooperative Heating)

As it is understood from the above description of Embodiments 1 to 5, the following are means that display that cooperative heating with the main heating coil and the sub heating coil is performed:
(1) Individual light emitting units 276
(2) Display with letters and graphics and the like in the integrated display means 100 (corresponding to CM in Fig. 18)
(3) Display with letters and graphics and the like in the display unit 100LX dedicated to individual induction heating source (Figures 311, 312, CM in Figs. 25, 27, 29). Note that with these displays and the voice synthesizer 315, notification and the display content to the user may be further enriched and given in more detail.

### [Industrial Applicability]

The induction cooking system of the invention including the main heating coil and the plurality of sub heating coils that is heated and driven in cooperation allows the user to easily confirm the heating power visually during heating operation of the main heating coil alone or during cooperative heating operation. As such, the induction cooking system can be applied widely to table-top type and built-in type special purpose cooking systems for induction heated heat source and complex induction cooking systems with other radiant type heat sources.

### Reference Signs List

A main body; B top plate; C housing; D heating means; E operation means; F control means; G display means; W width; AM active mark; CL, CL1 left-right center line of the main body A; CL2 left-right center line of the left IH heat source; CU cooling unit; DA outer diameter of left IH heating coil; DB arrangement outer diameter of auxiliary coil; DC maximum outer diameter of wide display; KT kitchen furniture; K1 installation opening; KTK opening; N heated object (pan); SC sub heating coils (group);SC1 to SC4 sub heating coil; MC main heating coil; MIV inverter circuit for main heating coil; SIV1 to SIV4 inverter circuit for sub heating coil; SX space; STC center light emitting unit (main heating coil light emitting unit); X1 center point; X2 center point; 2 main body case; 2A body; 2B front flange plate; 2S inclined portion; 2U rear side wall of body; 3B rear flange; 3L left flange; 3R right flange; 6L left IH heat source; 6LC left IH heating coil; 6LM guide mark; 6R right IH heat source; 6RC right IH heating coil; 6RM guide mark; 7 central electric radiant heat source (heater); 7M guide mark; 8L left side cooling chamber; 8R right cooling chamber; 9 grill heating chamber; 9A front opening; 9B rear opening; 9C inner frame; 9D outer frame; 9E outlet; 10 upper portion component chamber; 12 rear exhaust hood; 13 door; 13A center opening; 13B handle; 14 exhaust duct; 14A upper end opening; 14B tubular bottom portion 14C vent hole; 20 upper frame (frame body); 20B right vent hole; 20C center vent hole; 20D left vent hole; 21 top plate; 22 electric radiant heat source (heater); 23 electric radiant heat source (heater); 24A notch; 24L left vertical partition plate; 24R right vertical partition plate; 25 horizontal partition plate; 26 space; 28 rear partition plate; 28A outlet; 30 fan; 30F blade; 31R infrared sensor; 31L, 31L1 to 31L5 infrared sensor; 32 rotation shaft; 33 motor driving circuit; 34 component case; 34A first outlet; 34B second outlet; 37 fan case; 37A suction tube; 37B suction; 37C outlet (exit); 37D case; 37E case; 39 fan chamber; 41 circuit board; 42 cooling duct; 42A upper case; 42B lower case; 42C blow out hole; 42D partition wall; 42E partition wall; 42F ventilating space; 42G ventilating space; 42H ventilating space; 42J communicating hole (aperture); 42K vent hole; 43A radiation fin; 43B radiation fin; 45R liquid crystal display screen; 45L liquid crystal display screen; 46 front component case; 46A lower duct; 46B upper duct; 46C notch; 50 vessel-shaped cover; 56 mounting substrate; 57 electrical and electronic components; 60 front side operating unit; 61 top side operating unit; 62L left front side operating frame; 62R right front side operating frame; 63 main power switch; 63A operation button; 64R right operation dial; 64L left operation dial; 66R right indicating lamp; 66L left indicating lamp; 70 right heating power setting operating unit; 71 left heating power setting operating unit; 72 center operating unit; 73 magnetic flux leakage prevention material; 90 one-touch setting key; 91 low heating power key; 92 middle heating power key; 93 high heating power key; 94 3 kW key; 95 operation button for electric radiant heat sources 22 and 23; 96 operation button for stop operation switch; 97A operation button for temperature control switch; 97B operation button for temperature control switch; 98 power on/off switching button; 99A configuration switch; 99B configuration switch; 100 integrated display means; 100L1 corresponding area of left IH heat source 6L; 100L2 corresponding area of left IH heat source 6L; 100M1 corresponding area of central electric radiant heat source 7; 100M2 corresponding area of central electric radiant heat source 7; 100R1 corresponding area of right IH heat source 6R; 100R2 corresponding area of right IH heat source 6R; 100G cooking area of grill heating chamber 9; 100GD guiding area; 100F key display area; 100N arbitrary display area; 100LX display unit; 101R right heating power indicating lamp; 101L left heating power indicating lamp; 106 fan; 106A rotor blade; 106B drive motor; 108 saucer; 109 grill; 113 gap; 114 gap; 115 gap; 116 gap; 121 deodorizing catalyst; 121H electric heater for catalyst; 130 convenient menu key; 131R right IH convenient menu button; 132 cover; 141 input key; 142 input key; 143 input key; 144 input key; 145 input key; 146 input key; 200 energization control circuit; 201 input unit; 202 output unit; 203 storage unit; 204 arithmetic control unit (CPU); 210R inverter circuit for right IH heat source; 210L inverter circuit for left IH heat source; 211 heater driving circuit of central electric radiant heat source 7; 212 heater driving circuit for driving electric radiant heat source for heating grill heating chamber 9; 213 heater drive circuit for driving radiation electric heat source 23 for in-chamber heating grill heating chamber 9; 214 heater driving circuit for driving a catalytic heater 121H; 215 driving circuit for driving liquid crystal screen of integrated display means 100; 221 rectifier bridge circuit; 222 coil; 223 smoothing capacitor; 224 resonance capacitor; 225 switching means (IGBT); 226 flywheel diode; 227 current detection sensor; 228 driving circuit; 231 driving circuit; 240 temperature detecting circuit; 241 temperature detecting element (temperature sensor); 242 temperature detecting element (in-chamber temperature sensor); 243 temperature detecting element (temperature sensor); 244 temperature detecting element (temperature sensor); 245 temperature detecting element (temperature sensor); 250 key dedicated to bread; 251 compound cooking key; 260 to 264 driving circuit; 267A current sensor; 267B current sensor; 267C current sensor; 267D current sensor; 270 to 275 space; 276 individual light emitting unit; 277 wide area light emitting unit; 278 driving circuit; 280 placement-of-heated-object determination unit; 290 coil support; 290A support protrusion; 290Y coil support; 291 shielding ring; 300 drive motor; 307 space; 310 through hole; 311 graphic of main heating coil; 312 graphic of sub heating coil; 313L left display unit; 313M center display unit; 313R right display unit; 314 display window; 315 voice synthesizer; 316 speaker; 317 to 320 input key; 330 to 336 input key for heating power; 337 heating power display; 338 high-temperature display; 339 heating power indicating mark; 340 heating power indicating mark; 350 switching switch; 351 heat-cooking menu display; 352 gap; 353 flow duct; 354 internal space of the flow duct; 355 through hole; 356 light-guiding hole; 357 holder plate.

## Claims

1. An induction cooking system, comprising:
a main heating coil (MC) heating a heated object placed on a top plate (21);
a group of sub heating coils (SC) including a plurality of sub heating coils (SC1 to SC4) disposed adjacent to an outside of the main heating coil (MC);
a main inverter circuit (MIV) supplying a high-frequency current to the main heating coil (MC);
a group of sub inverter circuits independently supplying the high-frequency current to each of the plurality of sub heating coils (SC1 to SC4) of the group of sub heating coils (SC);
a placement-of-heated-object determination unit (280) determining whether a same heated object is placed above the main heating coil (MC) and at least one of the plurality of sub heating coils (SC1 to SC4);
an input unit (201) inputting external heating power setting information during induction heating; **characterized by**
a display means displaying the setting information of the input unit (201); and
an energization control circuit controlling, on the basis of the setting information of the input unit (201), output of each of the main inverter circuit (MIV) and the group of sub inverter circuits and controlling the display means,
wherein, an outer diameter shape of the main heating coil (MC) is substantially circular, and
an outer diameter shape of each sub heating coil (SC1 to SC4) is such that a side edge adjacent to a peripheral line of the main heating coil (MC) has a bent shape extending along the peripheral line of the main heating coil (MC), and
wherein, when a predetermined heating power setting information is input by the input unit (201), on the basis of information from the placement-of-heated-object determination unit (280), the energization control circuit controls the output of the main inverter circuit (MIV) and the output of the group of sub inverter circuits to become a predetermined distribution such that a cooperative heating operation with a heating power value set by a user is performed,
when one or some of the sub heating coils (SC1 to SC4) that is performing the cooperative heating operation is increased or reduced in number, or is switched to a different one of the sub heating coils (SC1 to SC4), the energization control circuit maintains the distribution of the output before change thereof and makes the display means display the predetermined heating information regardless of the increase or reduction in the number of sub heating coils (SC1 to SC4) that is performing the cooperative heating operation or the switching to the different sub heating coil (SC1 to SC4).

2. An induction cooking system of claim 1, wherein
when the placement-of-heated-object determination unit (280) determines that the same single heated object is placed above the main heating coil (MC) and the at least one sub heating coil (SC1 to SC4), the energization control circuit makes the main heating coil (MC) and the at least one sub heating coil (SC1 to SC4) perform a cooperative heating operation with a driving current from the main inverter circuit (MIV) and sub inverter circuit related to the at least one sub heating coil (SC1 to SC4) and makes the display means display information indicating that the cooperative heating operation is being performed.

3. The induction cooking system of claim 1 or claim 2, wherein the energization control circuit makes the display unit display a predetermined value as heating power setting information and, unless the input unit (201) inputs a new piece of external heating power setting information, cooking is started with the predetermined value.

4. The induction cooking system of any one of claims 1 to 3, wherein the energization control circuit makes the display means display that an independent heating operation of the main heating coil (MC) is being performed or displays an operating condition of independent heating operation of the main heating coil (MC), or displays that the cooperative heating operation is being performed.

5. The induction cooking system of claim 4, wherein the energization control circuit makes the display means display information identifying a sub heating coil of the sub heating coils (SC1 to SC4) that is performing heating operation during cooperative heating operation.

6. The induction cooking system of claim 5, wherein the identifying information includes at least one of a letter, a symbol, and a graphic.

7. The induction cooking system of claim 6, wherein the energization control circuit makes the display means display schematic graphics of the main heating coil (311) and the sub heating coils (312) during the cooperative heating operation, display heating power information inside or near each schematic graphics of the coils by means of a letter, and display overall heating information on the display means.

8. The induction cooking system of claim 6, wherein the energization control circuit makes the display means display schematic graphics of the main heating coil (311) and the sub heating coils (312) during cooperative heating operation and display the heating power information and the overall heating information adjacent each schematic graphics of the main heating coil (311) and the sub heating coils (312) by means of the letter.

9. The induction cooking system of any one of claims 4 to 8, wherein when a set heating power is changed from a heating power that is equivalent to or higher than a predetermined value to a low heating power that is below the predetermined value by the input unit (201), the energization control circuit alters an output distribution of the main inverter circuit (MIV) and the group of sub inverter circuits from the output distribution before the change so that the low heating power is obtained.

10. The induction cooking system of any one of claims 4 to 8, wherein the energization control circuit makes a drive frequency of the main inverter circuit (MIV) and a drive frequency of each sub inverter circuit equal or makes a drive frequency difference of the two to become larger than an audio frequency or smaller than the audio frequency.

11. The induction cooking system of any one of claims 4 to 8, further comprising a voice notification means, wherein
based on information from the placement-of-heated-object determination unit (280), when a heating operation with only the main heating coil (MC) is switched to the cooperative heating operation with the main heating coil (MC) and one or some of the sub heating coils (SC1 to SC4), the energization control circuit notifies the switching by means of phonetic sound.

12. The induction cooking system of any one of claims 4 to 8, further comprising
a wide area light emitting unit that is disposed below the top plate (21), the wide area light emitting unit indicating, by means of radiation of light, a predetermined wide area heating area that covers an approximate position in which the heated object is heated by the main heating coil (MC) and the sub heating coils (SC1 to SC4), and
a light emission control unit that controls emitting of the wide area light emitting unit, wherein
the light emission control unit makes the wide area light emitting unit emit light during an induction heating operation of the main heating coil (MC) and one or some of the sub heating coils (SC1 to SC4).

13. The induction cooking system of any one of claims 4 to 8, further comprising
a wide area light emitting unit that is disposed below the top plate (21), the wide area light emitting unit indicating, by means of radiation of light, a predetermined wide area heating area that covers an occupation area of the heated object of the main heating coil (MC) and the sub heating coils (SC1 to SC4),
an individual light emitting unit performing display that identifies the one or some sub heating coils (SC1 to SC4) when the one or some sub heating coils (SC1 to SC4) and the main heating coil (MC) are made to cooperatively perform a heating operation, and
a light emission control unit that controls emitting of the individual light emitting unit and the wide area light emitting unit, wherein
the wide area light emitting unit and the individual light emitting unit are made to emit light during an induction heating operation of the main heating coil (MC) and one or some of the sub heating coils (SC1 to SC4).

14. The induction cooking system of any one of claims 4 to 8, further comprising
a wide area light emitting unit that is disposed below the top plate (21), the wide area light emitting unit indicating, by means of radiation of light, a predetermined wide area heating area that covers an approximate position in which the heated object is heated by the main heating coil (MC) and the sub heating coils (SC1 to SC4), and
an individual light emitting unit performing display that identifies the one or some sub heating coils (SC1 to SC4) when the one or some sub heating coils (SC1 to SC4) and the main heating coil (MC) are made to cooperatively perform a heating operation,
a light emission control unit that controls emitting of the individual light emitting unit and the wide area light emitting unit, and
a high-temperature notifying unit that notifies the top plate (21) is high in temperature by means of the individual light emitting units and the wide area light emitting unit, wherein
the light emission control unit makes the wide area light emitting unit and the individual light emitting unit emit light during an induction heating operation, and
after the main inverter circuit (MIV) and the sub inverter circuits have stopped outputting, the high-temperature notifying unit notifies a high-temperature state by means of the individual light emitting units and/or the wide area light emitting unit.

15. The induction cooking system of any one of claims 4 to 8, wherein an outer diameter shape of the main heating coil (MC) is substantially circular and at least four sub heating coils (SC1 to SC4) are disposed in a periphery of the main heating coil (MC) each with a predetermined insulation space with the main heating coil (MC) and with a predetermined distance between each other, and
an outer diameter shape of each sub heating coil (SC1 to SC4) is such that a side edge adjacent to a peripheral line of the main heating coil (MC) has a bent shape extending along the peripheral line of the main heating coil (MC) and the concordance rate is 60 percent or higher.

16. The induction cooking system of any one of claims 4 to 8, wherein
an outer diameter shape of the main heating coil (MC) is substantially circular, at least four sub heating coils (SC1 to SC4) each with an identical planer shape are provided, the sub heating coils (SC1 to SC4) disposed on a line of a concentric circle with the main heating coil (MC) and with a predetermined insulation space with a peripheral line of the main heating coil (MC) while keeping a predetermined distance between each other,
each sub heating coil (SC1 to SC4) is provided with an inside portion that is adjacent to the peripheral line of the main heating coil (MC) and an outside portion that is away from the main heating coil (MC), the shape of the inside portion and outside portion being a bent shape extending along the peripheral line of the main heating coil (MC), and
two sub heating coils (SC1 to SC4) facing each other with the main heating coil (MC) therebetween are paired, the paired sub heating coils being connected to a single sub inverter circuit, the inverter circuit switching, based on the energization control circuit, either one of the two heating coils to perform the cooperative heating operation.

17. The induction cooking system of any one of claims 4 to 8, wherein
an outer diameter shape of the main heating coil (MC) is substantially circular,
the sub heating coils (SC1 to SC4) are disposed in plural numbers on a line of a concentric circle with the main heating coil (MC) and with a predetermined insulation space with a peripheral line of the main heating coil (MC) while keeping a predetermined distance between each other,
each sub heating coil (SC1 to SC4) is provided with an inside portion that is adjacent to the peripheral line of the main heating coil (MC) and an outside portion that is away from the main heating coil (MC), the shape of the inside portion and outside portion being a bent shape extending along the peripheral line of the main heating coil (MC), and
flow directions of high-frequency currents in the main heating coil (MC) and each sub heating coil (SC1 to SC4) in an area adjoining each other are made to coincide with each other.

## Patentansprüche

1. Induktionskochsystem, umfassend:
eine Hauptheizspule (MC), erhitzend ein auf einer oberen Platte (21) platziertes zu erhitzendes Objekt;
eine Gruppe von Nebenheizspulen (SC), umfassend eine Vielzahl von Nebenheizspulen (SC1 bis SC4), die benachbart zu einer Außenseite der Hauptheizspule (MC) angeordnet ist;
eine Hauptinverterschaltung (MIV), zuführend einen Hochfrequenzstrom an die Hauptheizspule (MC);
eine Gruppe von Nebeninverterschaltungen, unabhängig zuführend den Hochfrequenzstrom an jede der Vielzahl von Nebenheizspulen (SC1 bis SC4) der Gruppe von Nebenheizspulen (SC);
eine Platzierung-von-erhitztem-Objekt-Bestimmungseinheit (280), bestimmend, ob ein gleiches zu erhitzendes Objekt oberhalb der Hauptheizspule (MC) und zumindest einer der Vielzahl von Nebenheizspulen (SC1 bis SC4) platziert ist;
eine Eingabeeinheit (201), eingebend externe Heizleistungseinstellungsinformationen während des Induktionsheizens; **gekennzeichnet durch**
ein Anzeigemittel, anzeigend die Einstellungsinformationen der Eingabeeinheit (202); und
eine Energieversorgungssteuerschaltung, steuernd, auf der Grundlage der Einstellungsinformationen der Eingabeeinheit (20), Ausgabe sowohl der Hauptinverterschaltung (MIV) als auch der Gruppe von Nebeninverterschaltungen, und steuernd das Anzeigemittel,
wobei eine Außendurchmesserform der Hauptheizspule (MC) im Wesentlichen kreisförmig ist, und
eine Außendurchmesserform jeder Nebenheizspule (SC1 bis SC4) derart ist, dass eine Seitenkante benachbart zu einer Umfangslinie der Hauptheizspule (MC) eine gebogene Form, sich erstreckend entlang der Umfangslinie der Hauptheizspule (MC), aufweist, und
wobei, wenn eine vorherbestimmte Heizleistungseinstellungsinformation durch die Eingabeeinheit (201) eingegeben wird, auf der Grundlage von Informationen von der Platzierung-von-erhitztem-Objekt-Bestimmungseinheit (280) die Energieversorgungssteuerschaltung die Ausgabe der Hauptinverterschaltung (MIV) und die Ausgabe der Gruppe von Nebeninverterschaltungen steuert, um eine vorherbestimmte Verteilung zu werden, sodass ein zusammenwirkender Heizbetrieb mit einem durch einen Nutzer eingestellten Heizleistungswert durchgeführt wird,
wenn eine oder mehrere der Nebenheizspulen (SC1 bis SC4), die den zusammenwirkenden Heizbetrieb durchführen, zahlenmäßig reduziert oder erhöht werden, oder auf eine andere der Nebenheizspulen (SC1 bis SC4) geschaltet werden, die Energieversorgungssteuerschaltung die Verteilung der Ausgabe vor deren Änderung aufrechterhält und das Anzeigemittel veranlasst, die vorherbestimmten Heizinformationen anzuzeigen, unabhängig von der zahlenmäßigen Erhöhung oder Reduzierung der Nebenheizspulen (SC1 bis SC4), die den zusammenwirkenden Heizbetrieb durchführen, oder vom Schalten auf die verschiedenen Nebenheizspulen (SC1 bis SC4).

2. Induktionskochsystem nach Anspruch 1, wobei
wenn die Platzierung-von-erhitztem-Objekt-Bestimmungseinheit (280) bestimmt, dass das gleiche einzige zu erhitzende Objekt oberhalb der Hauptheizspule (MC) und der zumindest einen Nebenheizspule (SC1 bis SC4) platziert ist, die Energieversorgungssteuerschaltung die Hauptheizspule (MC) und die zumindest eine Nebenheizspule (SC1 bis SC4) veranlasst, einen zusammenwirkenden Heizbetrieb mit einem Antriebsstrom von der Hauptinverterschaltung (MIV) und der Nebeninverterschaltung bezüglich der zumindest einen Nebenheizspule (SC1 bis SC4) durchzuführen, und das Anzeigemittel veranlasst, Informationen anzeigend, dass der zusammenwirkende Heizbetrieb durchgeführt wird, anzuzeigen.

3. Induktionskochsystem nach Anspruch 1 oder Anspruch 2, wobei die Energieversorgungssteuerschaltung die Anzeigeeinheit veranlasst, einen vorherbestimmten Wert als eine Heizleistungseinstellungsinformation anzuzeigen, und, sofern nicht die Eingabeeinheit (201) eine neue externe Heizleistungseinstellungsinformation eingibt, Kochen mit dem vorherbestimmten Wert gestartet wird.

4. Induktionskochsystem nach einem der Ansprüche 1 bis 3, wobei die Energieversorgungssteuerschaltung das Anzeigemittel veranlasst, anzuzeigen, dass ein unabhängiger Heizbetrieb der Hauptheizspule (MC) durchgeführt wird, oder einen Betriebszustand des unabhängigen Heizbetriebs der Hauptheizspule (MC) anzeigt, oder anzeigt, dass der zusammenwirkende Heizbetrieb durchgeführt wird.

5. Induktionskochsystem nach Anspruch 4, wobei die Energieversorgungssteuerschaltung das Anzeigemittel veranlasst, Informationen, identifizierend eine Nebenheizspule der Nebenheizspulen (SC1 bis SC4), die einen Heizbetrieb während des zusammenwirkenden Heizbetriebs durchführt, anzuzeigen.

6. Induktionskochsystem nach Anspruch 5, wobei die Identifizierungsinformationen zumindest eines von einem Buchstaben, einem Symbol und einer Grafik enthalten.

7. Induktionskochsystem nach Anspruch 6, wobei die Energieversorgungssteuerschaltung das Anzeigemittel veranlasst, schematische Grafiken der Hauptheizspule (311) und der Nebenheizspulen (312) während des zusammenwirkenden Heizbetriebs anzuzeigen, Heizleistungsinformationen innerhalb oder nahe jeder schematischen Grafik der Spulen mittels eines Buchstabens anzuzeigen, und Gesamtheizinformationen auf dem Anzeigemittel anzuzeigen.

8. Induktionskochsystem nach Anspruch 6, wobei die Energieversorgungssteuerschaltung das Anzeigemittel veranlasst, schematische Grafiken der Hauptheizspule (311) und der Nebenheizspulen (312) während des zusammenwirkendem Heizbetriebs anzuzeigen, und die Heizleistungsinformationen und die Gesamtheizinformationen neben jeder schematischen Grafik der Hauptheizspule (311) und der Nebenheizspulen (312) mittels des Buchstabens anzuzeigen.

9. Induktionskochsystem nach einem der Ansprüche 4 bis 8, wobei, wenn eine eingestellte Heizleistung von einer Heizleistung, die äquivalent ist zu oder höher ist als ein vorherbestimmter Wert, auf eine geringere Heizleistung, die unterhalb des vorherbestimmter Werts ist, durch die Eingabeeinheit (201) geändert wird, die Energieversorgungssteuerschaltung eine Ausgabeverteilung der Hauptinverterschaltung (MIV) und der Gruppe von Nebeninverterschaltungen von der Ausgabeverteilung vor der Änderung ändert, so dass die geringe Heizleistung erhalten wird.

10. Induktionskochsystem nach einem der Ansprüche 4 bis 8, wobei die Energieversorgungssteuerschaltung eine Antriebsfrequenz der Hauptinverterschaltung (MIV) und eine Antriebsfrequenz von jeder Nebeninverterschaltung gleich macht oder eine Antriebsfrequenzdifferenz aus beidem veranlasst, größer zu werden als eine Audiofrequenz oder kleiner zu werden als die Audiofrequenz.

11. Induktionskochsystem nach einem der Ansprüche 4 bis 8, ferner umfassend ein Sprachmeldemittel, wobei
auf Grundlage von Informationen von der Platzierung-von-erhitztem-Objekt-Bestimmungseinheit (280), wenn ein Heizbetrieb nur mit der Hauptheizspule (MC) auf den zusammenwirkenden Heizbetrieb mit der Hauptheizspule (MC) und einer oder mehreren der Nebenheizspulen (SC1 bis SC4) geschaltet wird, die Energieversorgungssteuerschaltung das Schalten mittels eines phonetischen Tons meldet.

12. Induktionskochsystem nach einem der Ansprüche 4 bis 8, ferner umfassend:
eine großflächig lichtemittierende Einheit, die unterhalb der oberen Platte (21) angeordnet ist, die großflächig lichtemittierende Einheit mittels Lichtstrahlung eine vorherbestimmte großflächige Erhitzungsfläche anzeigend, die eine ungefähre Position abdeckt, in welcher das zu erhitzende Objekt durch die Hauptheizspule (MC) und die Nebenheizspulen (SC1 bis SC4) erhitzt wird, und
eine Lichtemissionssteuereinheit, die Emission der großflächig lichtemittierenden Einheit steuert, wobei
die Lichtemissionssteuereinheit die großflächig lichtemittierende Einheit veranlasst, Licht während eines Induktionsheizbetriebs der Hauptheizspule (MC) und der einen oder mehreren Nebenheizspulen (SC1 bis SC4) zu emittieren.

13. Induktionskochsystem nach einem der Ansprüche 4 bis 8, ferner umfassend:
eine großflächig lichtemittierende Einheit, die unterhalb der oberen Platte (21) angeordnet ist, die großflächig lichtemittierende Einheit mittels Lichtstrahlung eine vorherbestimmte großflächige Erhitzungsfläche anzeigend, die eine Belegungsfläche des zu erhitzenden Objekts der Hauptheizspule (MC) und der Nebenheizspulen (SC1 bis SC4) abdeckt,
eine einzelne lichtemittierende Einheit, durchführend eine Anzeige, die die eine oder mehreren Nebenheizspulen (SC1 bis SC4) identifiziert, wenn die eine oder die mehreren Nebenheizspulen (SC1 bis SC4) und die Hauptheizspule (MC) veranlasst werden, einen Heizbetrieb zusammenwirkend durchzuführen, und
eine Lichtemissionssteuereinheit, die Emission der einzelnen lichtemittierenden Einheit und der großflächig lichtemittierenden Einheit steuert, wobei
die großflächig lichtemittierende Einheit und die einzelne lichtemittierende Einheit veranlasst werden, Licht während eines Induktionsheizbetriebs der Hauptheizspule (MC) und einer oder mehrerer der Nebenheizspulen (SC1 bis SC4) zu emittieren.

14. Induktionskochsystem nach einem der Ansprüche 4 bis 8, ferner umfassend:
eine großflächig lichtemittierende Einheit, die unterhalb der oberen Platte (21) angeordnet ist, die großflächig lichtemittierende Einheit mittels Lichtstrahlung, eine vorherbestimmte großflächige Erhitzungsfläche anzeigend, die eine ungefähre Position abdeckt, in welcher das zu erhitzende Objekt durch die Hauptheizspule (MC) und die Nebenheizspulen (SC1 bis SC4) erhitzt wird, und
eine einzelne lichtemittierende Einheit, durchführend eine Anzeige, die die eine oder mehreren Nebenheizspulen (SC1 bis SC4) identifiziert, wenn die eine oder mehreren Nebenheizspulen (SC1 bis SC4) und die Hauptheizspule (MC) veranlasst werden, einen Heizbetreib zusammenwirkend durchzuführen,
eine Lichtemissionssteuereinheit, die Emission der einzelnen lichtemittierenden Einheit und der großflächig lichtemittierenden Einheit steuert, und
eine hohe-Temperatur-Meldeeinheit, die meldet, dass die Temperatur der oberen Platte (21) hoch ist, mittels der einzelnen lichtemittierenden Einheiten und der großflächig lichtemittierenden Einheit, wobei
die Lichtemissionssteuereinheit die großflächig lichtemittierende Einheit und die einzelne lichtemittierende Einheit veranlasst, Licht während eines Induktionsheizbetriebs zu emittieren, und
nachdem die Hauptinverterschaltung (MIV) und die Nebeninverterschaltungen Ausgeben gestoppt haben, die hohe-Temperatur-Meldeeinheit einen Hochtemperaturzustand mittels der einzelnen lichtemittierenden Einheit und/oder der großflächig lichtemittierenden Einheit meldet.

15. Induktionskochsystem nach einem der Ansprüche 4 bis 8, wobei eine Außendurchmesserform der Hauptheizspule (MC) im Wesentlichen kreisförmig ist und zumindest vier Nebenheizspulen (SC1 bis SC4) in einem Umfang der Hauptheizspule (MC) jeweils mit einem vorherbestimmten Isolierraum mit der Hauptheizspule (MC) und mit einem vorherbestimmten Abstand zwischeneinander angeordnet sind, und
eine Außendurchmesserform jeder Nebenheizspule (SC1 bis SC4) derart ist, dass eine Seitenkante benachbart zu einer Umfangslinie der Hauptheizspule (MC) eine gebogene Form, sich erstreckend entlang der Umfangslinie der Hauptheizspule (MC), aufweist und die Konkordanzrate 60 Prozent oder höher ist.

16. Induktionskochsystem nach einem der Ansprüche 4 bis 8, wobei
eine Außendurchmesserform der Hauptheizspule (MC) im Wesentlichen kreisförmig ist, zumindest vier Nebenheizspulen (SC1 bis SC4) jeweils mit einer identischen planaren Form bereitgestellt sind, die Nebenheizspulen (SC1 bis SC4) auf einer Linie eines konzentrischen Kreises mit der Hauptheizspule (MC) und mit einem vorherbestimmten Isolierraum mit einer Umfangslinie der Hauptheizspule (MC) angeordnet sind, während ein vorherbestimmter Abstand zwischeneinander eingehalten wird,
jede Nebenheizspule (SC1 bis SC4) mit einem Innenseitenabschnitt, der benachbart zur Umfangslinie der Hauptheizspule (MC) ist, und einem Außenseitenabschnitt, der von der Hauptheizspule (MC) entfernt ist, bereitgestellt ist, wobei die Form des Innenseitenabschnitts und Au-ßenseitenabschnitts eine gebogene Form, sich erstreckend entlang der Umfangslinie der Hauptheizspule (MC), ist und
zwei Nebenheizspulen (SC1 bis SC4), die einander zugewandt sind, mit der dazwischenliegenden Hauptheizspule (MC) gepaart sind, die gepaarten Nebenheizspulen mit einer einzigen Nebeninverterschaltung verbunden sind, die Inverterschaltung schaltend, auf Grundlage der Energieversorgungssteuerschaltung, eine von beiden der zwei Heizspulen, um den zusammenwirkenden Heizbetrieb durchzuführen.

17. Induktionskochsystem nach einem der Ansprüche 4 bis 8, wobei
eine Außendurchmesserform der Hauptheizspule (MC) im Wesentlichen kreisförmig ist, die Nebenheizspulen (SC1 bis SC4) in mehrfacher Anzahl auf einer Linie eines konzentrischen Kreises mit der Hauptheizspule (MC) und mit einem vorherbestimmten Isolierraum mit einer Umfangslinie der Hauptheizspule (MC) angeordnet sind, während ein vorherbestimmter Abstand zwischeneinander eingehalten wird,
jede Nebenheizspule (SC1 bis SC4) mit einem Innenseitenabschnitt, der benachbart zur Umfangslinie der Hauptheizspule (MC) ist, und einem Außenseitenabschnitt, der von der Hauptheizspule (MC) entfernt ist, bereitgestellt ist, die Form des Innenseitenabschnitts und Außenseitenabschnitts eine gebogene Form, sich erstreckend entlang der Umfangslinie der Hauptheizspule (MC), ist und
Strömungsrichtungen von hochfrequenten Strömen in der Hauptheizspule (MC) und jeder Nebenheizspule (SC1 bis SC4) in einem zueinander angrenzenden Bereich veranlasst werden, miteinander zusammenzufallen.

## Revendications

1. Système de cuisson par induction, comprenant :
une bobine de chauffage principale (MC) chauffant un objet chauffé placé sur une plaque supérieure (21) ;
un groupe de bobines de chauffage secondaires (SC) comprenant une pluralité de bobines de chauffage secondaires (SC1 à SC4) disposées adjacentes à une partie extérieure de la bobine de chauffage principale (MC) ;
un circuit onduleur principal (MIV) fournissant un courant haute fréquence à la bobine de chauffage principale (MC) ;
un groupe de circuits onduleurs secondaires fournissant de manière indépendante le courant haute fréquence à chacune de la pluralité de bobines de chauffage secondaires (SC1 à SC4) du groupe de bobines de chauffage secondaires (SC) ;
une unité de détermination de placement d'objet chauffé (280) déterminant si un même objet chauffé est placé au-dessus de la bobine de chauffage principale (MC) et d'au moins l'une de la pluralité de bobines de chauffage secondaires (SC1 à SC4) ;
une unité d'entrée (201) entrant des informations de réglage de puissance de chauffage externes pendant le chauffage par induction ; **caractérisé par**
des moyens d'affichage affichant les informations de réglage de l'unité d'entrée (201) ; et
un circuit de commande d'alimentation commandant, sur la base des informations de réglage de l'unité d'entrée (201), la sortie de chacun du circuit onduleur principal (MIV) et du groupe de circuits onduleurs secondaires et commandant les moyens d'affichage,
dans lequel, une forme de diamètre extérieur de la bobine de chauffage principale (MC) est sensiblement circulaire, et
une forme de diamètre extérieur de chaque bobine de chauffage secondaire (SC1 à SC4) est telle qu'un bord latéral adjacent à une ligne périphérique de la bobine de chauffage principale (MC) a une forme cintrée s'étendant le long de la ligne périphérique de la bobine de chauffage principale (MC), et
dans lequel, lorsque des informations de réglage de puissance de chauffage prédéterminées sont entrées par l'unité d'entrée (201), sur la base d'informations provenant de l'unité de détermination de placement d'objet chauffé (280), le circuit de commande d'alimentation commande la sortie du circuit onduleur principal (MIV) et la sortie du groupe de circuits onduleurs secondaires pour obtenir une distribution prédéterminée de sorte qu'une opération de chauffage coopérative avec une valeur de puissance de chauffage fixée par un utilisateur soit effectuée,
lorsque le nombre des bobines de chauffage secondaires (SC1 à SC4) qui effectuent l'opération de chauffage coopérative est augmenté ou réduit, ou lorsque l'une ou certaines de celles-ci sont commutées vers une bobine différente parmi les bobines de chauffage secondaires (SC1 à SC4), le circuit de commande d'alimentation maintient la distribution de la sortie avant le changement de celle-ci et amène les moyens d'affichage à afficher les informations de chauffage prédéterminées indépendamment de l'augmentation ou de la réduction du nombre de bobines de chauffage secondaires (SC1 à SC4) qui effectuent l'opération de chauffage coopérative ou la commutation vers la bobine de chauffage secondaire (SC1 à SC4) différente.

2. Système de cuisson par induction selon la revendication 1, dans lequel
lorsque l'unité de détermination de placement d'objet chauffé (280) détermine que le même objet chauffé unique est placé au-dessus de la bobine de chauffage principale (MC) et de ladite au moins une bobine de chauffage secondaire (SC1 à SC4), le circuit de commande d'alimentation amène la bobine de chauffage principale (MC) et ladite au moins une bobine de chauffage secondaire (SC1 à SC4) à effectuer une opération de chauffage coopérative avec un courant de commande provenant du circuit onduleur principal (MIV) et du circuit onduleur secondaire associé à ladite au moins une bobine de chauffage secondaire (SC1 à SC4) et amène les moyens d'affichage à afficher des informations indiquant que l'opération de chauffage coopérative est en cours d'exécution.

3. Système de cuisson par induction selon la revendication 1 ou la revendication 2, dans lequel le circuit de commande d'alimentation amène l'unité d'affichage à afficher une valeur prédéterminée en tant qu'informations de réglage de puissance de chauffage et, à moins que l'unité d'entrée (201) n'entre un nouvel élément d'informations de réglage de puissance de chauffage externes, la cuisson est débutée avec la valeur prédéterminée.

4. Système de cuisson par induction selon l'une quelconque des revendications 1 à 3, dans lequel le circuit de commande d'alimentation amène les moyens d'affichage à afficher l'indication qu'une opération de chauffage indépendante de la bobine de chauffage principale (MC) est en cours d'exécution ou à afficher une condition de fonctionnement d'opération de chauffage indépendante de la bobine de chauffage principale (MC), ou à afficher l'indication que l'opération de chauffage coopérative est en cours d'exécution.

5. Système de cuisson par induction selon la revendication 4, dans lequel le circuit de commande d'alimentation amène les moyens d'affichage à afficher des informations identifiant une bobine de chauffage secondaire parmi les bobines de chauffage secondaires (SC1 à SC4) qui effectue une opération de chauffage pendant une opération de chauffage coopérative.

6. Système de cuisson par induction selon la revendication 5, dans lequel les informations d'identification comprennent au moins l'un d'une lettre, d'un symbole et d'un graphique.

7. Système de cuisson par induction selon la revendication 6, dans lequel le circuit de commande d'alimentation amène les moyens d'affichage à afficher des graphiques schématiques de la bobine de chauffage principale (311) et des bobines de chauffage secondaires (312) pendant l'opération de chauffage coopérative, à afficher des informations de puissance de chauffage à l'intérieur ou à proximité de chacun des graphiques schématiques des bobines au moyen d'une lettre, et à afficher des informations de chauffage globales sur les moyens d'affichage.

8. Système de cuisson par induction selon la revendication 6, dans lequel le circuit de commande d'alimentation amène les moyens d'affichage à afficher des graphiques schématiques de la bobine de chauffage principale (311) et des bobines de chauffage secondaires (312) pendant une opération de chauffage coopérative et à afficher les informations de puissance de chauffage et les informations de chauffage globales à proximité de chacun des graphiques schématiques de la bobine de chauffage principale (311) et des bobines de chauffage secondaires (312) au moyen de la lettre.

9. Système de cuisson par induction selon l'une quelconque des revendications 4 à 8, dans lequel, lorsqu'une puissance de chauffage réglée est changée d'une puissance de chauffage qui est équivalente ou supérieure à une valeur prédéterminée à une faible puissance de chauffage qui est au-dessous de la valeur prédéterminée par l'unité d'entrée (201), le circuit de commande d'alimentation modifie une distribution de sortie du circuit onduleur principal (MIV) et du groupe de circuits onduleurs secondaires par rapport à la distribution de sortie avant le changement de sorte que la faible puissance de chauffage soit obtenue.

10. Système de cuisson par induction selon l'une quelconque des revendications 4 à 8, dans lequel le circuit de commande d'alimentation fait en sorte qu'une fréquence de commande du circuit onduleur principal (MIV) et qu'une fréquence de commande de chaque circuit onduleur secondaire soient identiques ou fait en sorte qu'une différence de fréquence de commande des deux devienne supérieure à une fréquence audio ou inférieure à la fréquence audio.

11. Système de cuisson par induction selon l'une quelconque des revendications 4 à 8, comprenant en outre des moyens de notification vocaux, dans lequel
sur la base d'informations provenant de l'unité de détermination de placement d'objet chauffé (280), lorsqu'une opération de chauffage uniquement avec la bobine de chauffage principale (MC) est commutée vers l'opération de chauffage coopérative avec la bobine de chauffage principale (MC) et une ou certaines des bobines de chauffage secondaires (SC1 à SC4), le circuit de commande d'alimentation notifie la commutation au moyen d'un son phonétique.

12. Système de cuisson par induction selon l'une quelconque des revendications 4 à 8, comprenant en outre :
une unité d'émission de lumière à zone étendue qui est disposée au-dessous de la plaque supérieure (21), l'unité d'émission de lumière à zone étendue indiquant, au moyen d'un rayonnement de lumière, une zone de chauffage à zone étendue prédéterminée qui recouvre une position approximative à laquelle l'objet chauffé est chauffé par la bobine de chauffage principale (MC) et les bobines de chauffage secondaires (SC1 à SC4), et
une unité de commande d'émission de lumière qui commande l'émission de l'unité d'émission de lumière à zone étendue, dans lequel
l'unité de commande d'émission de lumière amène l'unité d'émission de lumière à zone étendue à émettre de la lumière pendant une opération de chauffage par induction de la bobine de chauffage principale (MC) et d'une ou de certaines des bobines de chauffage secondaires (SC1 à SC4).

13. Système de cuisson par induction selon l'une quelconque des revendications 4 à 8, comprenant en outre :
une unité d'émission de lumière à zone étendue qui est disposée au-dessous de la plaque supérieure (21), l'unité d'émission de lumière à zone étendue indiquant, au moyen d'un rayonnement de lumière, une zone de chauffage à zone étendue prédéterminée qui recouvre une zone d'occupation de l'objet chauffé de la bobine de chauffage principale (MC) et des bobines de chauffage secondaires (SC1 à SC4),
une unité d'émission de lumière individuelle effectuant un affichage qui identifie lesdites une ou certaines des bobines de chauffage secondaires (SC1 à SC4) lorsque lesdites une ou certaines des bobines de chauffage secondaires (SC1 à SC4) et la bobine de chauffage principale (MC) sont amenées à effectuer en coopération une opération de chauffage, et
une unité de commande d'émission de lumière qui commande l'émission de l'unité d'émission de lumière individuelle et de l'unité d'émission de lumière à zone étendue, dans lequel
l'unité d'émission de lumière à zone étendue et l'unité d'émission de lumière individuelle sont amenées à émettre de la lumière pendant une opération de chauffage par induction de la bobine de chauffage principale (MC) et d'une ou de certaines des bobines de chauffage secondaires (SC1 à SC4).

14. Système de cuisson par induction selon l'une quelconque des revendications 4 à 8, comprenant en outre :
une unité d'émission de lumière à zone étendue qui est disposée au-dessous de la plaque supérieure (21), l'unité d'émission de lumière à zone étendue indiquant, au moyen d'un rayonnement de lumière, une zone de chauffage à zone étendue prédéterminée qui recouvre une position approximative à laquelle l'objet chauffé est chauffé par la bobine de chauffage principale (MC) et les bobines de chauffage secondaires (SC1 à SC4), et
une unité d'émission de lumière individuelle effectuant un affichage qui identifie lesdites une ou certaines des bobines de chauffage secondaires (SC1 à SC4) lorsque lesdites une ou certaines des bobines de chauffage secondaires (SC1 à SC4) et la bobine de chauffage principale (MC) sont amenées à effectuer en coopération une opération de chauffage,
une unité de commande d'émission de lumière qui commande l'émission de l'unité d'émission de lumière individuelle et de l'unité d'émission de lumière à zone étendue, et
une unité de notification de température élevée qui indique que la plaque supérieure (21) a une température élevée au moyen des unités d'émission de lumière individuelles et de l'unité d'émission de lumière à zone étendue, dans lequel
l'unité de commande d'émission de lumière amène l'unité d'émission de lumière à zone étendue et l'unité d'émission de lumière individuelle à émettre de la lumière pendant une opération de chauffage par induction, et
après que le circuit onduleur principal (MIV) et les circuits onduleurs secondaires ont arrêté une sortie, l'unité de notification de température élevée indique un état de température élevée au moyen des unités d'émission de lumière individuelles et/ou de l'unité d'émission de lumière à zone étendue.

15. Système de cuisson par induction selon l'une quelconque des revendications 4 à 8, dans lequel une forme de diamètre extérieur de la bobine de chauffage principale (MC) est sensiblement circulaire et au moins quatre bobines de chauffage secondaires (SC1 à SC4) sont disposées dans une périphérie de la bobine de chauffage principale (MC), chacune avec un espace d'isolement prédéterminé avec la bobine de chauffage principale (MC) et avec une distance prédéterminée les unes par rapport aux autres, et
une forme de diamètre extérieur de chaque bobine de chauffage secondaire (SC1 à SC4) est telle qu'un bord latéral adjacent à une ligne périphérique de la bobine de chauffage principale (MC) a une forme cintrée s'étendant le long de la ligne périphérique de la bobine de chauffage principale (MC) et que le taux de concordance est de 60 % ou plus.

16. Système de cuisson par induction selon l'une quelconque des revendications 4 à 8, dans lequel
une forme de diamètre extérieur de la bobine de chauffage principale (MC) est sensiblement circulaire,
au moins quatre bobines de chauffage secondaires (SC1 à SC4), chacune avec une forme plane identique, sont prévues, les bobines de chauffage secondaires (SC1 à SC4) étant disposées sur une ligne d'un cercle concentrique avec la bobine de chauffage principale (MC) et avec un espace d'isolement prédéterminé avec une ligne périphérique de la bobine de chauffage principale (MC) tout en maintenant une distance prédéterminée les unes par rapport aux autres,
chaque bobine de chauffage secondaire (SC1 à SC4) est pourvue d'une partie intérieure qui est adjacente à la ligne périphérique de la bobine de chauffage principale (MC) et d'une partie extérieure qui est éloignée de la bobine de chauffage principale (MC), la forme de la partie intérieure et de la partie extérieure étant une forme cintrée s'étendant le long de la ligne périphérique de la bobine de chauffage principale (MC), et
deux bobines de chauffage secondaires (SC1 à SC4) se faisant mutuellement face avec la bobine de chauffage principale (MC) entre elles sont appariées, les bobines de chauffage secondaires appariées étant connectées à un circuit onduleur secondaire unique, le circuit onduleur commutant, sur la base du circuit de commande d'alimentation, l'une ou l'autre des deux bobines de chauffage pour effectuer l'opération de chauffage coopérative.

17. Système de cuisson par induction selon l'une quelconque des revendications 4 à 8, dans lequel
une forme de diamètre extérieur de la bobine de chauffage principale (MC) est sensiblement circulaire,
les bobines de chauffage secondaires (SC1 à SC4) sont disposées en plusieurs nombres sur une ligne d'un cercle concentrique avec la bobine de chauffage principale (MC) et avec un espace d'isolement prédéterminé avec une ligne périphérique de la bobine de chauffage principale (MC) tout en maintenant une distance prédéterminée les unes par rapport aux autres,
chaque bobine de chauffage secondaire (SC1 à SC4) est pourvue d'une partie intérieure qui est adjacente à la ligne périphérique de la bobine de chauffage principale (MC) et d'une partie extérieure qui est éloignée de la bobine de chauffage principale (MC), la forme de la partie intérieure et de la partie extérieure étant une forme cintrée s'étendant le long de la ligne périphérique de la bobine de chauffage principale (MC), et
les directions de circulation des courants haute fréquence dans la bobine de chauffage principale (MC) et dans chaque bobine de chauffage secondaire (SC1 à SC4) dans les zones contiguës les unes aux autres sont amenées à coïncider les unes avec les autres.
